(19) Europäisches Patentamt European Patent Office Office européen des brevets

(11) **EP 3 780 744 A1**

(12) **EUROPEAN PATENT APPLICATION**

(43) Date of publication:
**17.02.2021 Bulletin 2021/07**

(51) Int Cl.:
**H04W 48/02** *(2009.01)*     *H04W 48/08* *(2009.01)*
**H04W 84/04** *(2009.01)*

(21) Application number: **20189613.1**

(22) Date of filing: **20.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.01.2011 JP 2011001688**

(62) Document number(s) of the earlier application(s) in accordance with Art. 76 EPC:
**11854936.9 / 2 663 126**

(71) Applicant: **Mitsubishi Electric Corporation Tokyo 100-8310 (JP)**

(72) Inventors:
• **MAEDA, Miho Tokyo, 100-8310 (JP)**

• **MOCHIZUKI, Mitsuru Tokyo, 100-8310 (JP)**
• **NONAMI, Takayuki Tokyo, 100-8310 (JP)**

(74) Representative: **Sajda, Wolf E.
Meissner Bolte Patentanwälte
Rechtsanwälte Partnerschaft mbB
Postfach 86 06 24
81633 München (DE)**

Remarks:
This application was filed on 05.08.2020 as a divisional application to the application mentioned under INID code 62.

(54) **COMMUNICATION SYSTEM, BASE STATION DEVICE AND COMMUNICATION TERMINAL DEVICE FOR RESTRICTED OPERATION**

(57)     An object of the present invention is to provide a communication system capable of preventing a base station device from being occupied by specific communication terminal devices and preventing a situation in which the base station device cannot accommodate other communication terminal devices. In the present invention, in Step ST1403, a HeNB_A notifies UEs being served thereby of the MTCD restriction information indicating the operation of restricting MTCDs. Among the UEs that have received the MTCD restriction information in Step ST1404, an MTCD operates in accordance with the MTCD restriction information. Specifically, in Step ST1406, the MTCD judges whether or not the MTCD can select, as a suitable cell, a cell judged to satisfy cell selection criteria in Step ST1402. In a case of judging that the cell can be selected, the MTCD selects the cell as a suitable cell in Step ST1407.

F I G . 1 4

**Description**

Technical Field

The present invention relates to a communication system in which a base station device performs radio communication with a plurality of communication terminal devices, and to a corresponding base station device and communication terminal device.

Background Art

Commercial service of a wideband code division multiple access (W-CDMA) system among so-called third-generation communication systems has been offered in Japan since 2001. In addition, high speed downlink packet access (HSDPA) service for achieving higher-speed data transmission using a downlink has been offered by adding a channel for packet transmission (high speed-downlink shared channel (HS-DSCH)) to the downlink (dedicated data channel, dedicated control channel).

Further, in order to increase the speed of data transmission in an uplink direction, service of a high speed uplink packet access (HSUPA) system has been offered. W-CDMA is a communication system defined by the 3rd generation partnership project (3GPP) that is the standard organization regarding the mobile communication system, where the specifications of Release 8 version are produced.

Further, new communication systems referred to as long term evolution (LTE) regarding radio areas and system architecture evolution (SAE) regarding the overall system configuration including a core network (merely referred to as network as well) as communication systems independent of W-CDMA is studied in 3GPP. This communication system is also referred to as 3.9 generation (3.9 G) system.

In the LTE, an access scheme, a radio channel configuration and a protocol are totally different from those of the current W-CDMA (HSDPA/HSUPA). For example, as to the access scheme, code division multiple access is used in the W-CDMA, whereas in the LTE, orthogonal frequency division multiplexing (OFDM) is used in a downlink direction and single career frequency division multiple access (SC-FDMA) is used in an uplink direction. In addition, the bandwidth is 5 MHz in the W-CDMA, while in the LTE, the bandwidth can be selected from 1.4 MHz, 3 MHz, 5 MHz, 10 MHz, 15 MHz and 20 MHz per base station. Further, differently from the W-CDMA, circuit switching is not provided but a packet communication system is only provided in the LTE.

The LTE is defined as a radio access network independent of the W-CDMA network because its communication system is configured by a new core network different from a core network (general packet radio service: GPRS) of the W-CDMA. Therefore, for differentiation from the W-CDMA communication system, a base station that communicates with a user equipment (UE) and a radio network controller that transmits/receives control data and user data to/from a plurality of base stations are referred to as an E-UTRAN NodeB (eNB) and an evolved packet core (EPC) or access gateway (aGW), respectively, in the LTE communication system.

Unicast service and evolved multimedia broadcast multicast service (E-MBMS service) are provided in this LTE communication system. The E-MBMS service is broadcast multimedia service, which is merely referred to as MBMS in some cases. Bulk broadcast contents such as news, weather forecast and mobile broadcast are transmitted to a plurality of user equipments. This is also referred to as point to multipoint service.

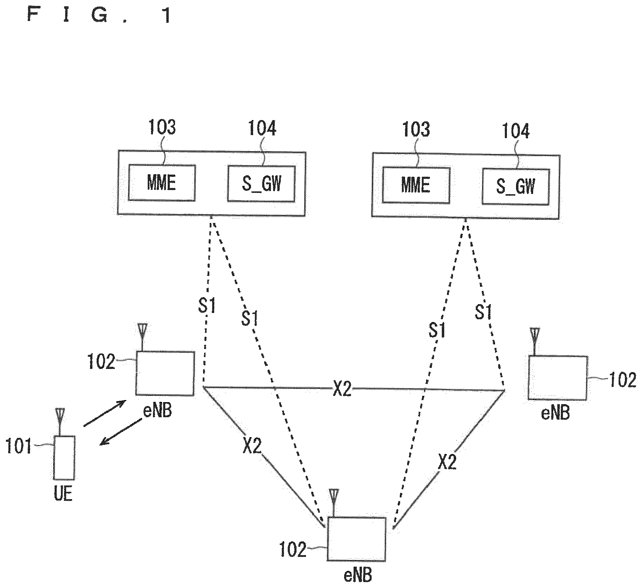

Non-Patent Document 1 (Chapter 4) describes the current decisions by 3GPP regarding an overall architecture in the LTE system. The overall architecture is described with reference to FIG. 1. FIG. 1 is a diagram illustrating the configuration of the LTE communication system. With reference to FIG. 1, the evolved universal terrestrial radio access (E-UTRAN) is composed of one or a plurality of base stations 102, provided that a control protocol for a user equipment 101 such as a radio resource control (RRC) and user planes such as a packet data convergence protocol (PDCP), radio link control (RLC), medium access control (MAC) and physical layer (PHY) are terminated in the base station 102.

The base stations 102 perform scheduling and transmission of a paging signal (also referred to as paging messages) notified from a mobility management entity (MME) 103. The base stations 102 are connected to each other by means of an X2 interface. In addition, the base stations 102 are connected to an evolved packet core (EPC) by means of an S1 interface. More specifically, the base station 102 is connected to the mobility management entity (MME) 103 by means of an S1_MME interface and connected to a serving gateway (S-GW) 104 by means of an S1_U interface.

The MME 103 distributes the paging signal to a plurality of or a single base station 102. In addition, the MME 103 performs mobility control of an idle state. When the user equipment is in the idle state and an active state, the MME 103 manages a list of tracking areas.

The S-GW 104 transmits/receives user data to/from one or a plurality of base stations 102. The S-GW 104 serves as a local mobility anchor point in handover between base stations. Moreover, a PDN gateway (P-GW) is provided in the EPC, which performs per-user packet filtering and UE-ID address allocation.

The control protocol RRC between the user equipment 101 and the base station 102 performs broadcast, paging, RRC connection management and the like. The states of the base station and the user equipment in RRC are classified into RRC Idle and RRC_CONNECTED. In RRC_IDLE, public land mobile network (PLMN) selection, system information (SI) broadcast, paging, cell re-selection, mobility and the like are performed. In RRC_CONNECTED, the user equipment has RRC connection, is capable of transmitting/receiving data to/from a network, and performs, for example, handover (HO) and measurement of a neighbor cell.

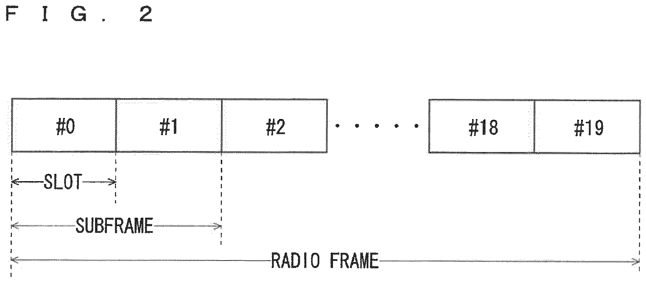

The current decisions by 3GPP regarding the frame configuration in the LTE system described in Non-Patent Document 1 (Chapter 5) are described with reference to FIG. 2. FIG. 2 is a diagram illustrating the configuration of a radio frame used in the LTE communication system. With reference to FIG. 2, one radio frame is 10 ms. The radio frame is divided into ten equally sized subframes. The subframe is divided into two equally sized slots. The first and sixth subframes contain a downlink synchronization signal (SS) per each radio frame. The synchronization signals are classified into a primary synchronization signal (P-SS) and a secondary synchronization signal (S-SS).

Multiplexing of channels for multimedia broadcast multicast service single frequency network (MBSFN) and for non-MBSFN is performed on a per-subframe basis. MBSFN transmission is a simulcast transmission technique realized by simultaneous transmission of the same waveforms from a plurality of cells. The MBSFN transmission from a plurality of cells in the MBSFN area is seen as a single transmission by a user equipment. The MBSFN is a network that supports such MBSFN transmission. Hereinafter, a subframe for MBSFN transmission is referred to as MBSFN subframe.

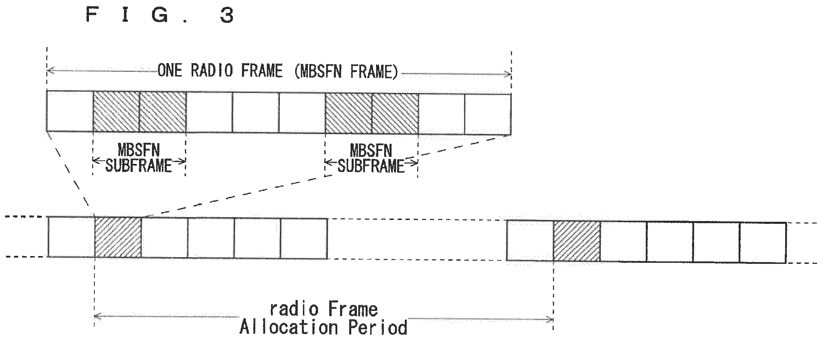

Non-Patent Document 2 describes a signaling example when MBSFN subframes are allocated. FIG. 3 is a diagram illustrating the configuration of the MBSFN frame. With reference to FIG. 3, a radio frame including the MBSFN subframes is allocated per radio frame allocation period. The MBSFN subframe is a subframe allocated for the MBSFN in a radio frame defined by the allocation period and the allocation offset (radio frame allocation offset), and serves to transmit multimedia data. The radio frame satisfying Equation (1) below is a radio frame including the MBSFN subframes.

$$\text{SFN mod radioFrameAllocationPeriod} =$$
$$\text{radioFrameAllocationOffset} \qquad \ldots(1).$$

The MBSFN subframe is allocated with six bits. The leftmost bit defines the MBSFN allocation for the second subframe (#1). The second bit, third bit, fourth bit, fifth bit, and sixth-bit define the MBSFN allocation for the third subframe (#2), fourth subframe (#3), seventh subframe (#6), eighth subframe (#7), and ninth subframe (#8), respectively. The case where the bit indicates "one" represents that the corresponding subframe is allocated for the MBSFN.

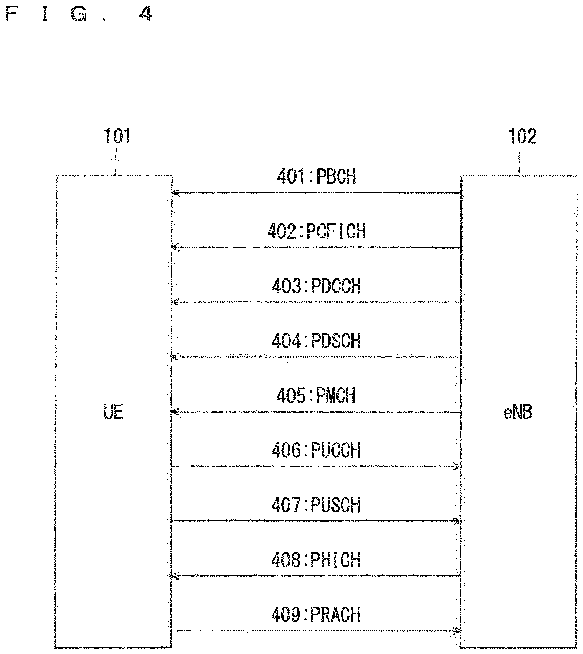

Non-Patent Document 1 (Chapter 5) describes the current decisions by 3GPP regarding the channel configuration in the LTE system. It is assumed that the same channel configuration is used in a closed subscriber group cell (CSG cell) as that of a non-CSG cell. Physical channels are described with reference to FIG. 4. FIG. 4 is a diagram illustrating physical channels used in the LTE communication system.

With reference to FIG. 4, a physical broadcast channel (PBCH) 401 is a downlink channel transmitted from the base station 102 to the user equipment 101. A BCH transport block is mapped to four subframes within a 40 ms interval. There is no explicit signaling indicating 40 ms timing. A physical control format indicator channel (PCFICH) 402 is transmitted from the base station 102 to the user equipment 101. The PCFICH notifies the number of OFDM symbols used for PDCCHs from the base station 102 to the user equipment 101. The PCFICH is transmitted in each subframe.

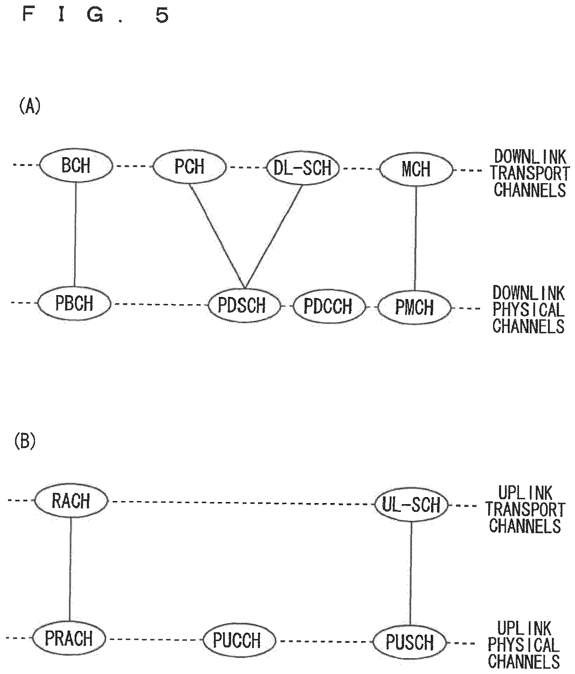

A physical downlink control channel (PDCCH) 403 is a downlink channel transmitted from the base station 102 to the user equipment 101. The PDCCH notifies the resource allocation of DL-SCH (downlink shared channel that is one of the transport channels shown in FIG. 5 described below) and PCH (paging channel that is one of the transport channels shown in FIG. 5), and HARQ information related to DL-SCH. The PDCCH carries an uplink scheduling grant. The PDCCH carries acknowledgement (Ack) / negative acknowledgement (Nack) that is a response signal to uplink transmission. The PDCCH is referred to as an L1/L2 control signal as well.

A physical downlink shared channel (PDSCH) 404 is a downlink channel transmitted from the base station 102 to the user equipment 101. A DL-SCH (downlink shared channel) that is a transport channel and a PCH that is a transport channel are mapped to the PDSCH. A physical multicast channel (PMCH) 405 is a downlink channel transmitted from the base station 102 to the user equipment 101. A multicast channel (MCH) that is a transport channel is mapped to the PMCH.

A physical uplink control channel (PUCCH) 406 is an uplink channel transmitted from the user equipment 101 to the base station 102. The PUCCH carries Ack/Nack that is a response signal to downlink transmission. The PUCCH carries a channel quality indicator (CQI) report. The CQI is quality information indicating the quality of received data or channel quality. In addition, the PUCCH carries a scheduling request (SR). A physical uplink shared channel (PUSCH) 407 is an uplink channel transmitted from the user equipment 101 to the base station 102. A UL-SCH (uplink shared channel that is one of the transport channels shown in FIG. 5) is mapped to the PUSCH.

A physical hybrid ARQ indicator channel (PHICH) 408 is a downlink channel transmitted from the base station 102 to the user equipment 101. The PHICH carries Ack/Nack that is a response to uplink transmission. A physical random access channel (PRACH) 409 is an uplink channel transmitted from the user equipment 101 to the base station 102. The PRACH carries a random access preamble.

A downlink reference signal is a known symbol in a mobile communication system. The physical layer measurement objects of a user equipment include reference symbol received power (RSRP).

The transport channels described in Non-Patent Document 1 (Chapter 5) are described with reference to FIG. 5. FIG. 5 is a diagram illustrating transport channels used in the LTE communication system. FIG. 5(A) shows mapping between a downlink transport channel and a downlink physical channel. FIG. 5(B) shows mapping between an uplink transport channel and an uplink physical channel.

A broadcast channel (BCH) is broadcast to the entire coverage of a base station (cell) regarding the downlink transport channel. The BCH is mapped to the physical broadcast channel (PBCH).

Retransmission control according to a hybrid ARQ (HARQ) is applied to a downlink shared channel (DL-SCH). The DL-SCH enables broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a user equipment for enabling the user equipment to save power. The DL-SCH is mapped to the physical downlink shared channel (PDSCH).

The paging channel (PCH) supports DRX of the user equipment for enabling the user equipment to save power. The PCH is required to broadcast to the entire coverage of the base station (cell). The PCH is mapped to physical resources such as the physical downlink shared channel (PDSCH) that can be used dynamically for traffic.

The multicast channel (MCH) is used for broadcast to the entire coverage of the base station (cell). The MCH supports SFN combining of MBMS service (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH). The UL-SCH supports dynamic or semi-static resource allocation. The UL-SCH is mapped to the physical uplink shared channel (PUSCH).

A random access channel (RACH) shown in FIG. 5(B) is limited to control information. The RACH involves a collision risk. The RACH is mapped to the physical random access channel (PRACH).

The HARQ is described. The HARQ is the technique for improving the communication quality of a channel by combination of automatic repeat request and error correction (forward error correction). The HARQ has an advantage that error correction functions effectively by retransmission even for a channel whose communication quality changes. In particular, it is also possible to achieve further quality improvement in retransmission through combination of the reception results of the first transmission and the reception results of the retransmission.

An example of the retransmission method is described. In a case where the receiver fails to successfully decode the received data, in other words, in a case where a cyclic redundancy check (CRC) error occurs (CRC=NG), the receiver transmits "Nack" to the transmitter. The transmitter that has received "Nack" retransmits the data. In a case where the receiver successfully decodes the received data, in other words, in a case where a CRC error does not occur (CRC=OK), the receiver transmits "AcK" to the transmitter. The transmitter that has received "Ack" transmits the next data.

Examples of the HARQ system include chase combining. In chase combining, the same data is transmitted in the first transmission and retransmission, which is the system for improving gains by combining the data of the first transmission and the data of the retransmission in retransmission. This is based on the idea that correct data is partially included even if the data of the first transmission contains an error, and highly accurate data transmission is enabled by combining the correct portions of the first transmission data and the retransmission data. Another example of the HARQ system is incremental redundancy (IR). The IR is aimed to increase redundancy, where a parity bit is transmitted in retransmission to increase the redundancy by combining the first transmission and retransmission, to thereby improve the quality by an error correction function.

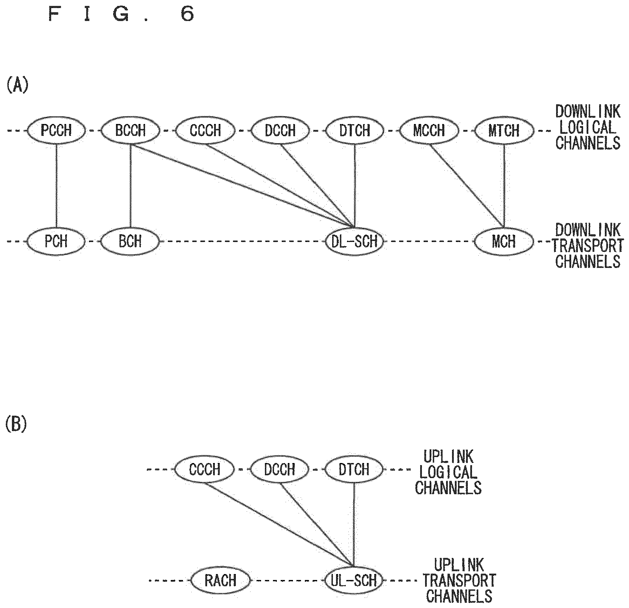

A logical channel described in Non-Patent Document 1 (Chapter 6) is described with reference to FIG. 6. FIG. 6 is a diagram illustrating logical channels used in an LTE communication system. FIG. 6(A) shows mapping between a downlink logical channel and a downlink transport channel. FIG. 6(B) shows mapping between an uplink logical channel and an uplink transport channel.

A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting changes of the paging information and system information. The PCCH is used when the network does not know the cell location of a user equipment. The PCCH that is a logical channel is mapped to the paging channel (PCH) that is a transport channel.

A common control channel (CCCH) is a channel for transmission control information between user equipments and a base station. The CCCH is used in a case where the user equipments have no RRC connection with the network. In a downlink direction, the CCCH is mapped to the downlink shared channel (DL-SCH) that is a transport channel. In an uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a user equipment. The MCCH is used only by a user equipment during reception of the MBMS. The MCCH is mapped to the multicast channel (MCH) that is a transport channel.

A dedicated control channel (DCCH) is a channel for point-to-point transmission of the dedicated control information between a user equipment and a network. The DCCH is used when a user equipment is in RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of the user information to a dedicated user equipment. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a user equipment. The MTCH is a channel used only by a user equipment during reception of the MBMS. The MTCH is mapped to the multicast channel (MCH).

GCI represents a global cell identity. A closed subscriber group cell (CSG cell) is introduced in the LTE, long term evolution advanced (LTE-A) described below, and universal mobile telecommunication system (UMTS). The CSG is described below (see Chapter 3.1 of Non-Patent Document 3). The closed subscriber group (CSG) cell is a cell in which subscribers who are allowed to use are specified by an operator (hereinafter, referred to as "cell for specific subscribers" in some cases).

The specified subscribers are allowed to access one or more cells of a public land mobile network (PLMN). One or more cells in which the specified subscribers are allowed access are referred to as "CSG cell(s)". Note that access is restricted in the PLMN. The CSG cell is part of the PLMN that broadcasts a specific CSG identity (CSG ID; CSG-ID) and broadcasts "TRUE" by CSG indication. The authorized members of the subscriber group who have registered in advance access the CSG cells using the CSG-ID that is the access permission information.

The CSG-ID is broadcast by the CSG cell or cells. A plurality of CSG-IDs exist in a mobile communication system. The CSG-IDs are used by user equipments (UEs) for making access from CSG-related members easier.

The locations of user equipments are tracked based on an area composed of one or more cells. The locations are tracked for enabling tracking of the locations of user equipments and calling (calling of user equipments) even in an idle state. An area for tracking locations of user equipments is referred to as a tracking area.

A CSG whitelist is a list that may be stored in a universal subscriber identity module (USIM) in which all CSG IDs of the CSG cells to which the subscribers belong are recorded. The CSG whitelist is also referred to as an allowed CSG list in some cases.

Service types of a user equipment in an idle state are described below (see Chapter 4.3 of Non-Patent Document 3). The service types of a user equipment in an idle state are classified into limited service (also referred to as closed service), a normal service, and an operator service. The limited service includes emergency calls, an earthquake and tsunami warning system (ETWS), and a commercial mobile alert system (CMAS) on an acceptable cell described below. The normal service (also referred to as standard service) is the service for public use on a suitable cell described below. The operator service is the service for operators only on a reserved cell described below.

A "suitable cell" is described below. The "suitable cell" is a cell on which a UE may camp to obtain normal service. Such a cell shall fulfill the following conditions (1) and (2).

(1) The cell is part of the selected PLMN or the registered PLMN, or part of the PLMN of an "equivalent PLMN list".

(2) According to the latest information provided by a non-access stratum (NAS), the cell shall further fulfill the following conditions (a) to (d):

(a) the cell is not a barred cell;
(b) the cell is part of a tracking area (TA), not part of the list of "forbidden LAs for roaming", where the cell needs to fulfill (1) above;
(c) the cell shall fulfill the cell selection criteria; and
(d) for a cell specified as CSG cell by system information (SI), the CSG-ID is part of a "CSG whitelist" of the UE (contained in the CSG whitelist of the UE).

An "acceptable cell" is described below. This is the cell on which a UE may camp to obtain limited service. Such a cell shall fulfill the all following requirements.

(1) The cell is not a barred cell. (2) The cell fulfills the cell selection criteria.

"Barred cell" is shown in the system information. "Reserved cell" is shown in the system information.

"Camping on a cell" represents the state where a UE has completed the cell selection/reselection process and the UE has selected a cell for monitoring the system information and paging information.

Base stations referred to as Home-NodeB (Home-NB; HNB) and Home-eNodeB (Home-eNB; HeNB) are studied in 3GPP. HNB/HeNB is a base station for, for example, household, corporation or commercial access service in UTRAN/E-UTRAN. Non-Patent Document 4 discloses three different modes of the access to the HeNB and HNB. Specifically, those are an open access mode, a closed access mode and a hybrid access mode.

The respective modes have the following characteristics. In the open access mode, the HeNB and HNB are operated as a normal cell of a normal operator. In the closed access mode, the HeNB and HNB are operated as a CSG cell. The CSG cell is a cell where only CSG members are allowed access. In the hybrid access mode, non-CSG members are allowed access at the same time. In other words, a cell in the hybrid access mode (also referred to as hybrid cell) is the cell that supports both the open access mode and the closed access mode.

In 3GPP, there is a range of PCIs in all physical cell identities (PCIs), which is reserved by the network for use by CSG cells (see Chapter 10.5.1.1 of Non-Patent Document 1). Splitting the range of PCIs is referred to PCI-split as times. The PCI split information is broadcast in the system information from the base station to the user equipments being served thereby. Non-Patent Document 5 discloses the basic operation of a user equipment using PCI split. The user equipment that does not have the PCI split information needs to perform cell search using all PCIs (for example, using all 504 codes). On the other hand, the user equipment that has the PCI split information is capable of performing cell search using the PCI split information.

Further, specifications standard of long term evolution advanced (LTE-A) as Release 10 are pursued in 3GPP (see Non-Patent Document 6 and Non-Patent Document 7).

As to the LTE-A system, it is studied that a relay (relay node (RN)) is supported for achieving a high data rate, high cell-edge throughput, new coverage area, and the like. The relay node is wirelessly connected to the radio-access network via a donor cell (Donor eNB; DeNB). The network (NW)-to-relay node link shares the same frequency band with the network-to-UE link within the range of the donor cell. In this case, the UE in Release 8 can also be connected to the donor cell. The link between a donor cell and a relay node is referred to as a backhaul link, and the link between the relay node and the UE is referred to as an access link.

As the method of multiplexing a backhaul link in frequency division duplex (FDD), the transmission from DeNB to RN is carried out in a downlink (DL) frequency band, and the transmission from RN to DeNB is carried out in an uplink (UL) frequency band. As the method of multiplexing resources in relays, a link from DeNB to RN and a link from RN to UE are time-division multiplexed in one frequency band, and a link from RN to DeNB and a link from UE to RN are also time-division multiplexed in one frequency band. This enables to prevent, in a relay, the transmission of the relay from interfering with the reception of the own relay.

Not only a normal eNB (macro cell) but also so-called local nodes such as pico eNB (pico cell), HeNB/HNB/CSG cell, node for hotzone cells, relay node, and remote radio head (RRH) are studied in 3GPP.

The local nodes are installed so as to complement a macro cell in response to requests for various services such as high speed and large-capacity communication. It is required to install a large number of HeNBs in shopping malls, apartment buildings, schools, companies and the like. This leads to a case in which a HeNB is installed in a coverage of a macro cell. In a case where the HeNB is installed in the coverage of the macro cell, interference occurs among the macro cell, HeNB, user equipment (UE), and the like.

The above-mentioned interference hinders the communication between the user equipment (UE) and the macro cell or HeNB, which reduces a data rate. Further increased interference power disables communication. This requires the method of preventing the interference occurring in a situation in which a macro cell and local nodes are installed to coexist and optimizing the communication quality.

The study of the machine type communication (MTC) technique is pursued in 3GPP (see Non-Patent Document 8). A large number of MTC devices (MTCDs) are conceivable. In MTC service, there occurs a situation in which data is communicated from a large number of MTCDs or to a large number of MTCDs at the same time. This causes a problem that a core network is congested.

In order to solve the above-mentioned problem, Non-Patent Document 9 discloses that an eNB holds back and aggregates signaling messages common to MTCDs of the same MTCD group, whereby the signaling messages are compacted.

Prior Art Documents

Non-Patent Documents

Non-Patent Document 1: 3GPP TS 36.300 V10.1.0 Chapter 4, Chapter 4.6.1,Chapter 4.6.2, Chapter 5, Chapter 6, Chapter 10.5.1.1, Chapter 10.7
Non-Patent Document 2: 3GPP TS 36.331 V9.4.0

Non-Patent Document 3: 3GPP TS 36.304 V9.4.0 Chapter 3.1, Chapter 4.3, Chapter 5.2.4
Non-Patent Document 4: 3GPP S1-083461
Non-Patent Document 5: 3GPP R2-082899
Non-Patent Document 6: 3GPP TR 36.814 V9.0.0
Non-Patent Document 7: 3GPP TR 36.912 V9.3.0
Non-Patent Document 8: 3GPP TS 22.368 V10.2.0
Non-Patent Document 9: 3GPP S2-103186

Summary of Invention

Problem to be Solved by the Invention

As described above, a large number of MTCDs are expected. In addition, it is assumed that the number of user equipments that can be accommodated by a HeNB is much smaller than the number of user equipments that can be accommodated by a macro cell. Therefore, in a case where a large number of MTCDs access the HeNB, the number of user equipments accommodated by the HeNB becomes equal to the number of user equipments that can be accommodated by the HeNB, and the HeNB is occupied by the MTCDs. This causes a fear that user equipments that are not MTCDs cannot be accommodated.

An object of the present invention is to provide a communication system capable of preventing a base station device from being occupied by specific communication terminal devices and avoiding a situation in which other communication terminal devices cannot be accommodated.

Means to Solve the Problem

A communication system of the present invention includes a base station device connected to a core network and a plurality of communication terminal devices connected to the base station device so as to perform radio communication with the base station device, wherein the base station device is adapted to notify communication terminal devices located within a communicable range of restriction information indicating an operation restricted for a predetermined restricted terminal device among the plurality of communication terminal devices, and the restricted terminal device among the communication terminal devices notified of the restriction information are adapted to operate in accordance with the restriction information.

Further, a communication system of the present invention includes a base station device connected to a core network and a plurality of communication terminal devices connected to the base station device so as to perform radio communication with the base station device, wherein among the plurality of communication terminal devices, a predetermined restricted terminal device is adapted to judge whether or not to select the base station device as a connection destination based on base station information regarding a base station device that is restricted from being selected as a connection destination by the own device.

Effects of the Invention

According to the communication system of the present invention, the base station device can restrict the operation of the restricted terminal device by differentiating from the communication terminal devices other than the restricted terminal device. This prevents the base station device from being occupied by the restricted terminal devices, which enables to prevent a situation in which the base station device cannot accommodate the communication terminal devices other than the restricted terminal devices. Accordingly, the base station device can keep providing service to the communication terminal devices other than the restricted terminal devices.

Further, according to the communication system of the present invention, the restricted terminal devices can be restricted from selecting the base station device as a connection destination by the differentiation from the communication terminal devices other than the restricted terminal device. This prevents the base station device from being occupied by the restricted terminal devices, which enables to prevent a situation in which the base station device cannot accommodate the communication terminal devices other than the restricted terminal devices. Accordingly, the base station device can keep providing service to the communication terminal devices other than the restricted terminal devices.

These and other objects, features, aspects and advantages of the present invention will become more apparent from the following detailed description of the present invention when taken in conjunction with the accompanying drawings.

Brief Description of Drawings

FIG. 1     is a diagram illustrating the configuration of an LTE communication system.

FIG. 2     is a diagram illustrating the configuration of a radio frame used in the LTE communication system.

FIG. 3     is a diagram illustrating the configuration of an MBSFN frame.

FIG. 4     is a diagram illustrating physical channels used in the LTE communication system.

FIG. 5     is a diagram illustrating transport channels used in the LTE communication system.

FIG. 6     is a diagram illustrating logical channels used in the LTE communication system.

FIG. 7     is a block diagram showing the overall configuration of an LTE mobile communication system currently under discussion of 3GPP.

FIG. 8     is a block diagram showing the configuration of a user equipment (user equipment 71 of FIG. 7) according to the present invention.

FIG. 9     is a block diagram showing the configuration of a base station (base station 72 of FIG. 7) according to the present invention.

FIG. 10    is a block diagram showing the configuration of an MME (MME unit 73 of FIG. 7) according to the present invention.

FIG. 11    is a block diagram showing the configuration of a HeNBGW 74 shown in FIG. 7 that is a HeNBGW according to the present invention.

FIG. 12    is a flowchart showing an outline from a cell search to an idle state operation performed by a user equipment (UE) in the LTE communication system.

FIG. 13    is an explanatory view showing an example of the MTC architecture under discussion by 3GPP.

FIG. 14    is a diagram showing the sequence of a communication system in a first embodiment.

FIG. 15    is a diagram showing the sequence of the communication system in a case where the first embodiment is used for solving the congestion caused by MTCDs in a radio area or at a core network side.

FIG. 16    is a diagram showing the sequence of a communication system in a first modification of the first embodiment.

FIG. 17    is a diagram showing the sequence of a communication system regarding the handover method disclosed in Non-Patent Document 1.

FIG. 18    is a diagram showing the sequence of a communication system as to a second solution in a second modification of the first embodiment.

FIG. 19    is another diagram showing the sequence of the communication system as to the second solution in the second modification of the first embodiment.

FIG. 20    is a diagram showing the sequence of a communication system in a third modification of the first embodiment.

FIG. 21    is another diagram showing the sequence of the communication system in the third modification of the first embodiment.

FIG. 22    is a diagram showing the sequence of a communication system in a fourth modification of the first embodiment.

FIG. 23    is another diagram showing the sequence of the communication system in the fourth modification of the first embodiment.

FIG. 24    is a diagram showing the sequence of a communication system in a fifth modification of the first embodiment.

FIG. 25    is another diagram showing the sequence of the communication system in the fifth modification of the first embodiment.

FIG. 26    is a diagram showing the sequence of a communication system in a sixth modification of the first embodiment.

FIG. 27    is another diagram showing the sequence of the communication system in the sixth modification of the first embodiment.

FIG. 28    is a diagram showing the sequence of a communication system in a second embodiment.

FIG. 29    is a diagram showing the sequence of a communication system in a first modification of the second embodiment.

FIG. 30    is a diagram showing the sequence of a communication system in a second modification of the second embodiment.

FIG. 31    is another diagram showing the sequence of the communication system in the second modification of the second embodiment.

FIG. 32    is a diagram showing the sequence of a communication system in a third modification of the second embodiment.

FIG. 33    is another diagram showing the sequence of the communication system in the third modification of the second embodiment.

Embodiments for Carrying Out the Invention

First Embodiment

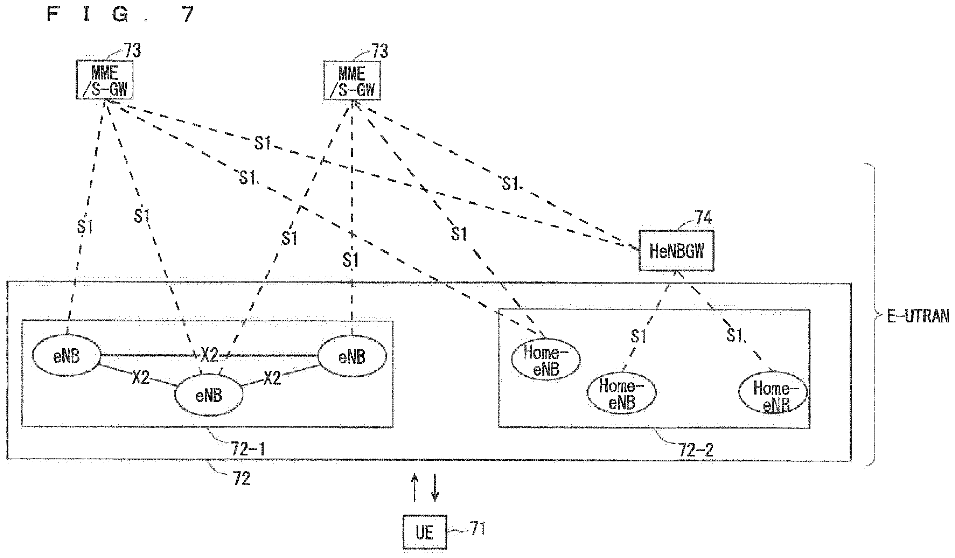

FIG. 7 is a block diagram showing an overall configuration of an LTE mobile communication system, which is currently under discussion of 3GPP. Currently, an overall system configuration including closed subscriber group (CSG) cells (Home-eNodeBs (Home-eNB; HeNB) of E-UTRAN, Home-NB (HNB) of UTRAN) and non-CSG cells (eNodeB (eNB) of E-UTRAN, NodeB (NB) of UTRAN, and BSS of GERAN) is studied in 3GPP and, as to E-UTRAN, the configuration as shown in FIG. 7 is proposed (see Chapter 4.6.1 of Non-Patent Document 1).

FIG. 7 is described. A user terminal device (hereinafter, referred to as "user equipment" or "UE") 71 is capable of performing radio communication with a base station device (hereinafter, referred to as "base station") 72 and transmits/receives signals through radio communication. The user terminal device is equivalent to a communication terminal device. Hereinafter, the user terminal device is referred to as "user equipment" in some cases.

The base stations 72 are classified into an eNB 72-1 that is a macro cell and a Home-eNB 72-2 that is a local node. The eNB 72-1 is equivalent to a large-scale base station device and has a relatively large-scale coverage as the coverage in a range in which communication is allowed with the user equipment UE 71. The Home-eNB 72-2 is equivalent to a small-scale base station device and has a relatively small-scale coverage as the coverage.

The eNB 72-1 is connected to an MME/S-GW unit (hereinafter, referred to as an "MME unit" in some cases) 73 including an MME, S-GW or MME and S-GW through an S1 interface, and control information is communicated between the eNB 72-1 and the MME unit 73. A plurality of MME units 73 may be connected to one eNB 72-1. The eNBs 72-1 are connected to each other by means of an X2 interface, and control information is communicated between the eNBs 72-1.

The Home-eNB 72-2 is connected to the MME unit 73 by means of an S1 interface, and the control information is communicated between the Home-eNB 72-2 and the MME unit 73. A plurality of Home-eNBs 72-2 are connected to one MME unit 73. Also, the Home-eNBs 72-2 are connected to the MME units 73 through a Home-eNB Gateway (HeNBGW) 74. The Home-eNBs 72-2 are connected to the HeNBGW 74 by means of the S1 interface, and the HeNBGW 74 is connected to the MME units 73 through an S1 interface.

One or a plurality of Home-eNBs 72-2 are connected to one HeNBGW 74, and information is communicated therebetween through an S1 interface. The HeNBGW 74 is connected to one or a plurality of MME units 73, and information is communicated therebetween through an S1 interface.

Further, the configuration below is currently studied in 3GPP. The X2 interface between the Home-eNBs 72-2 is not supported. The HeNBGW 74 appears to the MME unit 73 as the eNB 72-1. The HeNBGW 74 appears to the Home-eNB 72-2 as the MME unit 73. The interfaces between the Home-eNBs 72-2 and the MME units 73 are the same, which are the S1 interfaces, irrespective of whether or not the Home-eNB 72-2 is connected to the MME unit 73 through the HeNBGW 74. The HeNBGW 74 does not support the mobility to the Home-eNB 72-2 or the mobility from the Home-eNB 72-2 that spans the plurality of MME units 73. The Home-eNB 72-2 supports a single cell.

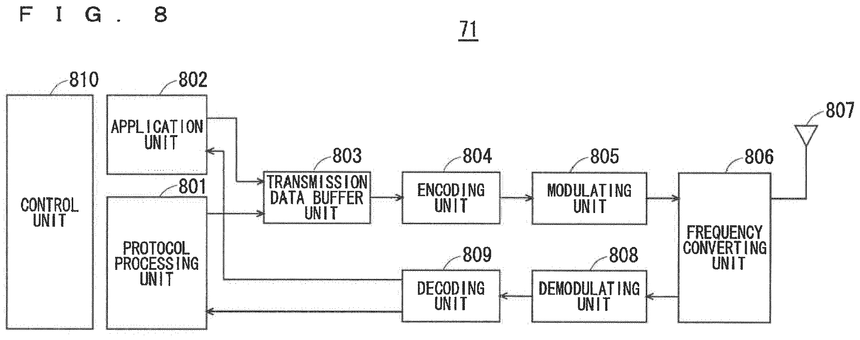

FIG. 8 is a block diagram showing the configuration of the user equipment (user equipment 71 of FIG. 7) according to the present invention. The transmission process of the user equipment 71 shown in FIG. 8 is described. First, a transmission data buffer unit 803 stores the control data from a protocol processing unit 801 and the user data from an application unit 802. The data stored in the transmission data buffer unit 803 is transmitted to an encoding unit 804 and is subjected to an encoding process such as error correction.

There may exist the data output from the transmission data buffer unit 803 directly to a modulating unit 805 without the encoding process. The data encoded by the encoding unit 804 is modulated by the modulating unit 805. The modulated data is output to a frequency converting unit 806 after being converted into a baseband signal, and then is converted into a radio transmission frequency. After that, a transmission signal is transmitted from an antenna 807 to the base station 72.

The user equipment 71 executes the reception process as follows. The radio signal is received through the antenna 807 from the base station 72. The received signal is converted from a radio reception frequency to a baseband signal by the frequency converting unit 806 and is then demodulated by a demodulating unit 808. The demodulated data is transmitted to a decoding unit 809 and is subjected to a decoding process such as error correction. Among the pieces of decoded data, the control data is transmitted to the protocol processing unit 801, while the user data is transmitted to the application unit 802. A series of processes of the user equipment 71 is controlled by a control unit 810. This means that, though not shown in FIG. 8, the control unit 810 is connected to the respective units 801 to 809.

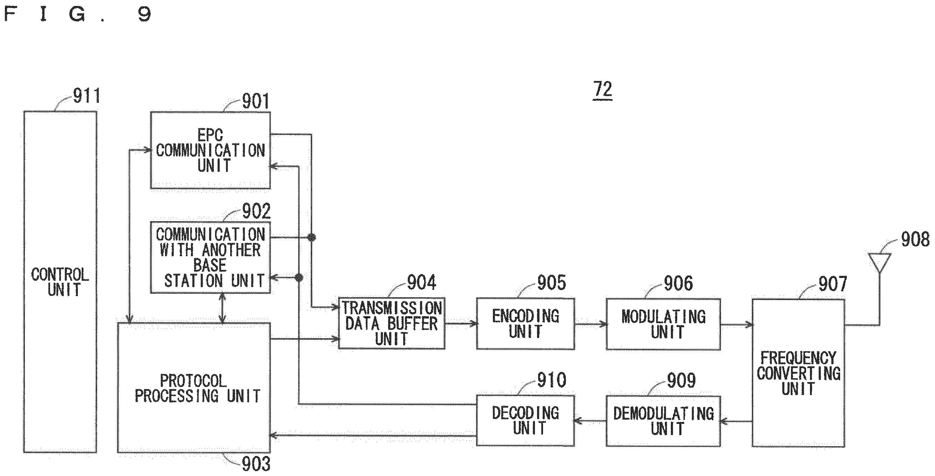

FIG. 9 is a block diagram showing the configuration of the base station (base station 72 of FIG. 7) according to the present invention. The transmission process of the base station 72 shown in FIG. 9 is described. An EPC communication unit 901 performs data transmission/reception between the base station 72 and the EPCs (such as MME unit 73 and HeNBGW 74). A communication with another base station unit 902 performs data transmission/reception to/from another base station.

The X2 interface between the Home-eNBs 72-2 is not intended to be supported, and accordingly, it is conceivable that the communication with another base station unit 902 may not exist in the Home-eNB 72-2. The EPC communication unit 901 and the communication with another base station unit 902 respectively transmit/receive information to/from a protocol processing unit 903. The control data from the protocol processing unit 903, and the user data and control data from the EPC communication unit 901 and the communication with another base station unit 902 are stored in a transmission data buffer unit 904.

The data stored in the transmission data buffer unit 904 is transmitted to an encoding unit 905 and is then subjected to an encoding process such as error correction. There may exist the data output from the transmission data buffer unit 904 directly to a modulating unit 906 without the encoding process. The encoded data is modulated by the modulating unit 906. The modulated data is output to a frequency converting unit 907 after being converted into a baseband signal, and is then converted into a radio transmission frequency. After that, a transmission signal is transmitted to one or a plurality of user equipments 71 through an antenna 908.

While, the reception process of the base station 72 is executed as follows. Radio signals from one or a plurality of user equipments 71 are received through the antenna 908. The received signal is converted from a radio reception frequency into a baseband signal by the frequency converting unit 907, and is then demodulated by a demodulating unit 909. The demodulated data is transmitted to a decoding unit 910 and is then subjected to a decoding process such as error correction.

Among the pieces of decoded data, the control data is transmitted to the protocol processing unit 903, EPC communication unit 901, or communication with another base station unit 902, while the user data is transmitted to the EPC communication unit 901 and the communication with another base station unit 902. A series of processes by the base station 72 is controlled by a control unit 911. This means that, though not shown in FIG. 9, the control unit 911 is connected to the respective units 901 to 910.

The functions of the Home-eNB 72-2 currently under discussion of 3GPP are described below (see Chapter 4.6.2 of Non-Patent Document 1). The Home-eNB 72-2 has the same function as that of the eNB 72-1. In addition, the Home-eNB 72-2 has the function of discovering a suitable serving HeNBGW 74 in a case of connection to the HeNBGW 74. The Home-eNB 72-2 is connected only to one HeNBGW 74. That is, in a case of the connection to the HeNBGW 74, the Home-eNB 72-2 does not use the Flex function in the S1 interface. When the Home-eNB 72-2 is connected to one HeNBGW 74, it is not simultaneously connected to another HeNBGW 74 or another MME unit 73.

The TAC and PLMN ID of the Home-eNB 72-2 are supported by the HeNBGW 74. When the Home-eNB 72-2 is connected to the HeNBGW 74, selection of the MME unit 73 at "UE attachment" is performed by the HeNBGW 74 instead of the Home-eNB 72-2. The Home-eNB 72-2 may be deployed without network planning. In this case, the Home-eNB 72-2 is moved from one geographical area to another geographical area. Accordingly, the Home-eNB 72-2 in this case is required to be connected to a different HeNBGW 74 depending on its location.

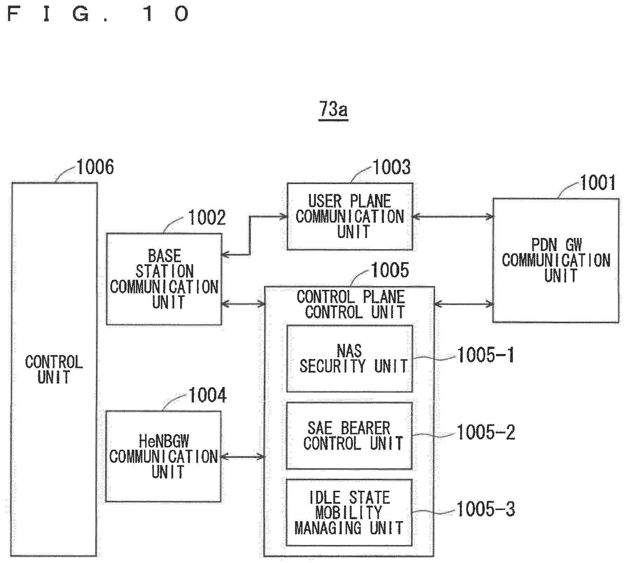

FIG. 10 is a block diagram showing the configuration of the MME according to the present invention. FIG. 10 shows the configuration of an MME 73a included in the MME unit 73 shown in FIG. 7 described above. A PDN GW communication unit 1001 performs data transmission/reception between the MME 73a and a PDN GW. A base station communication unit 1002 performs data transmission/reception between the MME 73a and the base station 72 by means of the S1 interface.

In the case where the data received from the PDN GW is user data, the user data is transmitted from the PDN GW communication unit 1001 to the base station communication unit 1002 through a user plane communication unit 1003 and is then transmitted to one or a plurality of base stations 72. In the case where the data received from the base station 72 is user data, the user data is transmitted from the base station communication unit 1002 to the PDN GW communication unit 1001 through the user plane communication unit 1003 and is then transmitted to the PDN GW.

In the case where the data received from the PDN GW is control data, the control data is transmitted from the PDN GW communication unit 1001 to a control plane control unit 1005. In the case where the data received from the base station 72 is control data, the control data is transmitted from the base station communication unit 1002 to the control plane control unit 1005.

A HeNBGW communication unit 1004 is provided in the case where the HeNBGW 74 is provided, which performs data transmission/reception by means of the interface (IF) between the MME 73a and the HeNBGW 74 according to an information type. The control data received from the HeNBGW communication unit 1004 is transmitted from the HeNBGW communication unit 1004 to the control plane control unit 1005. The processing results of the control plane control unit 1005 are transmitted to the PDN GW through the PDN GW communication unit 1001. The processing results of the control plane control unit 1005 are transmitted to one or a plurality of base stations 72 by means of the S1 interface through the base station communication unit 1002, and are transmitted to one or a plurality of HeNBGWs 74 through the HeNBGW communication unit 1004.

The control plane control unit 1005 includes an NAS security unit 1005-1, an SAE bearer control unit 1005-2, and an idle state mobility managing unit 1005-3, and performs an overall process for the control plane. The NAS security unit 1005-1 provides, for example, security of a non-access stratum (NAS) message. The SAE bearer control unit 1005-2 manages, for example, a system architecture evolution (SAE) bearer.

The idle state mobility managing unit 1005-3 performs, for example, mobility management of an idle state (LTE-IDLE state, which is merely referred to as idle as well), generation and control of paging signal in an idle state, addition, deletion, update, and search of a tracking area (TA) of one or a plurality of user equipments 71 being served thereby, and tracking area list (TA list) management.

The MME 73a begins a paging protocol by transmitting a paging message to the cell belonging to a UE registered tracking area (TA). The idle state mobility managing unit 1005-3 may manage the CSG of the Home-eNBs 72-2 to be connected to the MME 73a, CSG-IDs, and a whitelist.

In the CSG-ID management, the relationship between a user equipment corresponding to the CSG-ID and the CSG cell is managed (added, deleted, updated or searched). For example, it may be the relationship between one or a plurality of user equipments whose user access registration has been performed with a CSG-ID and the CSG cells belonging to this CSG-ID. In the whitelist management, the relationship between the user equipment and the CSG-ID is managed (added, deleted, updated, or searched).

For example, one or a plurality of CSG-IDs with which user registration has been performed by a user equipment may be stored in the whitelist. The above-mentioned management related to the CSG may be performed by another part of the MME 73a. A series of processes by the MME 73a is controlled by a control unit 1006. This means that, though not shown in FIG. 10, the control unit 1006 is connected to the respective units 1001 to 1005.

The function of the MME 73a currently under discussion of 3GPP is described below (see Chapter 4.6.2 of Non-Patent Document 1). The MME 73a performs access control for one or a plurality of user equipments being members of closed subscriber groups (CSGs). The MME 73a recognizes the execution of paging optimization as an option.

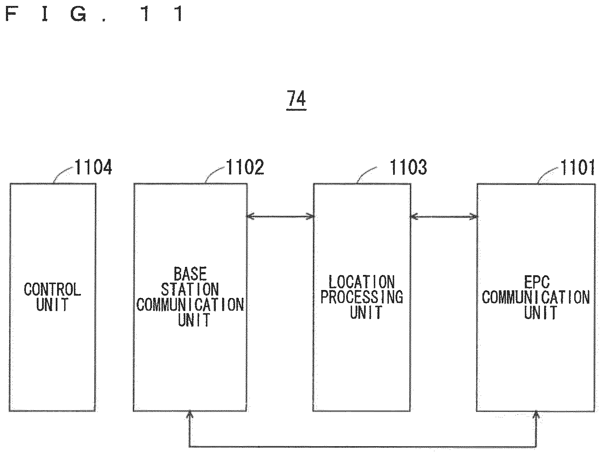

FIG. 11 is a block diagram showing the configuration of the HeNBGW 74 shown in FIG. 7 that is a HeNBGW according to the present invention. An EPC communication unit 1101 performs data transmission/reception between the HeNBGW 74 and the MME 73a by means of the S1 interface. A base station communication unit 1102 performs data transmission/reception between the HeNBGW 74 and the Home-eNB 72-2 by means of the S1 interface.

A location processing unit 1103 performs the process of transmitting, to a plurality of Home-eNBs 72-2, the registration information or the like among the data transmitted from the MME 73a through the EPC communication unit 1101. The data processed by the location processing unit 1103 is transmitted to the base station communication unit 1102 and is transmitted to one or a plurality of Home-eNBs 72-2 through the S1 interface.

The data only caused to pass through (to be transparent) without requiring the process by the location processing unit 1103 is passed from the EPC communication unit 1101 to the base station communication unit 1102, and is transmitted to one or a plurality of Home-eNBs 72-2 through the S1 interface. A series of processes by the HeNBGW 74 is controlled by a control unit 1104. This means that, though not shown in FIG. 11, the control unit 1104 is connected to the respective units 1101 to 1103.

The function of the HeNBGW 74 currently under discussion of 3GPP is described below (see Chapter 4.6.2 of Non-Patent Document 1). The HeNBGW 74 relays an S1 application. The HeNBGW 74 terminates the S1 application that is not linked to the user equipment 71 though it is a part of the procedures toward the Home-eNB 72-2 and towards the MME 73a. When the HeNBGW 74 is deployed, the procedure that is not linked to the user equipment 71 is communicated between the Home-eNB 72-2 and the HeNBGW 74 and between the HeNBGW 74 and the MME 73a. The X2 interface is not set between the HeNBGW 74 and another node. The HeNBGW 74 recognizes the execution of paging optimization as an option.

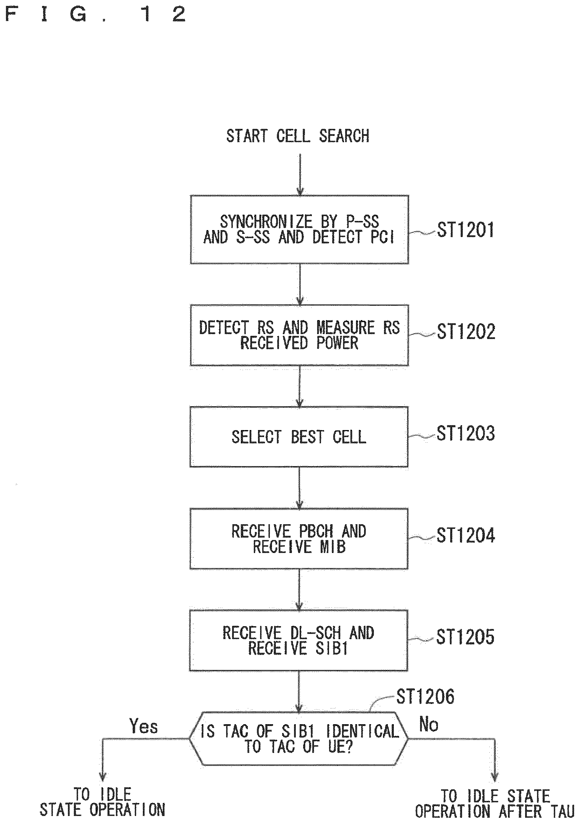

Next, an example of a typical cell search method in a mobile communication system is described. FIG. 12 is a flowchart showing an outline from a cell search to an idle state operation performed by a user equipment (UE) in the LTE communication system. When starting the cell search, in Step ST1201, the user equipment synchronizes the slot timing and frame timing by a primary synchronization signal (P-SS) and a secondary synchronization signal (S-SS) transmitted from a neighbour base station. Synchronization codes, which correspond to physical cell identities (PCIs) assigned per cell one by one, are assigned to the synchronization signals (SS) including the P-SS and S-SS. The number of PCIs is currently studied in 504 ways, and these 504 ways are used for synchronization, and the PCIs of the synchronized cells are detected (specified).

Next, in Step ST1202, the user equipment detects a reference signal RS (cell-specific reference signal (CRS)) transmitted from the base station per cell and measures the received power (also referred to as RSRP). The code corresponding to the PCI one by one is used for the reference signal RS, and separation from another cell is enabled by correlation using the code. The code for RS of the cell is derived from the PCI specified in Step ST1201, which makes it possible to detect the RS and measure the RS received power.

Next, in Step ST1203, the user equipment selects the cell having the best RS reception quality (for example, cell having the highest RS received power, that is, best cell) from one or more cells that have been detected up to Step ST1202.

In Step ST1204, next, the user equipment receives the PBCH of the best cell and obtains the BCCH that is the broadcast information. A master information block (MIB) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as transmission bandwidth configuration (dl-bandwidth)), transmission antenna number, and system frame number (SFN).

In Step ST1205, next, the user equipment receives the DL-SCH of the cell based on the cell configuration information of the MIB, to thereby obtain a system information block (SIB) 1 of the broadcast information BCCH. The SIB1 contains the information related to the access to the cell, information related to cell selection, and scheduling information of other SIB (SIBk; k is an integer equal to or larger than two). In addition, the SIB1 contains a tracking area code (TAC).

In Step ST1206, next, the user equipment compares the TAC of the SIB1 received in Step ST1205 with the TAC in the tracking area (TA) list that has been already possessed by the user equipment. In a case where the TAC received in Step ST1205 is identical to the TAC included in the TA list as a result of the comparison, the user equipment enters an idle state operation in the cell. In a case where the TAC received in Step ST1205 is not included in the TA list as a result of the comparison, the user equipment requires a core network (EPC) (including MME and the like) to change a TA through the cell for performing tracking area update (TAU).

The core network updates the TA list based on an identification number (such as a UE-ID) of the user equipment transmitted from the user equipment together with a TAU request signal. The core network transmits the updated TA list to the user equipment. The user equipment rewrites (updates) the TAC list of the user equipment with the received TA list. After that, the user equipment enters the idle state operation in the cell.

As to the LTE, LTE-A and universal mobile telecommunication system (UMTS), the introduction of a closed subscriber group (CSG) cell is studied. As described above, access is allowed for only one or a plurality of user equipments registered with the CSG cell. A CSG cell and one or a plurality of user equipments registered with the CSG cell constitute one CSG. A specific identification number referred to as CSG-ID is added to the thus constituted CSG. Note that one CSG may contain a plurality of CSG cells. After being registered with any one of the CSG cells, the user equipment can access another CSG cell of the CSG to which the CSG cell, with which the user equipment has been registered, belongs.

Alternatively, the Home-eNB in the LTE and LTE-A or the Home-NB in the UMTS is used as the CSG cell in some cases. The user equipment registered with the CSG cell has a whitelist. Specifically, the whitelist is stored in the subscriber identity module (SIM)/USIM. The CSG information of the CSG cell with which the user equipment has been registered is stored in the whitelist. Specific examples of the CSG information include CSG-ID, tracking area identity (TAI) and TAC. Any one of the CSG-ID and TAC is adequate as long as they are associated with each other. Alternatively, GCI is adequate as long as the CSG-ID and TAC are associated with global cell identity (GCI).

As can be seen from the above, the user equipment that does not have a whitelist (including a case where the whitelist is empty in the present invention) is not allowed to access the CSG cell but is allowed to access the non-CSG cell only. On the other hand, the user equipment which has a whitelist is allowed to access the CSG cell of the CSG-ID with which registration has been performed as well as the non-CSG cell.

In 3GPP, there is a range of PCIs in all physical cell identities (PCIs), which is reserved by the network for use by CSG cells (see Non-Patent Document 1). Splitting the range of PCIs is referred to PCI-split as times. The PCI split information is broadcast in the system information from the base station to the user equipments being served thereby. Non-Patent Document 5 discloses the basic operation of a user equipment by PCI split. The user equipment that does not have the PCI split information needs to perform cell search using all PCIs (for example, using all 504 codes). On the other hand, the user equipment that has the PCI split information is capable of performing cell search using the PCI split information.

Further, it has been determined that the PCIs for hybrid cells are not contained in the PCI range for CSG cells in 3GPP (see Chapter 10.7 of Non-Patent Document 1).

In 3GPP, there are two modes in the method of selecting or reselecting a CSG cell by a user equipment. One is an automatic mode. The feature of the automatic mode is described below. The user equipment performs selection or reselection with the use of an allowed CSG list (allowed CSG ID list) in the user equipment. After the completion of PLMN selection, the user equipment camps on one cell in the selected PLMN only in a case of a non-CSG cell or a CSG cell with a CSG ID present in the allowed CSG list. The user equipment disables an autonomous search function of the CSG cell if the allowed CSG list of the user equipment is empty (see Chapter 5.2.4.8.1 of Non-Patent Document 3).

The second is a manual mode. The feature of the manual mode is described below. The user equipment shows a list of available CSGs in the currently selected PLMN to a user. The list of CSGs provided to the user by the user equipment is not limited to the CSGs included in the allowed CSG list stored in the user equipment. The user selects the CSG based on the list of CSGs, and then the user equipment camps on the cell with the selected CSG ID, to thereby attempt registration (see Non-Patent Document 3).

The HeNB and HNB are required to support various services. For example, an operator causes the predetermined HeNB and HNB to register user equipments therein and permits only the registered user equipments to access the cells of the HeNB and HNB, which increases radio resources available for the user equipments and enables high-speed communication. In such a service, the operator correspondingly sets a higher accounting fee compared with a normal service.

In order to achieve the above-mentioned service, the closed subscriber group cell (CSG cell) accessible only to the registered (subscribed or member) user equipments is introduced. It is required to install a large number of closed subscriber group cells (CSG cells) in shopping malls, apartment buildings, schools, companies and the like. For example, the following manner of use is required; the CSG cells are installed for each store in shopping malls, for each room in apartment buildings, for each classroom in schools, and for each section in companies such that only the users who have registered with the respective CSG cells are permitted to use those CSG cells. The HeNB/HNB is required not only to complement the communication outside the coverage of the macro cell (area complementing HeNB/HNB) but also to support various services as described above (service providing HeNB/HNB). This also leads to a case where the HeNB/HNB is installed within the coverage of the macro cell.

The study of the MTC technique is pursued in 3GPP (see Non-Patent Document 8). The MTC is machine to machine (M2M) communication, which differs from the conventional human to human (H2H) communication. In other words, the MTC does not require human interaction, that is, interaction between humans. Examples of applications of the service using the MTC technique include metering of gas, power and water, and fleet management and order management (tracking and tracing). The MTC service is characterized by a large number of MTC devices (MTCDs). As one example, 30,000 or more MTCDs are assumed to be served by one cell.

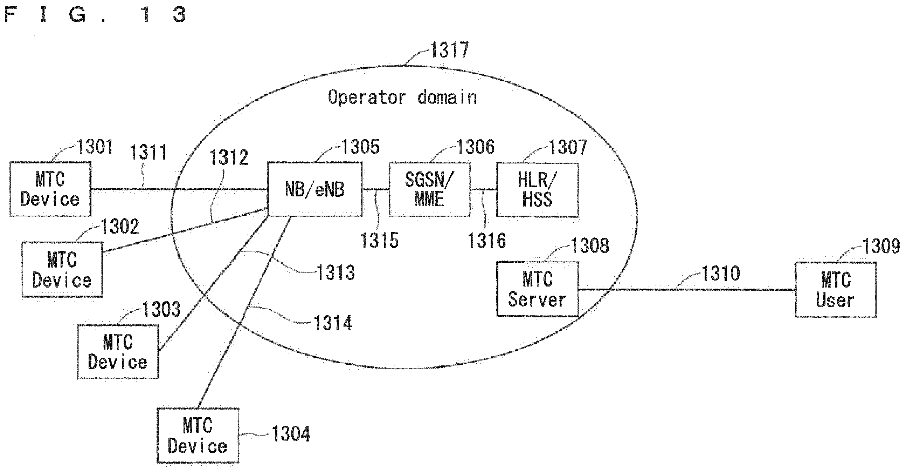

The architecture of the MTC is studied in 3GPP (see 3GPP R3-100315 (hereinafter, referred to as "Non-Patent Document 10")). FIG. 13 is a diagram illustrating an example of the architecture of the MTC, which is studied in 3GPP. The support of MTC service is studied not only in the LTE and LTE-A communication systems but also in the WCDMA communication system.

With reference to FIG. 13, MTCDs 1301 to 1304 and an NB/eNB 1305 are connected by means of Uu interfaces 1311 to 1314, respectively. A serving GPRS support node / mobility management entity (SGSN/MME) 1306 is connected to the NB/eNB 1305 by means of an IuPS/S1 interface 1315. Though not shown here, a radio network controller (RNC) is located between the NB and the SGSN. The NB and the RNC are connected by means of an Iub interface, and the RNC is connected to the SGSN by means of an IuPS interface.

A home location register / home subscriber server (HLR/HSS) 1307 is connected to the SGSN/MME 1306 by means of a Gr/S6a interface 1316. A communication operator domain 1317 includes the NB/eNB 1305, SGSN/MME 1306, HLR/HSS 1307, and the like.

An MTC server 1308 is included in the communication operator domain 1317. An MTC user 1309 that performs MTC service is connected to the MTC server 1308 by means of an application program interface (API) 1310. A node in the communication operator domain 1317, to which the MTC server 1308 is connected, is currently studied in 3GPP.

The information for MTC service is notified from the MTC user 1309 from the MTC server 1308 to the MTCDs 1301 to 1304 with the use of the NB/eNB 1305, SGSN/MME 1306, and HLR/HSS 1307 that are nodes in the communication operator domain 1317. In contrast, the information from the MTCDs 1301 to 1304 is notified to the MTC server 1308 with the use of the NB/eNB 1305, SGSN/MME 1306, and HLR/HSS 1307 that are nodes in the communication operator domain 1317, and the MTC user 1309 uses the information.

A problem to be solved in the first embodiment is described below. A large number of MTCDs are expected. It is also expected that the number of user equipments that can be accommodated by a HeNB is much smaller than the number of user equipments that can be accommodated by a macro cell. Therefore, in a case where a large number of MTCDs access the HeNB at once, the HeNB may be occupied by the MTCDs and user equipments that are not MTCDs (hereinafter, referred to as "normal UEs" in some cases) may not be accommodated.

A specific example is described below. A HeNB is installed in a building, which is operated in a hybrid access mode. Therefore, a passing user equipment unregistered with the same CSG as that of the HeNB can also access the HeNB.

For example, a heavily loaded track is parked in front of the building. An MTCD is mounted to each of the goods for tracking. A base station having the best reception quality is the HeNB installed in a building for many MTCDs. Therefore, a large number of MTCDs mounted to the goods loaded in the track reselects the HeNB installed in the building as a serving cell.

At a time when access for reporting the present location to an MTC server from an MTCD occurs, a large number of MTCDs access the HeNB in a building simultaneously. As a result, the number of user equipments accommodated by a HeNB (hereinafter, referred to as "accommodation number" in some cases) reaches the number of user equipments that can be accommodated by the HeNB (hereinafter, referred to as "capacity" in some cases). Accordingly, if a normal UE newly accesses the HeNB, the HeNB cannot accommodate the normal UE and cannot provide services to the normal UE.

As the method of restricting the access to the HeNB by the user equipments such as MTCDs, there is a closed subscriber group (CSG) in the existing techniques. However, in a case where a HeNB is operated in an open access mode or hybrid access mode, a user equipment unregistered with the same CSG as that of the HeNB can also access the HeNB. Therefore, the above-mentioned problem cannot be solved by merely restricting access to the HeNB by the existing CSG.

A solution in the first embodiment is described below. A base station notifies user equipments located in a communicable range, that is, user equipments being served thereby, of the MTCD restriction information in the own base station. The user equipments to be notified of the MTCD restriction information include MTCDs and normal UEs. The MTCD is equivalent to a restricted terminal device, and the normal UE is equivalent to a communication terminal device that is not the restricted terminal device. The MTCD restriction information shows the operation of restricting the MTCD.

The MTCD that has received the MTCD restriction information operates in accordance with the restriction shown in the MTCD restriction information. The normal UE that has received the MTCD restriction information does not operate in accordance with the restriction shown in the MTCD restriction information. The normal UE that has received the MTCD restriction information may operate normally.

Accordingly, the base station is capable of differentiating between the normal UE and MTCD to restrict the operation. Therefore, if a HeNB being a base station differentiates between the normal UE and MTCD with the use of the MTCD restriction information to restrict the operation of the MTCD, the following problem can be solved that the accommodation number of the user equipments by a HeNB reaches the capacity due to the access by the MTCDs, and the HeNB is occupied by the MTCDs and cannot accommodate the normal UEs.

The following seven (1) to (7) are disclosed as specific examples of the restriction shown in the MTCD restriction information.

(1) Whether or not an MTCD is allowed access. The following five (a1) to (a5) are disclosed as specific examples of the access; (a1) transmission of uplink control data, (a2) transmission of uplink traffic data, which may be transmission of user data, (a3) RACH transmission, (a4) transmission of RRC connection request, and (a5) combination of (a1) to (a4) above.

(2) Whether or not an MTCD is allowed camp-on for obtaining a normal service. In other words, whether or not the selection as a suitable cell can be made by an MTCD.

(3) Whether or not an MTCD is allowed camp-on for obtaining a limited service. In other words, whether or not the selection as an acceptable cell can be made by an MTCD. The following four (b1) to (b4) are disclosed as specific examples of the limited service; (b1) transmission of emergency call, (b2) reception of ETWS, (b3) reception of CMAS, and (b4) combination of (b1) to (b3) above.

(4) Whether or not an MTCD is prohibited from selecting a cell as a candidate for cell selection and reselection. In other words, whether or not the cell is a barred cell for the MTCD.

(5) Whether or not an MTCD is prohibited from roaming.

(6) Whether or not an MTCD is prohibited from handover.

(7) Combination of (1) to (6) above.

Through notification of one restriction in the MTCD restriction information, other restrictions may be regarded to be notified together. The combination thereof may be determined in a static manner. The following eleven (A1) to (A11) are disclosed as specific examples of the combination.

(A1) In a case where the MTCD restriction information shows that access is not allowed, it is indicated that an MTCD is not allowed access but is allowed camp-on for obtaining a normal service.

(A2) In a case where the MTCD restriction information shows that access is not allowed, it is indicated that an MTCD is not allowed access but is allowed camp-on for obtaining a limited service.

(A3) In a case where the MTCD restriction information shows that access is not allowed, it is indicated that the MTCD is not allowed access but is not prohibited from selecting a cell as a candidate for cell selection and reselection.

(A4) In a case where the MTCD restriction information shows that access is not allowed, it is indicated that the MTCD is not allowed access but is not prohibited from roaming.

(A5) In a case where the MTCD restriction information shows that access is not allowed, it is indicated that the MTCD is not allowed access but is not prohibited from handover.

(A6) In a case where the MTCD restriction information shows that camp-on is not allowed for obtaining a normal service, it is indicated that the MTCD is not allowed camp-on for obtaining a normal service but is allowed camp-on for obtaining a limited service.

(A7) In a case where the MTCD restriction information shows that camp-on is not allowed for obtaining a normal service, it is indicated that the MTCD is not allowed camp-on for obtaining a normal service but is not prohibited from selecting a cell as a candidate for cell selection and reselection.

(A8) In a case where the MTCD restriction information shows that camp-on is not allowed for obtaining a normal service, it is indicated that the MTCD is not allowed camp-on for obtaining a normal service but is not prohibited from roaming.

(A9) In a case where the MTCD restriction information shows that camp-on is not allowed for obtaining a normal service, it is indicated that the MTCD is not allowed camp-on for obtaining a normal service but is not prohibited from handover.

(A10) In a case where the MTCD restriction information shows that camp-on is not allowed for obtaining a limited service, it is indicated that the MTCD is not allowed camp-on for obtaining a limited service but is not prohibited from roaming.

(A11) In a case where the MTCD restriction information shows that camp-on is not allowed for obtaining a limited service, it is indicated that the MTCD is not allowed camp-on for obtaining a limited service but is not prohibited from handover.

In a case where the MTCD restriction information shows "not allowed", it may be assumed that a restriction stricter than that of the operation shown in the MTCD restriction information is not imposed. In the specific examples regarding restrictions shown in the MTCD restriction information described above, the restriction in the specific example (1) is the loosest restriction, and the restriction becomes stricter as the number of specific example increases, that is, from (1) to (4). For the sake of convenience, description is given below except for the specific examples (5), (6), and (7).

For example, in the specific example (1), it is regarded that the restriction stricter than the restriction of the specific example (1) is not imposed in the case where the MTCD is not allowed access. Accordingly, it is regarded that the restriction information shows that the MTCD is allowed camp-on for obtaining a normal service, that the MTCD is allowed camp-on for obtaining a limited service, and that the MTCD is not allowed to select a cell as a candidate for cell selection and reselection.

The MTCD restriction information needs not to be indicated by two values showing two cases whether the access or camp-on is allowed or is not allowed as the restriction contents. The following two (1) and (2) are disclosed as specific examples of the restriction information that is not indicated by two values.

(1) Multiple values are notified as the restriction information. As specific control information, a case in which two bits are used is described below. "11" indicates that there is no restriction. "10" indicates that the MTCD is not allowed camp-on for obtaining a normal service. "01" indicates that the MTCD is not allowed camp-on for obtaining a limited service. "00" indicates that the MTCD is prohibited from selecting a cell as a candidate for cell selection and reselection. The use of multiple values as the restriction information enables to construct a more flexible communication system compared with the case in which two values are used.

(2) Restrictions are shown depending on whether or not the restriction information is notified. The following two (a1) and (a2) are described as specific examples. (a1) "The MTCD restriction information is present", that is, "the MTCD restriction information is notified" indicates that the MTCD is not allowed camp-on for obtaining a normal service. "The MTCD restriction information is not present", that is, "the MTCD restriction information is not notified" indicates that the MTCD is allowed camp-on for obtaining a normal service. (a2) "The MTCD restriction information is present", that is, "the MTCD restriction information is notified" indicates that the MTCD is not allowed camp-on for obtaining a normal service. "

The MTCD restriction information is not present, that is, "the MTCD restriction information is not notified" indicates that there is no restriction. In a case where the restriction information indicating a restriction depending on whether or not a notification is made as in (a1) or (a2) is used, the MTCD restriction information needs not to be notified in a base station that does not limits MTCDs, differently from the case in which two values are used as the restriction information. Therefore, the current base station needs not to be changed. This enables to construct a communication system having excellent backward compatibility.

The MTCD restriction information is not necessarily required to be the restriction information for "MTCD". The following three examples (1) to (3) are disclosed as specific examples.

(1) Restriction information according to the priority of MTCD. This is effective in a case where an MTCD having high priority and an MTCD having low priority are differentiated from each other in a communication system. The following three (a1) to (a3) are disclosed as specific examples of the combination with the restriction information. (a1) The MTCD restriction information shows the restriction information for an MTCD having low priority. (a2) The MTCD restriction information for MTCD having high priority and the MTCD restriction information for MTCD having low priority are provided separately. (a3) The MTCD restriction information shows the restriction information for all MTCDs. The priority does not have to be indicated by two values.

(2) Restriction information according to an MTCD group. This is effective in a case where the MTCD group is provided in a communication system. The following three (b1) to (b3) are disclosed as specific examples of the combination with the restriction information. For example, an MTCD group A and an MTCD group B are present. (b1) The MTCD restriction information shows the restriction information for the MTCDs belonging to the MTCD group A. (b2) The MTCD restriction information is provided per MTCD group. That is, the MTCD restriction information for the MTCD group A and the MTCD restriction information for the MTCD group B are provided separately. It suffices that in such cases, an identity of the MTCD group is added to the MTCD restriction information. (b3) The MTCD restriction information shows the restriction information for all MTCD groups. The number of groups is not limited to two.

(3) Restriction information according to the priority of the user equipment. This is effective in a case of the differentiation between a user equipment having high priority and a user equipment having low priority, not in a case of the differentiation as to whether or not a user equipment is an MTCD in a communication system. As specific examples of the combination with the restriction information, the following two (c1) and (c2) are disclosed. (c1)

The restriction information shows the restriction information for a user equipment having low priority. (c2) The restriction information for a user equipment having high priority and the restriction information for a user equipment having low priority are provided. The priority needs not to be indicated by two values.

The following two (1) and (2) are disclosed as specific examples of the method of determining the MTCD restriction information.

(1) The MTCD restriction information is determined in a static manner. The static manner means that a determination is made in accordance with, for example, the capability of a base station. The following three examples (a1) to (a3) are disclosed as specific examples thereof.

(a1) The HeNB restricts MTCDs. A base station that is not a HeNB, for example, macro cell does not restrict MTCDs. In a case where, for example, the restriction is determined in advance, the notification of the MTCD restriction information can be omitted.

(a2) The base station whose capacity is small, for example, base station whose capacity is smaller than a threshold restricts MTCDs. The base station whose capacity is large, for example, base station whose capacity is larger than a threshold does not restrict MTCDs.

(a3) The base station whose coverage is small, for example, base station whose coverage is smaller than a threshold restricts MTCDs. The base station whose coverage is large, for example, base station whose coverage is larger than a threshold does not restrict MTCDs.

(2) The MTCD restriction information is determined uniquely to a base station in a semi-static manner. The semi-static manner means that a determination is made in accordance with the factors excluding the capability of the base station, that is, in accordance with factors such as the situations in which the base station is installed and operated. Specific examples thereof are described below. The base station that is not a HeNB, for example, macro cell imposes no restriction. An MTCD cannot camp on a HeNB installed outside the coverage of other cell (hereinafter, also referred to as "area-complementing HeNB") for obtaining a normal service.

The MTCD is prohibited from selecting the HeNB installed within the coverage of the other cell (also referred to as "service-providing HeNB") as a candidate for cell selection and reselection. In a case of the determination in a semi-static manner as described above, a change can be made in accordance with, for example, a situation in which the base station is installed, differently from the case of the determination in a static manner. Accordingly, a more flexible communication system can be constructed.

Disclosed below are specific examples of the method in which a base station notifies the user equipments being served thereby of the MTCD restriction information. The base station notifies the MTCD restriction information as the broadcast information. This allows the user equipment to receive the MTCD restriction information irrespective of whether the state of the user equipment, for example, irrespective of whether the user equipment is in a stand-by state or connected state. The following two (1) and (2) are disclosed as specific examples in a case of the notification as the broadcast information.

(1) The MTCD restriction information is notified over the MIB. A new parameter is provided to the MIB. The MIB is received by a user equipment at an early stage of cell search (see Step ST1204 of FIG. 12), and thus, through notification of the MTCD restriction information over the MIB, the user equipment is capable of early judging whether or not there is any restriction.

(2) The MTCD restriction information is notified over the SIB. A new parameter is provided to the SIB. The SIB is mapped to the DL-SCH being a downlink shared channel. The MIB of (1) is mapped to the PBCH being a physical broadcast channel. The resource of the PBCH is limited to four subframes within a 40 ms interval as described above. Meanwhile, such a restriction is not imposed on the DL-SCH. Therefore, through notification of the MTCD restriction information over the SIB, the restriction on an amount of MTCD restriction information can be made loose. The following three (a1) to (a3) are disclosed as specific examples in a case of the notification over the SIB.

(a1) The MTCD restriction information is notified over the SIB1. A new parameter is provided to the SIB1. The SIB1 includes existing parameters (cellbarred, CSG-indication, CSG-identity) regarding access restriction. Therefore, if the MTCD restriction information is included in the SIB1, a user equipment can handle the parameters regarding access restriction at the same time, which enables to simplify the operation by the user equipment.

(a2) The MTCD restriction information is notified over the SIB2. A new parameter is provided to the SIB2. The SIB2 includes an existing parameters (ac-BarringInfo: ACB) regarding access restriction. Therefore, if the MTCD restriction information is included in the SIB2, a user equipment can handle the parameters regarding access restriction at the same time, which enables to simplify the operations by a user equipment.

(a3) The MTCD restriction information is notified over the SIB3, SIB4, SIB5, SIB6, SIB7, and SIB8. New parameters are provided to the SIB3, SIB4, SIB5, SIB6, SIB7, and SIB8. The existing parameters regarding cell reselection are included in the SIB3, SIB4, SIB5, SIB6, SIB7, and SIB8. Therefore, if the MTCD restriction information is included in the SIB3, SIB4, SIB5, SIB6, SIB7, and SIB8, a user equipment can handle the parameters regarding cell reselection at the same time, which enables to simplify the operation by a user equipment.

In a case where the MTCD restriction information shows whether or not the MTCD is allowed access in the specific example (1), access class barring (ACB) being an existing parameter may be used as the method in which a base station notifies user equipments being served thereby of the MTCD restriction information (see Non-Patent Document 2). The use of the existing parameters enables to prevent a communication system from becoming complicated. The following two (1) and (2) are disclosed as the points that the existing parameters need to be changed.

(1) There is no distinction between the MTCD and normal UE in the ACB being an existing parameter. Accordingly, the base station cannot restrict the operation by the differentiation between the normal UE and MTCD using the parameter ACB. In the present embodiment, the ACB for MTCD and the ACB for normal UE are set apart from each other. This enables a base station to differentiate between the normal UE and MTCD with the use of the parameter ACB to limit the operation of the MTCD.

(2) The avoidance of the congestion caused by MTCDs at the core network side is studied in 3GPP (see 3GPP R3-102661 (hereinafter, referred to as "Non-Patent Document 14")). The contents of Non-Patent Document 14 are described. In a case where the congestion occurs by MTCDs at the core network side, the core network specifies the exclusion of access of MTCDs to the base station. However, the method described in Non-Patent Document 14 cannot specify the exclusion of access by MTCDs regardless of the congestion caused by MTCDs at the core network side.

Therefore, in the present embodiment, the base station is configured to notify the user equipments being served thereby of the MTCD restriction information with the use of the parameter ACB even if the congestion is not caused by MTCDs at the core network side. For example, the base station is configured to notify the user equipments being served thereby of the MTCD restriction information with the use of the parameter ACB even if there is no instruction from the core network side.

Alternatively, the base station is configured to notify the user equipments being served thereby of the MTCD restriction information with the use of the parameter ACB even if it does not receive Overload Start from the core network side. This allows the base station to notify the user equipments being served thereby of the MTCD restriction information regardless of the congestion at the core network side.

In a case where the MTCD restriction information indicates whether or not an MTCD is prohibited from selecting a cell as a candidate for cell selection and reselection in the specific example (4), cellbarred (hereinafter, merely referred to as "Barred" in some cases) being an existing parameter may be used as the method in which a base station notifies the user equipments being served thereby of the MTCD restriction information (see Non-Patent Document 2). The use of the existing parameter prevents the communication system from becoming complicated.

A point required to be changed in the existing parameter is disclosed. In the existing parameter Barred, there is no differentiation between the MTCD and normal UE. Therefore, a base station cannot differentiate between the normal UE and MTCD with the use of the parameter Barred to restrict the operation of the MTCD. For this reason, in the present embodiment, Barred for MTCD and Barred for normal UE are set apart from each other. This enables the base station to differentiate between the normal UE and MTCD with the use of the parameter Barred to restrict the operation of the MTCD.

As the method in which a base station notifies user equipments being served thereby of the MTCD restriction information, an area in which only the MTCDs perform decoding may be provided and the MTCD restriction information may be mapped to that area. As a result, a normal UE needs not to receive this area and needs not to decode this domain. Therefore, it is not required to change the existing 3GPP equipment, which enables to construct a communication system having excellent backward compatibility.

The following two (1) and (2) are disclosed as specific examples of the cell from which the user equipment receives the MTCD restriction information. (1) Cell to be measured. (2) Cell that satisfies cell selection criteria. In a case of using the cell of the specific example (2), the number of cells that need to receive the MTCD restriction information becomes smaller compared with the case in which the cell of the specific example (1) is used. Therefore, the processing load by a user equipment can be reduced with the use of the cell of the specific example (2). In addition, power consumption of a user equipment can be reduced.

The following seven (1) to (7) are disclosed as specific examples of the timing at which a user equipment reflects the MTCD restriction information. The specific examples disclosed below may be applied to a timing at which the user equipment checks the MTCD restriction information.

(1) At cell selection. A user equipment checks the MTCD restriction information before cell selection and checks whether or not it is allowed to select (camp on) that cell. In a case where cell selection is allowed, the user equipment selects the cell. In a case where cell selection is not allowed, the user equipment removes the cell from a candidate for cell selection and starts the operation for selecting another cell.

(2) At cell reselection. A user equipment checks the MTCD restriction information before cell reselection and checks whether or not it is allowed to reselect (camp on) that cell. In a case where cell reselection is allowed, the user equipment reselects the cell. In a case where cell reselection is not allowed, the user equipment removes the cell from a candidate for cell reselection and starts the operation for reselecting another cell.

(3) At access. A user equipment checks the MTCD restriction information before access and checks whether or not it can access the cell. In a case where access is allowed, the user equipment starts accessing the cell. In a case where access is not allowed, the user equipment sends access or starts the cell reselection operation for selecting another accessible cell.

(4) Periodically. A user equipment receives and checks the MTCD restriction information at predetermined intervals.

(5) When the MTCD restriction information is changed. A change of the contents of the MTCD restriction information may trigger cell reselection. For example, in a case where the MTCD restriction information is changed from "camp-on is allowed for obtaining a normal service" to "camp-on is not allowed for obtaining a normal service", the MTCD being served by the cell starts the cell reselection operation for selecting another cell on which it can camp for obtaining a normal service.

(6) When a notification of system information change is received. A paging message may be used as this notification (see Non-Patent Document 2). This is effective in a case where the MTCD restriction information is notified over the system information (SI).

Combination of (1) to (6) above.

The MTCD may reflect or check the MTCD restriction information. The normal UE may not be required to reflect or check the MTCD restriction information. Accordingly, a change to a normal UE is not required, which enables to construct a communication system having excellent backward compatibility.

In a case of not limiting the MTCs, the base station may not be required to notify the MTCD restriction information. The user equipment may judge that a base station that has not notified the MTCD restriction information does not restrict MTCDs. Alternatively, the user equipment may judge that the cell that has not notified the MTCD restriction information handles the MTCD and normal UE equally. As a specific example, the MTCD restriction information may be notified from the HeNB. The base station that is not a HeNB, for example, macro cell may not be required to notify the MTCD restriction information. In this case, it suffices that the user equipment judges that the cell that has not notified the MTCD restriction information does not restrict MTCDs. This does not require a change to a base station that is not a HeNB, whereby a communication system having excellent backward compatibility can be constructed.

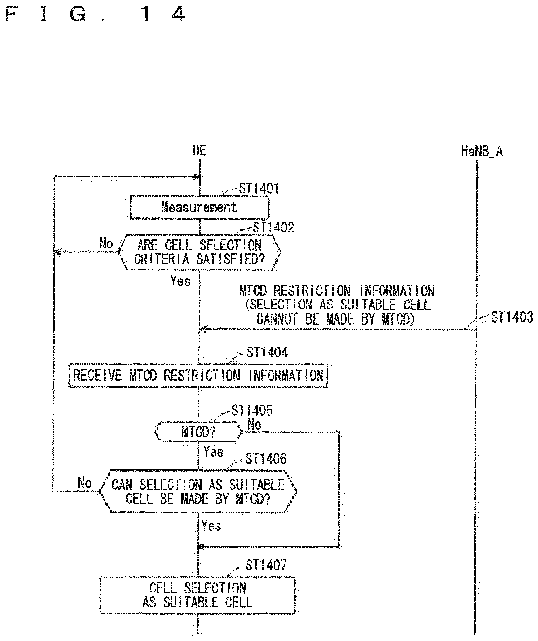

Next, a specific example of the sequence of the communication system in the first embodiment is described with reference to FIG. 14. FIG. 14 is a diagram showing the sequence of the communication system in the first embodiment. This operation example discloses a case of the specific example (2) in which the selection as a suitable cell can be made by the MTCD as a specific example of the restriction shown in the MTCD restriction information. The case (a1) of the specific example (1) in which a HeNB restricts MTCDs is disclosed as a specific example of the method of determining the MTCD restriction information.

Disclosed here is a case where a base station that is not a HeNB, for example, macro cell does not restrict MTCDs. As a cell from which a user equipment receives the MTCD restriction information, the case of the specific example (2) regarding the cell that satisfies the cell selection criteria is disclosed. As a specific example of the timing at which a user equipment reflects the MTCD restriction information, the time at cell selection in the specific example (1) is disclosed. Also disclosed here is the case in which an MTCD reflects or checks the MTCD restriction information. User equipments (UEs) are located within the coverage of a HeNB_A and perform the cell selection operation.

In Step ST1401, a UE measures a cell and then moves to Step ST1402. Specifically, as the measurement, the UE executes the operations of Step ST1201, Step ST1202, and Step ST1203 of the flowchart shown in FIG. 12 described above. In this operation example, the HeNB_A is selected as the best cell in Step ST1203.

In Step ST1402, the UE judges whether or not the measurement result in Step ST1401 satisfies the cell selection criteria. In this operation example, the UE judges whether or not the HeNB A satisfies the cell selection criteria. The UE moves to Step ST1404 in a case of judging that the cell selection criteria are satisfied in Step ST1402 or returns to Step ST1401 in a case of judging that the cell selection criteria are not satisfied in Step ST1402.

In Step ST1403, the HeNB_A notifies the UE of the MTCD restriction information. The HeNB_A notifies the user equipments (UEs) being served thereby that "the selection as a suitable cell cannot be made by the MTCD" as the MTCD restriction information.

In Step ST1404, the UE receives the MTCD restriction information. Specifically, the UE receives the MTCD restriction information notified from the base station that has been judged to satisfy the cell selection criteria in Step ST1402. In this operation example, the UE receives "the selection as a suitable cell cannot be made by the MTCD" being the MTCD restriction information notified from the HeNB A.

In Step ST1405, the UE judges whether or not the own device is an MTCD. The information indicating that the own device is an MTCD (MTCD indicator), which is stored in a USIM or the like, may be used in this judgment. The UE moves to Step ST1406 in a case of judging that the own device is an MTCD in Step ST1405 or moves to Step ST1407 in a case of judging that the own device is not an MTCD in Step ST1405. Through the process of Step ST1405, the operation of the MTCD can be restricted by differentiating from a normal UE.

In Step ST1406, the UE judges whether or not the cell restricts MTCDs. In this operation example, the UE judges whether or not the MTCD can select the HeNB_A as a suitable cell. The UE moves to Step ST1407 in a case of judging that the HeNB_A can be selected as a suitable cell in Step ST1406 or returns to Step ST1401 in a case of judging that the HeNB_A cannot be selected as a suitable cell in Step ST1406. In this operation example, the UE judges that the HeNB A cannot be selected as a suitable cell from the MTCD restriction information received in Step ST1403, and thus returns to Step ST1401. The operation of the MTCD can be restricted through the operation of Step ST1406.

In Step ST1407, the UE selects the cell as a suitable cell.

The first embodiment above can achieve the following effects. The base station is capable of restricting the operation of an MTCD by differentiating from a normal UE. Specifically, a HeNB is capable of restricting the operation of an MTCD by differentiating from a normal UE. This enables to solve such a problem that a HeNB is occupied by MTCDs and cannot accommodate normal UEs. Therefore, a HeNB can keep providing service to normal UEs.

Not only as to the HeNB described above, but also as to so-called local nodes such as HNB, a pico eNB being a pico cell for LTE (hereinafter, referred to as "EUTRAN pico cell" in some cases), pico NB being a pico cell for WCDMA (hereinafter, referred to as "UTRAN pico cell" in some cases), relay, remote radio head (RRH), and node for hotzone cells, the coverage thereof is smaller that that of the macro cell. In addition, the number of user equipments that can be accommodated thereby is expected to be much smaller than the number of user equipments that can be accommodated by a macro cell. It is considered from the above that similarly to a HeNB, the problem of the first embodiment arises also in these local nodes. Therefore, to solve the above-mentioned problem using the first embodiment is effective for local nodes such as HNB, pico eNB, pico NB, relay, remote radio head, and node for hotzone cells.

Further, there is a conceivable case in which as to macro cells such as eNB and NB, a higher priority is given to handling of a normal UE in the comparison between the MTCD and normal UE. An example of the above is a case in which an event is taken place within the coverage and the use of a large number of normal UEs is expected. In such a case, as to a macro cell, it is effective to secure the room for accommodating normal UEs and maintain the service for the normal UEs with the use of the first embodiment.

In addition, the congestion that may be caused by MTCDs in a radio area or at a core network side is seen as a problem. Also in that case, the operation of the MTCD can be restricted by differentiating from a normal UE with the use of the first embodiment. The congestion caused by MTCDs in a radio area or at a core network side can be resolved by restricting the operation of the MTCD. Further, the congestion caused by MTCDs in a radio area or at a core network side can be resolved while keeping providing the service to normal UEs.

The following four (1) to (4) are disclosed as specific examples of the trigger by which a base station changes the MTCD restriction information in a case where the present embodiment is used for solving the congestion caused by MTCDs in a radio area or at a core network side. (1) Change of a congested situation at a core network side. For example, congestion occurs or congestion is resolved. (2) Change of a congested situation in a radio area. For example, congestion occurs or congestion is resolved. (3) Change of a processing load of a base station. For example, a processing load increases or a processing load decreases. (4) Combination of (1) to (3) above.

The following three (1) to (3) are disclosed as specific examples of the combination of the trigger for changing the MTCD restriction information and the restriction in the case where the present embodiment is used for solving the congestion caused by MTCDs in a radio area or at a core network side.

(1) Combination of a trigger and a restriction in the case where the trigger is a change of the congested situation at the core network side in the specific example (1) regarding the trigger. In a case where the congestion occurs, the base station operates for stricter restriction. In a case where the congestion is resolved, the base station operates for relaxed restriction.

(2) Combination of a trigger and a restriction in a case where the trigger is a change of the congested situation in a radio area in the specific example (2) regarding the trigger. In a case where congestion occurs, the base station operates for stricter restriction. In a case where congestion is resolved, the base station operates so as for relaxed restriction.

(3) Combination of a trigger and a restriction in a case where the trigger is a change of the processing load of the base station in the specific example (3) regarding the trigger. In a case where the processing load increases, the base station operates for stricter restriction. In a case where the processing load decreases, the base station operates for relaxed restriction.

The trigger by which the base station changes the MTCD restriction information in the case where the present embodiment is used for resolving the congestion caused by MTCDs in a radio area or at a core network side needs not to be indicated by two values. The following two (1) and (2) are disclosed as specific examples of the trigger that is not indicated by two values.

(1) Multiple values are notified as the trigger information. A case where two bits are used as specific trigger information is described below. "11" indicates the congested situation level 0 (minimum). "10" indicates the congested situation level 1. "01" indicates the congested situation level 2. "00" indicates the congested situation level 3 (maximum). The congested situation level means that congestion becomes heavier as the number increases. That is, the congested situation becomes heavier as the congested situation level increases from "0" being a minimum value to "1" and to "2", and becomes heaviest in "3" being a maximum value.

(2) A specific example may be a status, not a trigger. The information indicating a congested situation may be notified periodically. Alternatively, it may be suggested that a congested situation is resolved if the information indicating a congested situation is no longer notified.

Disclosed below is a specific example of the combination of a trigger and a restriction when the trigger for changing the MTCD restriction information is indicated by multiple values in a case where the present embodiment is used for resolving the congestion caused by MTCDs in a radio area or at a core network side. The case where two bits are used as specific trigger information is described below. In a case where the trigger information is "11" and indicates the congested situation level 0 (minimum), there is no restriction.

In a case where the trigger information is "10" and indicates the congested situation level 1, the MTCD is not allowed camp-on for obtaining a normal service. In a case where the trigger information is "01" and indicates the congested situation level 2, the MTCD is not allowed camp-on for obtaining a limited service. In a case where the trigger information is "00" and indicates the congested situation level 3 (maximum), an MTCD is prohibited from selecting a cell as a candidate for cell selection and reselection.

Disclosed below is a specific example of the method in which a core network side notifies a base station of a trigger in a case where the present embodiment is used for resolving the congestion caused by MTCDs in a radio area or at a core network side. For example, the core network side such as an MME or S-GW notifies the trigger information. "Overload Start" and "Overload Stop" of an existing message can be used as the trigger information. The use of an existing message enables to prevent a communication system from becoming complicated. For example, the MME notifies the base station of "Overload Start" to notify that the congestion has occurred at a core network side. The MME notifies the base station of "Overload Stop" to notify that the congestion at a core network side has been resolved.

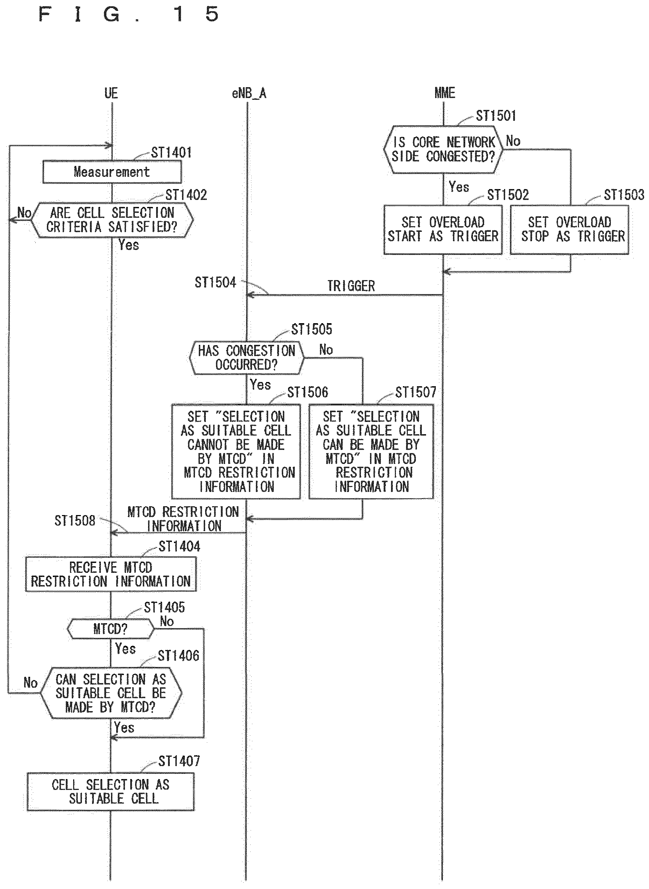

A specific example of the sequenece of the communication system in a case where the present embodiment is used for resolving the congestion caused by MTCDs in a radio area or at a core network side is described with reference to FIG. 15. FIG. 15 is a diagram showing the sequence of the communication system in a case where the first embodiment is used for resolving congestion caused by MTCDs in a radio area or at a core network side. The sequence shown in FIG. 15 is similar to the sequence shown in FIG. 14, and thus, the same steps are denoted by the same step numbers and the common description is not given here.

This operation example discloses, as a specific example of a restriction shown in the MTCD restriction information, the case of the specific example (2) regarding whether or not the selection as a suitable cell can be made by an MTCD. The case of the specific example (1) in which a change of a congested situation at a core network side is used is disclosed as a specific example of a trigger by which a base station changes the MTCD restriction information.

A case in which an MME is used is disclosed as a specific example of a core network side that notifies a base station of a trigger. A case in which "Overload Start" and "Overload Stop" of an existing message are used is used as a specific example of the method in which a core network side notifies a base station of a trigger. User equipments (UEs) are located within the coverage of the eNB A and perform the operation to select a cell. Congestion occurs at the core network side in this operation example.

In Step ST1501, the MME judges whether or not congestion has occurred at a core network side. The MME moves to Step ST1502 in a case of judging that congestion has occurred in Step ST1501 or moves to Step ST1503 in a case of judging that congestion has not occurred in Step ST1501. It is assumed in this operation example that congestion has occurred at a core network, and thus, the MME moves to Step ST1502.

In Step ST1502, the MME sets "Overload Start" as the trigger information by which the base station changes the MTCD restriction information, which is to be notified the base station. In this operation example, the MME moves from Step ST1501 to Step ST1502, and thus sets "Overload Start" as the trigger information.

In Step ST1503, the MME sets "Overload Stop" as the trigger information by which the base station changes the MTCD restriction information, which is to be notified the base station.

In Step ST1504, the MME notifies the eNB_A being a base station of the trigger information by which the base station changes the MTCD restriction information. In this operation example, the MME notifies "Overload Start" as the trigger information.

In Step ST1505, the eNB_A being a base station judges whether or not congestion has occurred at the core network side based on the trigger information by which the base station changes the MTCD restriction information, which has been received from the MME in Step ST1504. As a specific example of judgment, the eNB A judges that congestion has occurred at the core network side in a case of receiving "Overload Start" as the trigger information.

In a case of receiving "Overload Stop" as the trigger information, the eNB A judges that the congestion has been resolved, that is, congestion has not occurred, at the core network side. The eNB A being a base station moves to Step ST1506 in a case of judging that congestion has occurred in Step ST1505 or moves to Step ST1507 in a case of judging that congestion has not occurred in Step ST1505. In this operation example, the eNB_A has received "Overload Start" in Step ST1504, and thus judges that congestion has occurred at the core network side and moves to Step ST1506.

In Step ST1506, the base station sets "the selection as a suitable cell cannot be made by the MTCD" as the MTCD restriction information. In Step ST1507, the base station sets "the selection as a suitable cell cannot be made by the MTCD" as the MTCD restriction information. Through the operation of Step ST1506 or Step ST1507, the MTCD restriction information can be used for resolving the congestion caused by MTCDs in the radio area or at the core network side.

In Step ST1508, the base station notifies user equipments (UEs) being served thereby of the MTCD restriction information. After that, the processes of Step ST1404 to Step ST1407 are performed as in the example shown in FIG. 14.

First Modification of First Embodiment

A problem to be solved in a first modification of the first embodiment is described below. In a case where the first embodiment described above is used, the following problem arises. Considered here is a case in which, for example, the first embodiment is used in a HeNB owned by an individual. This causes a problem that an MTCD owned by the same individual as that of the HeNB is restricted from the operation on the HeNB.

A solution in the first modification of the first embodiment is described below. In the present modification, a portion different from the solution in the first embodiment is mainly described, and the portion that is not described here is as in the first embodiment.

An MTCD that does not wish to be restricted is registered with the same CSG as that of a base station by which the MTCD does not wish to be restricted. A base station notifies user equipments being served thereby of the MTCD restriction information for an MTCD unregistered with the same CSG as that of the own base station (hereinafter, referred to as "unregistered MTCD restriction information" in some cases). The unregistered MTCD restriction information is equivalent to unregistration restriction information.

Among the user equipments that have received the unregistered MTCD restriction information, the MTCD unregistered with the same CSG as that of the base station (hereinafter, referred to as "MTCD unregistered with CSG" in some cases) operates in accordance with the restriction shown in the unregistered MTCD restriction information. Among the user equipments that have received the unregistered MTCD restriction information, the user equipments that are not the MTCDs unregistered with CSG, that is, a normal UE and the MTCD that has been registered with the same CSG as that of the base station do not operate in accordance with the restriction shown in the unregistered MTCD restriction information. Among the user equipments that have received the unregistered MTCD restriction information, the user equipment that is not the MTCD unregistered with CSG may operate normally.

The following seven examples (1) to (7) are disclosed as specific examples of the restriction shown in the unregistered MTCD restriction information.

(1) Whether or not an MTCD unregistered with the same CSG as that of the own base station is allowed access. The following five (a1) to (a5) are disclosed as specific examples of access; (a1) transmission of uplink control data, (a2) transmission of uplink traffic data, which may be transmission of user data, (a3) RACH transmission, (a4) transmission of RRC connection request, and (a5) combination of (a1) to (a4) above.

(2) Whether or not an MTCD unregistered with the same CSG as that of the own base station is allowed camp-on for obtaining a normal service. In other words, whether or not the selection as a suitable cell can be made by an MTCD.

(3) Whether or not an MTCD unregistered with the same CSG as that of the own base station is allowed camp-on for obtaining a limited service. In other words, whether or not the selection as an acceptable cell can be made by an MTCD. The following four (b1) to (b4) are disclosed as specific examples of the limited service; (b1) transmission of emergency calling, (b2) reception of ETWS, (b3) reception of CMAS, and (b4) combination of (b1) to (b3) above.
(4) Whether or not an MTCD unregistered with the same CSG as that of the own base station is prohibited from selecting a cell as a candidate for cell selection and reselection. In other words, whether or not the cell is a barred cell for an MTCD.

(5) Whether or not an MTCD unregistered with the same CSG as that of the own base station is prohibited from roaming.
(6) Whether or not an MTCD unregistered with the same CSG as that of the own base station is prohibited from handover.
(7) Combination of (1) to (6) above.

A specific example of the method in which a base station notifies user equipments being served thereby of the unregistered MTCD restriction information is disclosed. The unregistered MTCD restriction information is notified as broadcast information. This enables to achieve an effect that the user equipment can receive the unregistered MTCD restriction information irrespective of the state of the user equipment, for example, irrespective of whether the user equipment is in a stand-by state or in a connected state. A specific example in the case of the notification as broadcast information is as in the first embodiment.

In a case where the unregistered MTCD restriction information shows whether or not an MTCD unregistered with the same CSG as that of the own base station in the specific example (1), access class barring (ACB) being an existing parameter may be used as the method in which a base station notifies user equipments being served thereby of the MTCD restriction information (see Non-Patent Document 2). The use of the existing parameter enables to prevent a communication system from becoming complicated.

The following two (1) and (2) are disclosed as the points that the existing parameter needs to be changed.

(1) In the existing ACB, there is no differentiation between an MTCD unregistered with the same CSG as that of the own base station and a user equipment that is not an MTCD unregistered with the same CSG as that of the own base station. Therefore, with the use of the parameter ACB, a base station cannot differentiate between an MTCD unregistered with the same CSG as that of the own base station and a user equipment that is not an MTCD unregistered with the same CSG as that of the own base station and restrict the operation of the latter.

Therefore, in the present modification, ACB for MTCD unregistered with the same CSG as that of the own base station and ACB for user equipment that is not an MTCD unregistered with the same CSG as that of the own base station are set apart from each other. This enables the base station to differentiate between an MTCD unregistered with the same CSG as that of the own base station and a user equipment that is not an MTCD unregistered with the same CSG as that of the own base station and restrict the operation of the latter with the use of the parameter ACB.

(2) How to avoid congestion by MTCDs at a core network side is studied in 3GPP (see Non-Patent Document 14). The contents of Non-Patent Document 14 are described. In a case where congestion is caused by MTCDs at the core network side, the core network side specifies the exclusion of access from an MTCD for a base station. However, in the method described in Non-Patent Document 14, the exclusion of access from an MTCD unregistered with the same CSG as that of the own base station cannot be specified irrespective of the congestion caused by MTCDs at the core network side.

Therefore, in the present modification, the base station is configured to notify user equipments being served thereby of the unregistered MTCD restriction information with the use of ACB even if congestion is not caused by MTCDs at the core network side. For example, the base station is configured to notify user equipments being served thereby of the unregistered MTCD restriction information with the use of the parameter ACB even if there is no instruction from the core network side. Alternatively, the base station is configured to notify, even if not receiving Overload Start from the core network side, user equipments being served thereby of the MTCD restriction information unregistered with the same CSG as that of the own base station with the use of the parameter ACB. This enables the base station to notify, with the use of the parameter ACB, user equipments being served thereby of the restriction information of the unregistered MTCD irrespective of the congestion at the core network side.

In a case where the unregistered MTCD restriction information shows whether or not an MTCD unregistered with the same CSG as that of the own base station is prohibited from selecting a cell as a candidate for cell selection and reselection in the specific example (4), cellbarred (merely referred to as "Barred" in some cases) being an existing parameter may be used as the method in which a base station notifies user equipments being served thereby of the unregistered MTCD restriction information (see Non-Patent Document 2). The use of the existing parameter enables to prevent a communication system from becoming complicated.

A change required to be made in the existing parameter is disclosed here. In the existing Barred, there is no differentiation between an MTCD unregistered with the same CSG as that of the own base station and a user equipment that is not an MTCD unregistered with the same CSG as that of the own base station. Therefore, the base station cannot differentiate between an MTCD unregistered with the same CSG as that of the own base station and a user equipment that is not an MTCD unregistered with the same CSG as that of the own base station and restrict the operation of the latter with the use of the parameter Barred.

Therefore, in the present modification, Barred for MTCD unregistered with the same CSG as that of the own base station and Barred for user equipment that is not an MTCD unregistered with the same CSG as that of the own base station are set apart from each other. This enables the base station to differentiate between an MTCD unregistered with the same CSG as that of the own base station and a user equipment that is not an MTCD unregistered with the same CSG as that of the own base station and restrict the operation of the latter with the use of the parameter Barred.

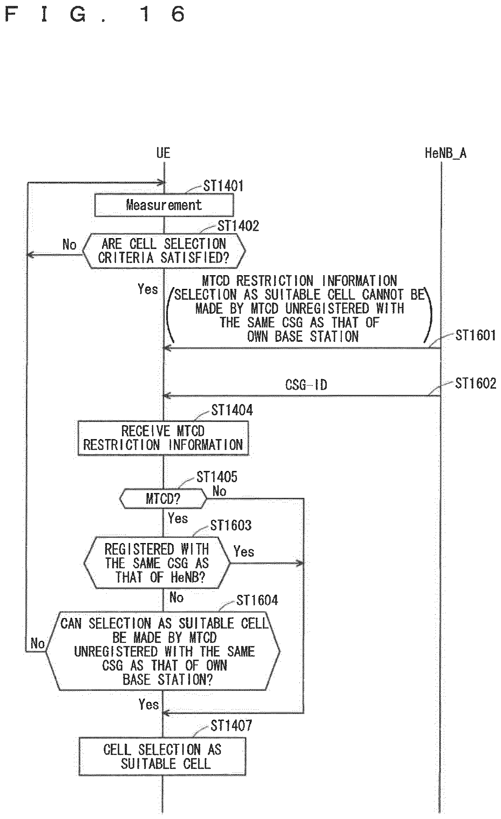

Next, a specific example of the sequence of a communication system in the first modification of the first embodiment is descried with reference to FIG. 16. FIG. 16 is a diagram showing the sequence of the communication system in the first modification of the first embodiment. The sequence shown in FIG. 16 is similar to the sequence shown in FIG. 14, and thus, the same steps are denoted by the same step numbers and the common description is not given here.

This operation example discloses a case as to whether or not the selection as a suitable cell can be made by an MTCD in the specific example (2), as a specific example of the restriction shown in the unregistered MTCD restriction information. In addition, a case where a HeNB restricts MTCD unregistered with the same CSG as that of the own base station is disclosed as a specific example of the method of determining the unregistered MTCD restriction information. Disclosed here is a case where a base station that is not a HeNB, for example, macro cell does not restrict an MTCD unregistered with the same CSG as that of the own base station.

Further, a case in which a cell from which a user equipment receives the MTCD restriction information is a cell that satisfies the cell selection criteria is disclosed. As a specific example of the timing at which a user equipment reflects the unregistered MTCD restriction information, the time at cell selection is disclosed. Further, a case in which an MTCD reflects or checks the unregistered MTCD restriction information is disclosed. User equipments (UEs) are located within the coverage of the HeNB A being a base station and perform the cell selection operation.

In the present modification, the process moves to Step ST1601 after the processes of Step ST1401 and Step ST1402 shown in FIG. 14 are performed as in the first embodiment described above. In Step ST1601, the HeNB_A notifies the unregistered MTCD restriction information as the MTCD restriction information. In the present modification, the HeNB_A notifies the user equipments (UEs) being served thereby that "the selection as a suitable cell cannot be made by an MTCD unregistered with the same CSG as that of the own base station" as the unregistered MTCD restriction information.

In Step ST1602, the HeNB_A broadcasts the CSG identity (CSG-ID) of the own base station to the UEs. Then, the processes of Step ST1404 and Step ST1405 shown in FIG. 14 are performed as in the first embodiment. Among the UEs, an MTCD moves to Step ST1603 and a UE other than the MTCD moves to Step ST1407.

In Step ST1603, the MTCD judges whether or not it has been registered with the same CSG as that of the HeNB_A being a HeNB. A whitelist stored in, for example, USIM may be used in this judgment. The MTCD moves to Step ST1407 in a case of judging that is has been registered with the same CSG as that of the HeNB in Step ST1603 or moves to Step ST1604 in a case of judging that is has not been registered with the same CSG as that of the HeNB, that is, in a case of judging that it has not been registered in Step ST1603. Through the process of Step ST1603, the base station can restrict the operation of the MTCD unregistered with the same CSG as that of the own base station by differentiating from the MTCD registered with the same CSG as that of the own base station.

In Step ST1604, the UE judges whether or not the base station restricts MTCDs unregistered with the same CSG as that of the own base station. In this operation example, the UE judges whether or not the selection as a suitable cell can be made by an MTCD unregistered with the same CSG as that of the HeNB_A. The UE moves to Step ST1407 in a case of judging that a base station can be selected as a suitable cell by an MTCD unregistered with the same CSG as that of the own base station, or returns to Step ST1401 in a case of judging that a base station cannot be selected as a suitable cell by an MTCD unregistered with the same CSG as that of the own base station. Through the process of Step ST1604, the base station can restrict the operation of the MTCD unregistered with the same CSG as that of the own base station.

The first modification of the first embodiment described above can achieve the following effects in addition to the effects of the first embodiment. The base station is capable of restricting the operation of an MTCD unregistered with the same CSG as that of the own base station by differentiating from a normal UE and an MTCD registered with the same CSG as that of the own base station. For example, a HeNB is capable of restricting, using the present modification, the operation of the MTCD unregistered with the same CSG as that of the own base station by differentiating from a normal UE and an MTCD registered with the same CSG as that of the own base station.

This enables to solve such a problem that a HeNB is occupied by MTCDs unregistered with the same CSG as that of the own base station and cannot accommodate normal UEs or MTCDs registered with the same CSG as that of the own base station. Therefore, a HeNB can keep providing service to MTCDs registered with the same CSG as that of the HeNB and normal UEs.

The present modification can be used in combination with the first embodiment described above.

Second Modification of First Embodiment

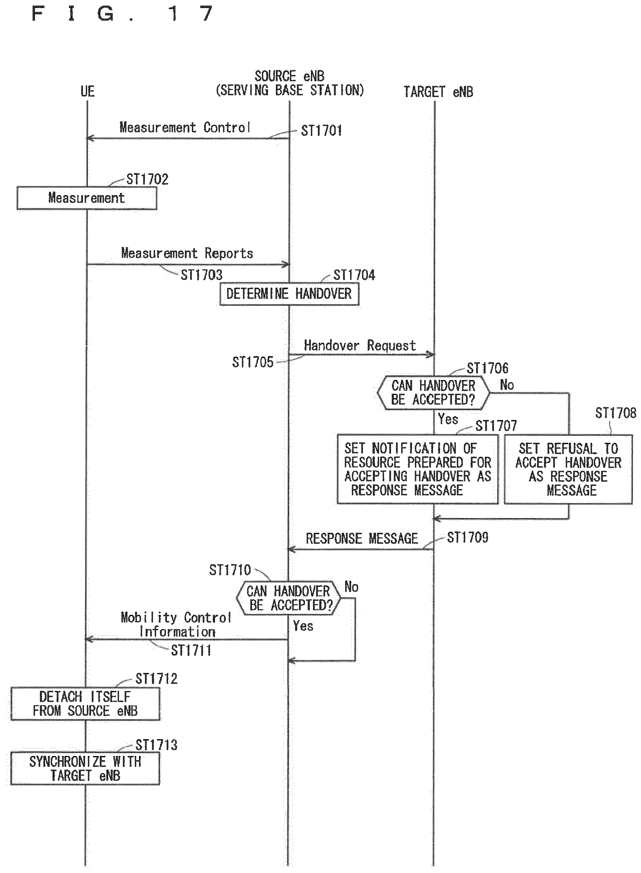

The handover method disclosed in Non-Patent Document 1 is described with reference to FIG. 17. FIG. 17 is a diagram showing the sequence of a communication system regarding the handover method disclosed in Non-Patent Document 1.

In Step ST1701, a source eNB being a serving base station notifies a user equipment (UE) in a connected state of measurement control information.

In Step ST1702, the user equipment measures the cell in accordance with the measurement control information received in Step ST1701.

In Step ST1703, the user equipment notifies the source eNB being a serving base station of the measurement reports in accordance with the measurement control information received in Step ST1701.

In Step ST1704, the source eNB being a serving base station performs the determination process regarding handover (hereinafter, referred to as "handover determination process" in some cases) in consideration of the measurement reports received in Step ST1703. A specific example of the contents of the handover determination process includes the determination whether or not to perform handover and determination of a base station (hereinafter, also referred to as "target eNB") being a handover destination.

In Step ST1705, the source eNB notifies the target eNB determined in Step ST1704 of a handover request.

In Step ST1706, the target eNB that has received the handover request in Step ST1705 judges whether or not it can accept handover. The target eNB moves to Step ST1707 in a case of judging that it can accept handover in Step ST1706 or moves to Step ST1708 in a case of judging that it cannot accept handover in Step ST1706.

In Step ST1707, the target eNB sets the notification of a resource prepared for the acceptance of handover as a response message to the handover request from the source eNB.

In Step ST1708, the target eNB sets a refusal to accept handover as the response message to the handover request from the source eNB.

In Step ST1709, the target eNB notifies the source eNB of the response message to the handover request.

In Step ST1710, the source eNB judges whether or not the target eNB can accept handover. The response message to the handover request received from the target eNB in Step ST1709 can be used in this judgment. The source eNB moves to Step ST1711 in a case of judging that the target eNB can accept handover in Step ST1710 or does not execute Step ST1711 in a case of judging that the target eNB cannot accept handover in Step ST1710.

In Step ST1711, the source eNB notifies the user equipment that has notified the measurement reports in Step ST1703 of the mobility control information.

In Step ST1712, the user equipment detaches itself from the source eNB. In Step ST1713, the user equipment synchronizes with the target eNB in accordance with the mobility control information received in Step ST1711.

A first problem to be solved in a second modification of the first embodiment is described below. In a case where the first embodiment described above is used, the following problem arises. Considered here is the case in which a user equipment in a connected state is an MTCD. A cell that restricts MTCDs is located in the neighborhood of the serving base station of the MTCD. For example, an MTCD is prohibited from handover as a restriction.

In the handover method shown in FIG. 17, the target eNB does not judge whether or not it can accept handover in accordance with the MTCD restriction information of the cell in the judgment as to whether or not it can accept handover of Step ST1706. Therefore, even in a case of restricting MTCDs, the target eNB judges that it can accept handover if other conditions are satisfied. In that case, as shown in Step ST1711 of FIG. 17 described above, the serving base station notifies the MTCD of the mobility control information in which a cell that restricts MTCDs is a target cell.

The MTCD is notified of an instruction to handover to the cell that restricts MTCDs from the serving cell. The MTCD cannot judge whether to handle the concerned cell as a target cell being a handover destination or to comply with the MTCD restriction information notified from the cell, in accordance with the instruction from the serving cell. As described above, a problem of unstable communication system occurs.

A solution to the first problem (hereinafter, also referred to as "first solution") in the second modification of the first embodiment is described below. A portion different from the solution in the first embodiment is mainly described as to the solution, and the portion that is not described here is as in the first embodiment.

The target eNB judges whether or not it can accept handover in accordance with the MTCD restriction information of the cell for the user equipment. The target eNB may judge whether or not it can accept handover in accordance with the MTCD restriction information of the cell for the MTCD. Meanwhile, the target eNB may not judge whether it can accept handover in accordance with the MTCD restriction information of the cell for the normal UE.

The following six (1) to (6) are disclosed as specific examples in which the target eNB judges whether it can accept handover.

(1) Specific example in a case where the MTCD restriction information indicates whether or not an MTCD is allowed to access a cell. In a case where the MTCD restriction information indicates that the MTCD is allowed to access a cell, it is judged that the target eNB can accept handover. In a case where the MTCD restriction information indicates that the MTCD is not allowed to access a cell, it is judged that the target eNB cannot accept handover.

(2) Specific example in a case where the MTCD restriction information indicates whether or not the selection as a suitable cell can be made. In a case where the MTCD restriction information indicates that the selection as a suitable cell can be made, it is judged that the target eNB can accept handover. In a case where the MTCD restriction information indicates that the selection as a suitable cell cannot be made, it is judged that the target eNB cannot accept handover.

(3) Specific example in a case where the MTCD restriction information indicates whether or not the selection as an acceptable cell can be made. In a case where the MTCD restriction information indicates that the selection as an acceptable cell can be made, it is judged that the target eNB can accept handover. In a case where the MTCD restriction information indicates that the selection as an acceptable cell cannot be made, it is judged that the target eNB cannot accept handover.

(4) Specific example in a case where the MTCD restriction information indicates whether or not a cell is prohibited from becoming a candidate for cell selection and reselection. In a case where the MTCD restriction information indicates that a cell is not prohibited from becoming a candidate for cell selection and reselection, it is judged that the target eNB can accept handover. In a case where the MTCD restriction information indicates that the MTCD is prohibited from becoming a candidate for cell selection and reselection, it is judged that the target eNB cannot accept handover.

(5) Specific example in a case where the MTCD restriction information indicates that the MTCD is prohibited from roaming. In a case where the MTCD restriction information indicates that the MTCD is not prohibited from roaming, it is judged that the target eNB can accept handover. In a case where handover to the cell is not roaming and the MTCD restriction information indicates that the MTCD is prohibited from roaming, it is judged that the target eNB can accept handover. In a case where handover to the cell is roaming and the MTCD restriction information indicates that the MTCD is prohibited from roaming, it is judged that the eNB cannot accept handover.

(6) Specific example in a case where the MTCD restriction information indicates whether or not the MTCD is prohibited from handover. In a case where the MTCD restriction information indicates that the MTCD is not prohibited from handover, it is judged that the target eNB can accept handover. In a case where the MTCD restriction information indicates that the MTCD is prohibited from handover, it is judged that the target eNB cannot accept handover.

A specific example of the method in which a source eNB judges whether or not a user equipment is an MTCD is disclosed below. In 3GPP, the user equipment context (UE context) includes an MTCD indicator (3GPP TS23.401 V10.1.0 (hereinafter, referred to as "Non-Patent Document 11")). The target eNB may judge whether or not the user equipment is an MTCD with the use of the user equipment context received from the source eNB or MME in a handover preparation process. Therefore, the source eNB judges that a user equipment is an MTCD in a case where the user equipment context includes an MTCD indicator or judges that a user equipment is a normal UE in a case where the user equipment context (UE context) does not include an MTCD indicator.

According to the first solution in the second modification of the first embodiment described above, the target eNB judges whether or not it can accept handover in accordance with the MTCD restriction information of the cell, whereby it is possible to prevent the MTCD from being notified, from a serving cell, of the instruction to handover to the cell that restricts MTCDs. Therefore, a communication system can be prevented from becoming unstable.

The following problem arises even in a case where the first solution in the second modification of the first embodiment described above is used. Considered here is the case in which a user equipment in a connected state is an MTCD. A cell that restricts MTCDs is located in the neighborhood of the serving base station of the MTCD. For example, an MTCD is prohibited from handover as a restriction.

Even in a case where the first solution in the second modification of the first embodiment described above is used, a source eNB being a serving base station does not perform the handover determination process in accordance with the MTCD restriction information of the cell. Accordingly, even in a case where a target eNB restricts MTCDs, the source eNB notifies the handover request of Step ST1705. In a case where the target eNB restricts MTCDs, this handover request is always refused. As described above, an unnecessary notification of a handover request, which always results in a refusal of handover because a target eNB restricts MTCDs, occurs in the source eNB.

The occurrence of unnecessary notification of a handover request in a source eNB results in that the target eNB unnecessarily receives a handover request, and that the target eNB unnecessarily judges whether or not to accept handover. This causes a problem that the processing load of the base station increases and a control delay in handover increases (hereinafter, referred to as "second problem" in some cases).

A solution (hereinafter, also referred to as "second solution") to the second problem in the second modification of the first embodiment is described below. A portion different from the solution in the first embodiment is mainly described as to the solution, and the portion that is not described here is as in the first embodiment.

A user equipment notifies a serving base station of the MTCD restriction information of an object cell for measurement reports. The serving base station that has received the MTCD restriction information performs the handover determination process in consideration of the restriction shown in the MTCD restriction information of an object cell for measurement reports. For example, the serving base station that has received the MTCD restriction information may determine a target cell in consideration of a restriction shown in the MTCD restriction information of an object cell for measurement reports.

Alternatively, the serving base station that has received the MTCD restriction information may perform the handover determination process on the MTCD in consideration of the restriction shown in the MTCD restriction information of an object cell for measurement reports. For example, the serving base station that has received the MTCD restriction information may determine a target cell for an MTCD in consideration of a restriction shown in the MTCD restriction information of an object cell for measurement reports. In this case, the serving base station performs the handover determination process on the MTCD to be restricted by the MTCD restriction information, in consideration of the restriction shown in the MTCD restriction information. It suffices that the serving base station performs the handover determination process on a normal UE not to be restricted by the MTCD restriction information, assuming that the normal UE is not restricted by the MTCD restriction information. This enables to reduce the processing load of the serving base station on the normal UE.

Disclosed below is a specific example of the method in which a serving base station judges whether or not a user equipment is an MTCD. In 3GPP, a user equipment context (UE context) includes an MTCD indicator (see Non-Patent Document 11). Therefore, the serving base station judges that a user equipment is an MTCD in a case where the user equipment context (UE context) includes an MTCD indicator or judges that a user equipment is a normal UE in a case where the user equipment context (UE context) does not include an MTCD indicator.

The following two (1) and (2) are disclosed as specific examples of the cell from which a user equipment receives the MTCD restriction information in measurement; (1) cell to be measured, and (2) object cell for measurement reports. In a case of the specific example (2), the number of cells that need to receive the MTCD restriction information is smaller than that of the specific example (1). This enables to reduce the processing load of a user equipment, which results in lower power consumption of a user equipment.

The following three (1) to (3) are disclosed as specific examples of a user equipment that notifies a serving base station of the MTCD restriction information of an object cell for measurement reports.

(1) All user equipments.

(2) Only MTCD. A normal UE may not be required to notify the MTCD restriction information. Accordingly, only an MTCD to be restricted by the MTCD restriction information notifies the MTCD restriction information. Therefore, the serving base station may judge that a user equipment that does not notify the MTCD restriction information to be a normal UE and perform the handover determination process, assuming that the user equipment is not restricted by an object cell for measurement reports. The normal UE needs not to receive the MTCD restriction information and notify the serving base station of the MTCD restriction information. This enables to reduce the processing load of a normal UE, which results in lower power consumption of a normal UE.

(3) In a case where the serving base station requests the notification of the MTCD restriction information of an object cell for measurement reports, the user equipment receives and notifies the MTCD restriction information. Accordingly, in a case where, for example, a serving cell does not perform the handover determination process in consideration of a restriction shown in the MTCD restriction information, a user equipment needs not to make an unnecessary notification. Therefore, it is possible to construct a flexible communication system. The serving base station may request a notification of the MTCD restriction information over the measurement control information. This enables a user equipment to process parameters regarding measurements at the same time, and thus, the process by the user equipment can be simplified.

The following three (1) to (3) are disclosed as specific examples of the method in which a user equipment notifies a serving cell of the MTCD restriction information.

(1) The MTCD restriction information is notified with measurement reports. The MTCD restriction information may be notified at the same time as the measurement reports or reported as a part of the parameters included in the measurement reports. This enables a serving base station to process the parameters regarding the handover determination process at the same time, and thus, the process of the serving base station can be simplified.

(2) The MTCD restriction information is notified together with the notification of the proximity indication, which is disclosed in Non-Patent Document 2. The MTCD restriction information may be notified at the same time as the notification of a proximity indication or may be reported as a part of the parameters in the proximity indication. The proximity indication indicates that a user equipment enters or leaves the vicinity of the cell listed in the whitelist of the user equipment.

Therefore, through the notification of the proximity indication and the notification of the MTCD restriction information, the serving cell can know that a user equipment is located in the neighborhood of the cell with which the user equipment has been registered and know the MTCD restriction information of the cell. As a result, the serving cell can process the parameters regarding the handover determination process at the same time, whereby the process of the serving base station can be simplified.

The MTCD restriction information may be notified with the indicator of the concerned cell (also referred to as cell identity). The cell indicator may be PCI or GCI. Through notification with the cell indicator, the serving cell can judge from which cell the MTCD restriction information is derived even in a case of being notified of the proximity indication for a plurality of cells.

(3) The MTCD restriction information is notified as a new message different from the existing measurement reports and proximity indication. As a specific example, the MTCD restriction information is notified periodically. The MTCD restriction information may be notified with the cell indicator. The cell indicator may be PCI or GCI. Through notification with the cell indicator, a serving base station can judge from which cell the MTCD restriction information is derived.

The following six (1) to (6) are disclosed as specific examples of the handover determination process by the serving base station that has received the MTCD restriction information, in which the restriction shown in this MTCD restriction information is taken into consideration.

(1) Specific example in a case where the MTCD restriction information indicates whether or not an MTCD is allowed to access a cell. In a case where the MTCD restriction information indicates that an MTCD is allowed to access a cell, it is judged that handover with the cell being a target cell is allowed. It may be judged that the cell can be selected as a target cell. In a case where the MTCD restriction information indicates that an MTCD is not allowed to access a cell, it is judged that handover with the cell being a target cell is not allowed. It may be judged that the cell cannot be selected as a target cell.

(2) Specific example in a case where the MTCD restriction information indicates whether or not a cell can be selected as a suitable cell. In a case where the MTCD restriction information indicates that a cell can be selected as a suitable cell can be made, it is judged that handover with the cell being a target cell is allowed. It may be judged that the cell can be selected as a target cell. In a case where the MTCD restriction information indicates that a cell cannot be selected as a suitable cell, it is judged that handover with the cell being a target cell is not allowed. It may be judged that the cell cannot be selected as a target cell.

(3) Specific example in a case where the MTCD restriction information indicates whether or not a cell can be selected as an acceptable cell. In a case where the MTCD restriction information indicates that a cell can be selected as an acceptable cell, it is judged that handover with the cell being a target cell is allowed. It may be judged that the cell can be selected as a target cell. In a case where the MTCD restriction information indicates that a cell cannot be selected as an acceptable cell, it is judged that handover with the cell being a target cell is not allowed. It may be judged that the cell cannot be selected as a target cell.

(4) Specific example in a case where the MTCD restriction information indicates whether or not a cell is prohibited from becoming a candidate for cell selection and reselection. In a case where the MTCD restriction information indicates that a cell is not prohibited from becoming a candidate for cell selection and reselection, it is judged that handover with the cell being a target cell is allowed. It may be judged that the cell can be selected as a target cell. In a case where the MTCD restriction information indicates that a cell is prohibited from becoming a candidate for cell selection and reselection, it is judged that handover with the cell being a target cell is not allowed. It may be judged that the cell cannot be selected as a target cell.

(5) Specific example in a case where the MTCD restriction information indicates whether or not an MTCD is prohibited from roaming to a cell. In a case where the MTCD restriction information indicates that an MTCD is not prohibited from roaming to a cell, it is judged that handover with the cell being a target cell is allowed. It may be judged that the cell can be selected as a target cell. In a case where handover to the cell is not roaming and the MTCD restriction information indicates that an MTCD is prohibited from roaming to a cell, it is judged that handover with the cell being a target cell is allowed.

It may be judged that the cell can be selected as a target cell. In a case where handover to the cell is roaming and the MTCD restriction information indicates that an MTCD is prohibited from roaming to a cell, it is judged that handover with the cell being a target cell is not allowed. It may be judged that the cell cannot be selected as a target cell.

(6) Specific example in a case where the MTCD restriction information indicates whether or not an MTCD is prohibited from handover to a cell. In a case where the MTCD restriction information indicates that an MTCD is not prohibited from handover to a cell, it is judged that handover with the cell being a target cell is allowed. It may be judged that the cell cannot be selected as a target cell. In a case where the MTCD restriction information indicates that an MTCD is prohibited from handover to a cell, it is judged that handover with the cell being a target cell is not allowed. It may be judged that the cell cannot be selected as a target cell.

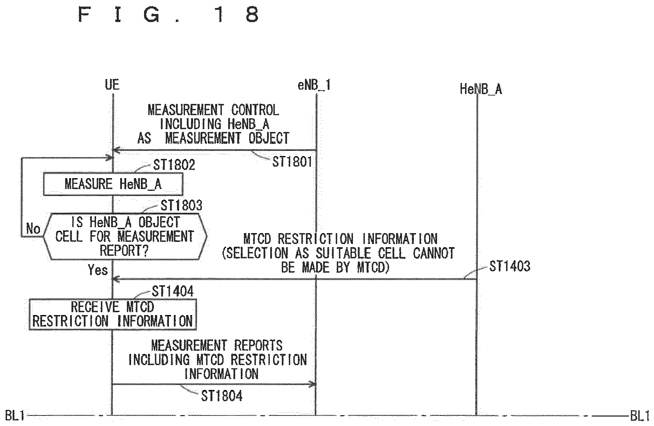

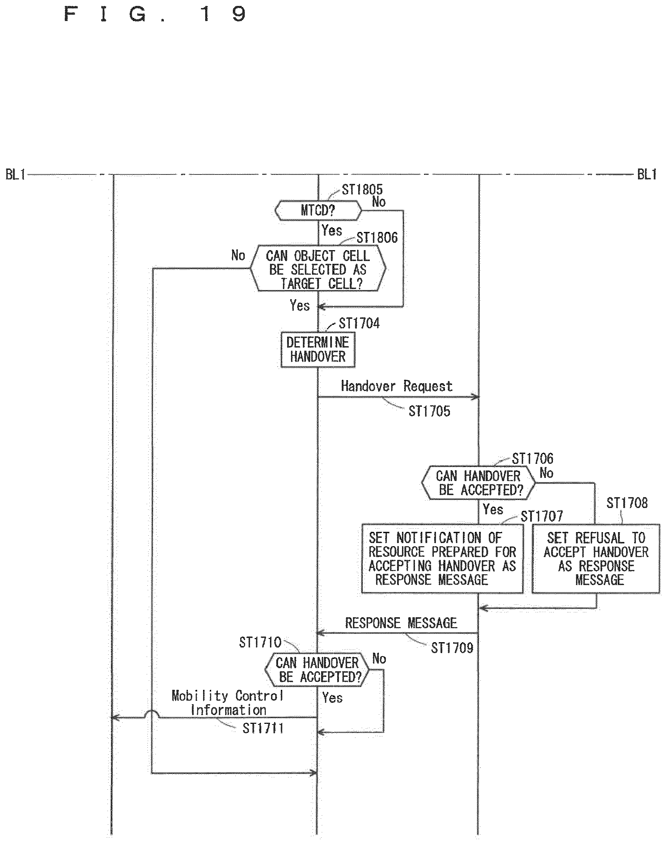

Next, a specific example of the sequence of a communication system as to the second solution in the second modification of the first embodiment is described with reference to FIG. 18 and FIG. 19. FIG. 18 and FIG. 19 are diagrams showing the sequence of the communication system as to the second solution in the second modification of the first embodiment. FIG. 18 and FIG. 19 are continuous from each other at a position of a boundary BL1. The sequence shown in FIG. 18 and FIG. 19 is similar to the sequences shown in FIG. 14 and FIG. 17, and thus, the same steps are denoted by the same step numbers and the common description is not given here.

In this operation example, an MTCD which takes an eNB_1 as a source eNB being a serving base station moves so as to approach the HeNB_A. In addition, the measurement control information for a user equipment includes the HeNB_A as a measurement object. A case where the selection as a suitable cell cannot be made by an MTCD is disclosed as a specific example of the restriction shown in the MTCD restriction information of the HeNB A.

Further, an object cell for measurement reports is disclosed as a specific example of the cell from which a user equipment receives the MTCD restriction information in measurement. Further, a case in which the MTCD restriction information is reported as a part of the parameters in the measurement reports is disclosed as a specific example of the method in which a user equipment notifies the serving cell of the MTCD restriction information. Further, a case in which the serving base station that has received the MTCD restriction information performs the handover determination process on the MTCD in consideration of the restriction shown in the MTCD restriction information of an object cell for measurement reports.

In Step ST1801, the eNB_1notifies the user equipment (UE) in a connected state of the measurement control information. The measurement control information includes the HeNB_A as a measurement object. The measurement control information may include the carrier frequency of the HeNB_A as a measurement object.

In Step ST1802, the user equipment measures the cell in accordance with the measurement control information received in Step ST1801. The user equipment measures the HeNB_A in accordance with the measurement control information. The user equipment may measure the carrier frequency of the HeNB A in accordance with the measurement control information.

In Step ST1803, the user equipment judges whether or not the cell measured is an object cell for measurement reports. In this measurement, the measurement control information received in Step ST1801 is used. In this operation example, in Step ST1803, the user equipment judges whether or not the HeNB_A is an object cell for measurement reports. The user equipment moves to Step ST1404 in a case of judging that the HeNB_A is an object cell for measurement reports or returns to Step ST1802 in a case of judging that the HeNB_A is not an object cell for measurement reports.

In this operation example, the user equipment moves so as to approach the HeNB_A, whereby the HeNB_A is judged to be an object cell for measurement reports. Accordingly, the user equipment judges that the HeNB_A is an object cell for measurement reports in Step ST1803, and moves to Step ST1404.

After the process of Step ST1404, in Step ST1804, the user equipment notifies the eNB_1 of the measurement reports in accordance with the measurement control information received in Step ST1801. In this operation example, the user equipment notifies the eNB_1 of the measurement reports of the HeNB_A. The measurement reports include the MTCD restriction information of the HeNB_A. The "selection as a suitable cell cannot be made by an MTCD" is included as the MTCD restriction information of the HeNB A.

In Step ST1805, the eNB_1 judges whether or not the user equipment that has notified the measurement reports in Step ST1804 is an MTCD. In this judgment, the MTCD indicator in the user equipment context (UE context) may be used. The eNB_1 moves to Step ST1806 in a case of judging that the user equipment is an MTCD in Step ST1805 or moves to Step ST1704 in a case of judging that the user equipment is not an MTCD in Step ST1805. Through the process of Step ST1805, it is possible to perform the handover determination process on an MTCD by differentiating from a normal UE in accordance with the restriction shown in the MTCD restriction information.

In Step ST1806, the eNB_1 judges whether or not an object cell for measurement reports can be selected as a target cell. A specific example of this judgment is disclosed below. The eNB_1 makes a judgment based on the MTCD restriction information of an object cell for measurement reports, which is included in the measurement reports received in Step ST1804.

Specifically, in a case where the MTCD restriction information indicates that a cell can be selected as a suitable cell by an MTCD, the eNB_1 judges that the cell can be selected as a target cell. In a case where the MTCD restriction information indicates that a cell cannot be selected as a suitable cell by an MTCD, the eNB_1 judges that the cell cannot be selected as a target cell.

The eNB_1 moves to Step ST1704 in a case of judging that the cell can be selected as a target cell in Step ST1806 or does not execute the processes of Step ST1704 and Step ST1705 in a case of judging that the cell cannot be selected as a target cell in Step ST1806.

In a case of not executing the processes of Step ST1704 and Step ST1705, the eNB_1 does not receive a response message to the handover request from the HeNB_A in Step ST1709. Accordingly, in Step ST1711, the eNB_1 does not notify the user equipment that has notified the measurement reports in Step ST1804 of the mobility control information.

In this operation example, the eNB_1 receives the "selection as a suitable cell cannot be made by an MTCD" as the MTCD restriction information of the HeNB_A being an object cell for measurement reports in Step ST1804. Therefore, the eNB_1 judges that the cell cannot be selected as a target cell in Step ST1806, and does not execute the processes of Step ST1704 and Step ST1705.

The execution of the process of Step ST1806 as described above enables to reduce the unnecessary notification of a handover request in which handover is always refused because the target eNB restricts MTCDs.

The second solution in the second modification of the first embodiment can achieve the following effects. The serving base station can perform the handover determination process in accordance with the MTCD restriction information of a candidate cell for handover destination. This enables to reduce unnecessary notification of a handover request in which handover is always refused because a candidate cell for handover destination restricts MTCDs.

As a result of the reduction of unnecessary notification of a handover request in the serving cell, it is possible to reduce unnecessary reception of a handover request by the target eNB and unnecessary judgment as to whether or not handover can be accepted by the target eNB. This results in a reduction of the processing load of the base station, whereby a control delay in handover can be reduced.

The serving base station can use the received MTCD restriction information of an object cell for measurement reports for the following purpose. In a case where it is judged from the MTCD restriction information that the MTCD cannot select the cell as a target cell, if a user equipment that has reported the measurements is an MTCD, the serving base station adjusts the measurement control information of the user equipment. The serving base station may adjust the measurement control information for an MTCD among user equipments being served thereby.

The serving base station may adjust the measurement control information for an MTCD in a connected state among user equipments being served thereby. As a specific example of the adjustment of the measurement control information, the cell is removed from the measurement object. This enables to reduce the measurements for the cells that cannot be selected as a target cell by an MTCD. This results in lower power consumption of an MTCD.

The following two (1) and (2) are disclosed as specific examples of the method of removing a cell from the measurement object. (1) In a case where a cell that restricts MTCDs is included in the list of the measurement object cells being measured (also referred to as listed cells or neighboring cells), which is included in the measurement control information disclosed in Non-Patent Document 2, the cell is deleted from the above-mentioned list. (2) A cell that restricts MTCDs is included in a black list disclosed in Non-Patent Document 2. The blacklisted cells are not considered in event evaluation or measurement reporting.

There is no differentiation between the MTCD and normal UE in the existing black list. The black list for MTCD and the black list for normal UE may be set apart from each other in the present modification. This enables the base station to differentiate between the normal UE and MTCD and restrict the operation with the use of the black list.

Further, the present modification is applicable to the ACB information broadcast from each cell, which is disclosed in Non-Patent Document 2. The following two examples (1) and (2) are disclosed as application examples. The information indicated by the ACB information needs not to be the MTCD restriction information described in the first embodiment and the first modification of the first embodiment.

(1) The user equipment notifies the serving base station of the ACB information of the object cell for measurement reports. The serving base station that has received the ACB information performs the handover determination process in consideration of the ACB information of the object cell for measurement reports. The serving base station that has received the ACB information may determine a target cell in consideration of the restriction shown in the ACB information of the object cell for measurement reports.

A specific example of the handover determination process is disclosed below. The cell whose access is not restricted in the ACB information judges that handover with this cell being a target cell is allowed. It may be judged that this cell can be selected as a target cell. The cell whose access is restricted in the ACB information judges that handover with this cell being a target cell is not allowed. It may be judged that this cell cannot be selected as a target cell.

The following two (a1) and (a2) are disclosed as specific examples of the ACB information in a case where access is restricted in the ACB information; (a1) case in which the access probability is "0", and (a2) case where the access probability is low or the access probability is lower than a threshold.

According to the application example (1), the serving base station can perform the handover determination process in accordance with the ACB information of a candidate cell for handover destination. Therefore, it is possible to reduce unnecessary notification of a handover request in which handover is always refused because a candidate cell for handover destination restricts access. As a result of the reduction of the unnecessary notification of a handover request in the serving cell, it is possible to reduce unnecessary reception of a handover request by a target eNB and unnecessary judgment as to whether or not handover can be accepted by a target eNB. This results in a reduction of the processing load of the base station, whereby a control delay in handover can be reduced.

(2) In a case where it is judged from the ACB information that the cell cannot be selected as a target cell, the measurement control information of the user equipment is adjusted. The serving base station may adjust the measurement control information of a user equipment being served thereby. The serving base station may adjust the measurement control information of a user equipment in a connected state among user equipments being served thereby.

As a specific example of the adjustment of the measurement control information, the cell is removed from the measurement object. This enables to reduce the measurements on a cell that cannot be selected as a target cell, assuming that access is restricted. This results in lower power consumption of a user equipment.

The following two (1) and (2) are disclosed as specific examples of the method of removing a cell from the measurement object. (1) In a case where a cell that restricts access is included in the list of the measurement object cells being measured (also referred to as listed cells or neighboring cells), which is included in the measurement control information disclosed in Non-Patent Document 2, the cell is deleted from the above-mentioned list. (2) A cell that restricts access is included in a black list disclosed in Non-Patent Document 2. The blacklisted cells are not considered in event evaluation or measurement reporting.

The present modification is not limited to the application example described above and may be used in other application examples. Alternatively, the present modification can be used in combination with the first embodiment or the first modification of the first embodiment, including other application examples.

Third Modification of First Embodiment

A third modification of the first embodiment discloses another solution to the same problem as that of the second modification of the first embodiment. A solution in the third modification of the first embodiment is described below. In the present modification, a portion different from the solutions in the first embodiment and the second modification of the first embodiment is mainly described, and the portion that is not described here is as in the first embodiment and the second modification of the first embodiment.

The user equipment that has received the MTCD restriction information makes a judgment in consideration of the restriction shown in the MTCD restriction information. Specifically, the user equipment judges whether or not the own user equipment is restricted by the cell from the MTCD restriction information of an object cell for measurement reports. The user equipment notifies the serving base station of the judgment results. The serving base station that has received the judgment results performs the handover determination process in consideration of the judgment results of an object cell for measurement reports. The serving base station that has received the judgment results may determine a target cell in consideration of the judgment results of an object cell for measurement reports.

The following three (1) to (3) are disclosed as specific examples of the judgment results. (1) Information as to whether or not a user equipment is restricted. Only that a user equipment is restricted may be notified, or only that a user equipment is not restricted may be notified. (2) Information as to whether or not a user equipment can perform handover. Only that a user equipment can perform handover may be notified, or only that a user equipment cannot perform handover may be notified. (3) Information as to whether or not a cell can be selected as a target cell. Only that a cell can be selected as a target cell may be notified, or only that a cell cannot be selected as a target cell may be notified.

In a case of judging to be restricted, in a case of judging to be unable to perform handover, or in a case of judging that a cell cannot be selected as a target cell, the user equipment may not need to report measurements. In that case, the user equipment may notify only the judgment results or may not even notify the judgment results. Accordingly, radio resources can be used effectively.

The "specific example of the method of notifying a serving cell of the MTCD restriction information" in the second modification of the first embodiment can be used as a specific example of the method in which a user equipment notifies a serving cell of the judgment results as to whether or not it is restricted.

The "specific examples of the handover determination process by the serving base station that has received the MTCD restriction information, in which the restriction shown in this MTCD restriction information is taken into consideration" in the second modification of the first embodiment can be used as a specific example of the judgment in consideration of the restriction shown in the MTCD restriction information of the user equipment that has received the MTCD restriction information.

The following three (1) to (3) are disclosed as specific examples of the user equipment that notifies the serving base station of the judgment results as to whether or not the own user equipment is restricted by an object cell for measurement reports.

(1) All user equipments.

(2) Only MTCD. The normal UE may not be required to notify the judgment results. As a result, only the MTCD that is restricted by the MTCD restriction information notifies the judgment results. Accordingly, the serving base station may judge that the user equipment that does not notify the MTCD restriction information to be a normal UE and perform the handover determination process, assuming that it is not restricted by an object cell for measurement reports. Therefore, a normal UE needs not to receive the MTCD restriction information, judge whether or not the own user equipment is restricted, and notify the serving base station. This enables to reduce the processing load of a normal UE, which results in lower power consumption of the normal UE.

(3) The user equipment receives the MTCD restriction information and notifies the judgment results as to whether or not the own user equipment is restricted in a case where the serving base station requests an object cell for measurement reports to notify the judgment results as to whether or not the own user equipment is restricted. As a result, in a case where, for example, a serving cell does not perform the handover determination process in consideration of the restriction shown in the MTCD restriction information, the user equipment needs not to make an unnecessary notification.

Therefore, it is possible to construct a flexible communication system. The serving base station may request a notification of the MTCD restriction information over the measurement control information. As a result, the user equipment can process the parameters regarding measurements at the same time, whereby the process of the user equipment can be simplified.

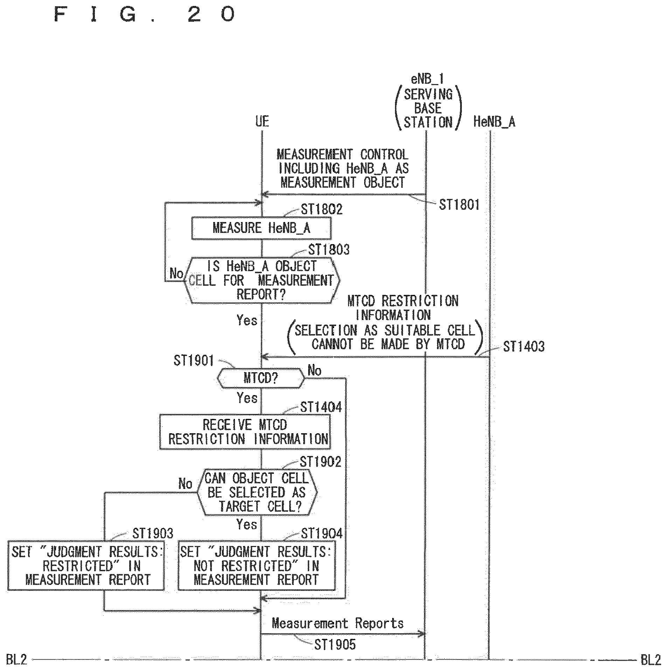

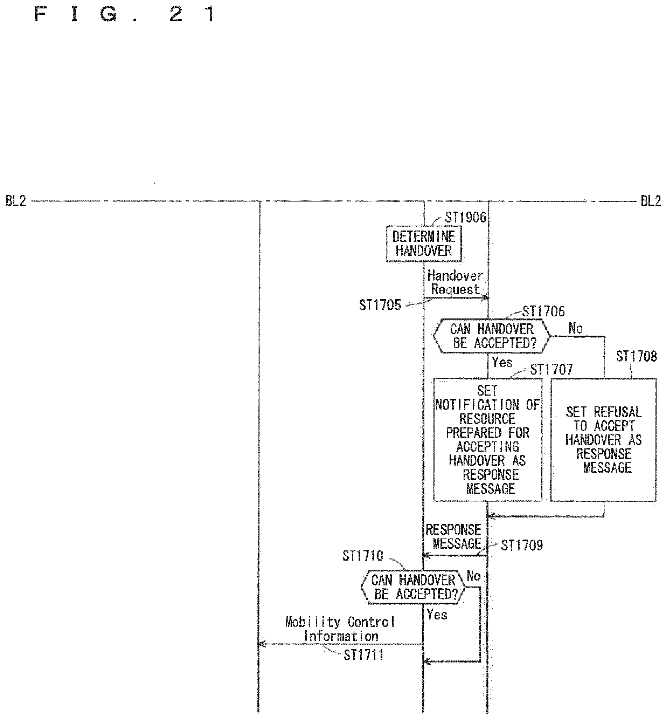

Next, a specific example of the sequence of a communication system in the third modification of the first embodiment is described with reference to FIG. 20 and FIG. 21. FIG. 20 and FIG. 21 are diagrams showing the sequence of the communication system in the third modification of the first embodiment. FIG. 20 and FIG. 21 are continuous from each other at a position of a boundary BL2. The sequence shown in FIG. 20 and FIG. 21 is similar to the sequences shown in FIG. 14 and FIG. 17 to FIG. 19, and thus, the same steps are denoted by the same step numbers and the common description is not given here.

In this operation example, the MTCD that takes the eNB_1 as a source eNB being a serving base station moves so as to approach the HeNB_A. The measurement control information for the user equipment includes the HeNB_A as a measurement object. A case in which the selection as a suitable cell cannot be made by an MTCD is disclosed as a specific example of the restriction shown in the MTCD restriction information of the HeNB_A. Further, an object cell for measurement reports is disclosed as a specific example of the cell from which a user equipment receives the MTCD restriction information in measurement.

Further, a case of an MTCD is disclosed as a specific example of the user equipment that notifies the serving base station of the judgment results as to whether or not the own user equipment is restricted by an object cell for measurement reports. Further, a case in which the MTCD restriction information is reported as a part of the parameters in the measurement reports is disclosed as a specific example of the method in which a user equipment notifies a serving cell of the judgment results as to whether or not the own user equipment is restricted by an object cell for measurement reports.

After the processes of Step ST1801 to Step ST1803 and Step ST1403 are performed as described above, in Step ST1901, the user equipment judges whether or not the own user equipment is an MTCD. The MTCD indicator being the information indicating that the user equipment is an MTCD, which is stored in a USIM or the like, may be used in this judgment. The user equipment moves to Step ST1404 in a case of judging that the own user equipment is an MTCD in Step ST1901 or moves to Step ST1905 in a case of judging that the own user equipment is not an MTCD in Step ST1901. Through the process of Step ST1901, the normal UE needs not to receive the MTCD restriction information, judge whether or not the own user equipment is restricted, and notify the serving base station.

After the process of Step ST1404, in Step ST1902, the user equipment judges whether or not an object cell for measurement reports can be selected as a target cell. A specific example of the judgment is disclosed below.

The user equipment makes a judgment based on the MTCD restriction information of the object cell for measurement reports received in Step ST1404. In a case where the MTCD restriction information indicates that an MTCD can select a cell as a suitable cell, the user equipment judges that the cell can be selected as a target cell. In a case where the MTCD restriction information indicates that an MTCD cannot select a cell as a suitable cell, the user equipment judges that the cell cannot be selected as a target cell.

The user equipment moves to Step ST1904 in a case of judging that an object cell can be selected as a target cell in Step ST1902 or moves to Step ST1903 in a case of judging that an object cell cannot be selected as a target cell in Step ST1902.

In this operation example, the user equipment receives that the "selection as a suitable cell cannot be made by an MTCD" in Step ST1404 as the MTCD restriction information of the HeNB A being an object cell for measurement reports. Therefore, the user equipment judges that the cell cannot be selected as a target cell in Step ST1902 and moves to Step ST1903.

In Step ST1903, the user equipment sets the judgment results showing that the own user equipment is restricted in the measurement reports, for the object cell for measurement reports.

In Step ST1904, the user equipment sets the judgment results showing that the own user equipment is not restricted in the measurement reports, for the object cell for measurement reports.

In Step ST1905, the user equipment notifies the eNB_1 of the measurement reports in accordance with the measurement control information received in Step ST1801. The measurement reports include the judgment results as to whether or not the own user equipment is restricted by the object cell for measurement reports. In this operation example, the user equipment notifies the measurement reports of the HeNB_A. The measurement reports include the judgment results showing that the own user equipment is restricted by the HeNB_A.

In Step ST1906, the eNB_1 being a serving base station performs the handover determination process in consideration of the measurement reports received in Step ST1905. In this operation example, in Step ST1905, the eNB_1 receives the judgment results that the user equipment is restricted by the HeNB_A from the user equipment. In a case where the eNB_1 does not determine handover with the HeNB_A being a target cell based on the judgment results, the eNB_1 does not execute the process of Step ST1705. Through the process of Step ST1906, it is possible to reduce the unnecessary notification of a handover request in which handover is always refused because the target eNB restricts MTCDs.

The third modification of the first embodiment can achieve the following effects in addition to the effects of the second modification of the first embodiment. The serving base station is not required to perform the handover determination process in consideration of the restriction shown in the MTCD restriction information of the object cell for measurement reports. This enables to reduce the processing load of the serving base station.

The present modification is not limited to the application example described above and may be used in other application examples. Alternatively, the present modification can be used in combination with the first embodiment, the first modification of the first embodiment, or the second modification of the first embodiment, including other application examples.

Fourth Modification of First Embodiment

A fourth modification of the first embodiment discloses another solution to the same problem as that of the second modification of the first embodiment. A solution in the fourth modification of the first embodiment is described below. In the present modification, a portion different from the solutions in the first embodiment and the second modification of the first embodiment is mainly described, and the portion that is not described here is as in the first embodiment and the second modification of the first embodiment.

The base station notifies the neighboring cells of the MTCD restriction information of the own cell. The MTCD restriction information is notified by means of the X2 interface. The cell that has received the MTCD restriction information and the measurement reports from the user equipment being served thereby performs the handover determination process in consideration of the contents of the measurement reports and the restriction shown in the MTCD restriction information of the object cell for measurement reports. Specifically, a target cell is determined in consideration of the contents of the measurement reports and the restriction shown in the MTCD restriction information of the object cell for measurement reports.

This enables to reduce the reception of, from the cell that has notified the MTCD restriction information of the own cell, the unnecessary notification of a handover request in which handover is always refused because the own cell restricts MTCDs. As described above, the base station can reduce unnecessary judgment as to whether or not it can accept handover by reducing the reception of unnecessary notification of a handover request. As a result, the processing load of the base station can be reduced, which enables to reduce a control delay in handover.

The following four (1) to (4) are disclosed as specific examples of the method in which the base station determines neighboring cells to be notified of the MTCD restriction information of the own cell. The cell that is notified of the MTCD restriction information of the own cell may be one or more.

(1) A base station makes a determination based on the measurement results of the radio environment in the neighborhood of the base station (hereinafter, referred to as "neighboring radio environment in some cases). Specific examples of the neighboring radio environment include the measurement results of the neighboring cells. Specific examples of the measurement results of the neighboring cells include the reception quality, received power, and path loss.

In a case where the reception quality or received power of the cell is equal to or larger than a predetermined threshold or is larger than the predetermined threshold in the measurement results of the neighboring radio environment, the base station selects the concerned cell as a cell to be notified of the MTCD restriction information of the own cell. Alternatively, in a case where the path loss of the cell is smaller than the predetermined threshold or is equal to or smaller than the predetermined threshold in the measurement results of the neighboring radio environment, the base station selects the concerned cell as a cell to be notified of the MTCD restriction information of the own cell.

According to this method, in a case where there is a cell having excellent reception quality in the measurement by the own cell, the base station simulates that the own cell may be selected as a handover target of a user equipment being served by a cell having excellent reception quality, and selects the cell having excellent reception quality as a notification destination of the MTCD restriction information of the own cell.

(2) A base station makes a determination based on the measurement reports from a user equipment being served by a base station. Specific examples of the measurement reports of the user equipment include the reception quality, received power, and path loss. In a case where the reception quality or received power of the cell is equal to or larger than a predetermined threshold or is larger than the predetermined threshold in the measurement reports of the user equipment, the base station selects the concerned cell as a cell to be notified of the MTCD restriction information of the own cell.

Alternatively, in a case where the path loss of the cell is smaller than the predetermined threshold or is equal to or smaller than the predetermined threshold in the measurement reports of the user equipment, the base station selects the concerned cell as a cell to be notified of the MTCD restriction information of the own cell.

While a determination is made based on the measurement results in the center of the coverage of the cell in the specific example (1) regarding the method of determining neighboring cells, in this method, a determination can be made based on the measurement results in all locations within the coverage of the cell including a cell edge. Therefore, differently from the specific example (1) regarding the method of determining neighboring cells, a base station can select the base stations that may select the own cell as a handover destination without omission.

(3) A base station determines a cell that has been selected as a handover destination (target cell in handover) of the user equipment being served by a base station as a neighboring cell to be notified of the MTCD restriction information of the own cell.

Combination of (1) to (3) above.

The following four (1) to (4) are disclosed as specific examples of the timing at which the base station notifies the neighboring cells of the MTCD restriction information of the own cell.

(1) When a base station is installed. In a case where the MTCD restriction information is determined in a static manner, only one notification is required, which enables to reduce the processing load of the base station.

(2) When the MTCD restriction information is changed. In a case where the MTCD restriction information is not determined in a static manner, a change can be reflected every time it is made. In addition, the number of notification times reduces compared with the specific example (3) regarding the timing of notification, which is described below, which enables to reduce the processing load of the base station.

(3) Periodically. This is effective in that a notification can be made to neighboring cells installed after the installment of the own cell or after the change of the MTCD restriction information of the own cell. In addition, even in a case where an error occurs during notification, accurate information can be notified through periodical notification.

(4) Combination of (1) to (3) above.

The following three (1) to (3) are disclosed as specific examples of the method of notifying the MTCD restriction information by means of the X2 interface.

(1) X2 signaling or X2 message is newly provided. X2 signaling for control may be provided. Alternatively, X2 signaling that does not require a response message from the base station on the receiver may be provided. The X2 signaling that does not require a response message is also referred to as "class 2" (see 3GPP TS36.423 V9.4.0 (hereinafter, referred to as "Non-Patent Document 12")). X2 signaling that is not associated with a user equipment may be provided. The X2 signaling that is not associated with a user equipment is also referred to as "non UE associated signaling" (see Non-Patent Document 12). The parameter to be mapped to X2 signaling to be newly provided is the MTCD restriction information. The MTCD restriction information may be notified together with the indicator of the cell. The cell indicator may be PCI or GCI.

(2) X2 signaling or X2 message is newly provided. X2 signaling for control may be provided. Alternatively, X2 signaling that requires a response message from the base station on the receiver may be provided. The X2 signaling that requires a response message is also referred to as "class 1" (see Non-Patent Document 12). Alternatively, X2 signaling that is not associated with a user equipment may be provided. The parameter to be mapped to X2 signaling to be newly provided is the MTCD restriction information. The MTCD restriction information may be notified together with the indicator of the concerned cell. The cell indicator may be PCI or GCI.

(3) Existing X2 signaling is used. Existing X2 signaling for control may be used. Alternatively, existing X2 signaling that is not associated with a user equipment may be used. The parameter needs to be added to the existing X2 signaling is the MTCD restriction information. Differently from the specific examples (1) and (2), the specific example (3) is effective in that it is not required to provide new signaling, whereby it is possible to prevent a communication system from becoming complicated. Next, the following two (b1) and (b2) are disclosed as specific examples of the existing X2 signaling.

(b1) "X2 SETUP REQUEST" (see Non-Patent Document 12). The purpose of "X2 SETUP REQUEST" is to exchange application level configuration data needed for two eNBs to interoperate correctly over the X2 interface. The already included parameter is the information specific to an eNB, such as global cell identity and PCI. Similarly, the MTCD restriction information of the base station is the information specific to a base station. Therefore, with the use of "X2 SETUP REQUEST" for notifying neighboring cells of the MTCD restriction information, the base station that receives the MTCD restriction information is capable of obtaining the information specific to the base station at once. This enables to reduce the processing load of the base station and prevent a control delay as a communication system. (b2) "eNB Configuration Update" (see Non-Patent Document 12). The purpose of "eNB Configuration Update" is to update application level configuration data needed for two eNBs to interoperate correctly over the X2 interface. The already included parameter is the information specific to an eNB, such as PCI of the eNB. Similarly, the MTCD restriction information of the base station is the information specific to a base station. Therefore, with the use of "eNB Configuration Update" for notifying neighboring cells of the MTCD restriction information, the base station that receives the MTCD restriction information is capable of obtaining the information specific to the base station at once. This enables to reduce the processing load of the base station and prevent a control delay as a communication system.

Specific examples of the handover determination process, by the serving base station that has received the MTCD restriction information, in which a restriction shown in the MTCD restriction information is taken into consideration are similar to those of the second modification of the first embodiment, which are not described here.

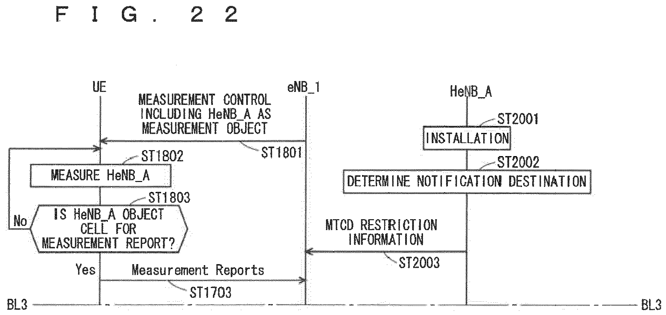

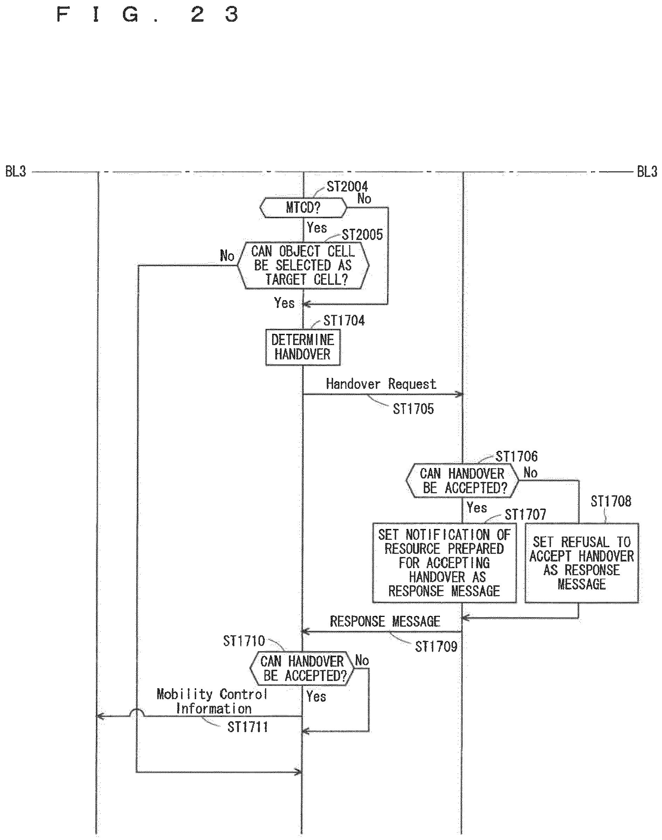

Next, a specific example of the sequence of a communication system in the fourth modification of the first embodiment is described with reference to FIG. 22 and FIG. 23. FIG. 22 and FIG. 23 are diagrams showing the sequence of the communication system in the fourth modification of the first embodiment. FIG. 22 and FIG. 23 are continuous from each other at a position of a boundary BL3. The sequence shown in FIG. 22 and FIG. 23 is similar to the sequence shown in FIG. 17 to FIG. 19, and thus, the same steps are denoted by the same step numbers and the common description is not given here.

In this operation example, an MTCD that takes the eNB_1 as a source eNB being a serving base station moves so as to approach the HeNB_A. Here, the HeNB_A selects the eNB_1 as the neighboring cell to be notified of the MTCD restriction information of the own cell. The case of installation is disclosed as a specific example of the timing at which the base station notifies the neighboring cell of the MTCD restriction information of the own cell. A case in which the selection as a suitable cell cannot be made by an MTCD is disclosed as a specific example of the restriction shown in the MTCD restriction information of the HeNB A.

The processes of Step ST1801 to Step ST1803 and Step ST1703 are performed as described above. The HeNB_A is installed in Step ST2001. In Step ST2002, the HeNB_A determines a neighboring cell as a notification destination to be notified of the MTCD restriction information of the own cell. In this operation example, the HeNB_A selects the eNB_1 as a neighboring cell to be notified of the MTCD restriction information of the own cell.

In Step ST2003, the HeNB_A notifies the eNB_1 of the MTCD restriction information. In this operation example, the "selection as a suitable cell cannot be made by an MTCD" is notified as the MTCD restriction information.

In Step ST2004, the eNB_1 judges whether or not the user equipment (UE) that has notified the measurement reports in Step ST1703 is an MTCD. The MTCD indicator in the user equipment context (UE context) may be used in the judgment. The eNB_1 moves to Step ST2005 in a case of judging that the user equipment is an MTCD in Step ST2004 or moves to Step ST1704 in a case of judging that the user equipment is not an MTCD in Step ST2004. Through the process of Step ST2004, the eNB_1 can perform the handover determination process on an MTCD by differentiating from a normal UE, in accordance with the restriction shown in the MTCD restriction information.

In Step ST2005, the eNB_1 judges whether or not an object cell for measurement reports can be selected as a target cell. A specific example of the judgment is disclosed below. The eNB_1 makes a judgment based on the measurement reports received from the user equipment (UE) in Step ST1703 and the MTCD restriction information of the object cell for measurement reports received from the neighboring cell. As a specific example, the eNB_1 makes a judgment based on the measurement reports for the HeNB_A being a neighboring cell, which has been received from the UE in Step ST1703, and the MTCD restriction information received from the HeNB_A in Step ST2003.

In a case where the MTCD restriction information shows that a cell can be selected as a suitable cell by an MTCD, the eNB_1 judges in Step ST2005 that the cell can be selected as a target cell. In a case where the MTCD restriction information shows that a cell cannot be selected as a suitable cell by an MTCD, the eNB_1 judges in Step ST2005 that the cell cannot be selected as a target cell. The eNB_1 moves to Step ST1704 in a case of judging that the cell can be selected as a target cell, or does not execute the processes of Step ST1704 and Step ST1705 in a case of judging that the cell cannot be selected as a target cell.

In this operation example, the eNB_1 receives, in Step ST2003, the "selection as a suitable cell cannot be made by an MTCD" as the MTCD restriction information of the HeNB_A being an object cell for measurement reports. Therefore, the eNB_1 judges that the concerned cell cannot be selected as a target cell in Step ST2005, and does not execute the processes of Step ST1704 and Step ST1705. Through the process of Step ST2005, it is possible to reduce an occurrence of an unnecessary notification of a handover request in which handover is always refused because the target eNB restricts MTCDs.

The fourth modification of the first embodiment can achieve the following effects in addition to the effects of the second modification of the first embodiment. Differently from the second modification of the first embodiment and the third modification of the first embodiment, it is not required to add a new function to a user equipment. Accordingly, the processing load of a user equipment can be reduced, and power consumption thereof can be reduced as well.

The prevention of the congestion caused by MTCDs at the core network side is studied in 3GPP (see Non-Patent Document 14). In that case, the base station that could obtain the MTCD restriction information of a neighboring base station may control the MTCD restriction information of the own base station, with the use of the present modification. The following three (1) to (3) are disclosed as specific examples of control.

(1) The MTCD restriction information is controlled so as to prevent an influx of MTCDs. In a case where a neighboring base station restricts MTCDs, the own cell also restricts MTCDs. In a case where a neighboring base station restricts MTCDs, an MTCD restricted by a neighboring cell is highly likely to, for example, reselect the own cell. Therefore, in a case where the neighboring base station restricts MTCDs, the own cell restricts MTCDs as well, which enables to prevent an increase of the processing load of the own cell in advance. In a case where the neighboring base station does not restrict MTCDs, MTCDs are restricted in accordance with the processing load and congested state of the own cell.

(2) The MTCD restriction information is controlled so as to accept an influx of MTCDs. In a case where a neighboring base station restricts MTCDs and the processing load of the own cell is low (is lower than the threshold), MTCDs of the own cell are not restricted. This increases a possibility that, for example, the MTCD restricted by a neighboring cell may reselect the own cell. Therefore, it is possible to keep the service for the MTCD. The same holds true for a case in which there is room for the radio resources of the own cell (smaller than the threshold).

In a case where a neighboring base station restricts MTCDs and the processing load of the own cell is high (higher than the threshold), MTCDs are restricted in accordance with the processing load and congested state of the own cell. In a case where a neighboring base station does not restrict MTCDs, MTCDs are restricted in accordance with the processing load and congested state of the own cell.

(3) The MTCD restriction information is made to match the neighboring cells. In a case where a neighboring base station restricts MTCDs, the own cell restricts MTCDs as well. MTCDs are restricted similarly to the neighboring cells. In a case where the neighboring base station does not restrict MTCDs, the own cell also does not restrict MTCDs.

The base station that could obtain the MTCD restriction information of the neighboring base station may control the MTCD restriction information of the own base station, with the present modification. The present modification may be used not for the MTCD restriction information but for the access restriction information of the base station. In this case, the base station notifies neighboring cells of the access restriction information of the own cell.

The base station that could obtain the information of the access control of the neighboring base station performs the handover determination process in consideration of the contents of the measurement reports received from a user equipment being served thereby and the restriction shown in the access restriction information of the object cell for measurement reports. Alternatively, the base station that could obtain the access restriction information of the neighboring base station may control the access restriction of the own base station. Specific examples of the access restriction information include ACB.

The present modification is not limited to the application example described above and may be used in other application examples. Alternatively, the present modification can be used in combination with the first embodiment, the first modification of the first embodiment, the second modification of the first embodiment, or the third modification of the first embodiment, including other application examples.

Fifth Modification of First Embodiment

A fifth modification of the first embodiment discloses another solution to the same problem as that of the second modification of the first embodiment. A solution in the fifth modification of the first embodiment is described below. In the present modification, a portion different from the solutions in the first embodiment, the second modification of the first embodiment, and the fourth modification of the first embodiment is mainly described, and the portion that is not described here is as in the first embodiment, the second modification of the first embodiment, and the fourth modification of the first embodiment.

The base station notifies neighboring cells of the MTCD restriction information of the own cell. The MTCD restriction information may be notified by means of an S1 interface. The cell that has received the MTCD restriction information from the base station and the measurement reports from a user equipment being served thereby performs the handover determination process in consideration of the contents of the measurement reports and the restriction shown in the MTCD restriction information of the object cell for measurement reports. For example, the cell determines a target cell in consideration of the contents of the measurement reports and the restriction shown in the MTCD restriction information of the object cell for measurement reports.

This enables to reduce the reception of, from the cell notified of the MTCD restriction information of the own cell, unnecessary notification of a handover request in which handover is always refused because the own cell restricts MTCDs. As a result of the reduction of the unnecessary reception of a handover request by the base station, an unnecessary judgment as to whether or not handover can be accepted can be reduced. Therefore, the processing load of the base station can be reduced, and a control delay in handover can be reduced.

The base station notifies the upper entity of the MTCD restriction information of the own cell. The base station may notify the upper entity of the MTCD restriction information of the own cell by means of the S1 interface. The upper entity notifies the base station of the MTCD restriction information. The upper entity may notify the base station of the MTCD restriction information by means of the S1 interface. The MTCD restriction information to be notified from the upper entity may be the information of one or more base stations.

The following two (1) and (2) are disclosed as specific examples of the upper entity; (1) MME and (2) HeNBGW.

A specific example of the timing at which the base station notifies the upper entity of the MTCD restriction information of the own cell is similar to the specific example of the timing at which the base station notifies neighboring cells of the MTCD restriction information of the own cell in the fourth modification of the first embodiment.

The following three (1) to (3) are disclosed as specific examples of the method in which the base station notifies the upper entity of the MTCD restriction information of the own cell by means of the S1 interface.

(1) S1 signaling or S1 message is newly provided. S1 signaling for control may be provided. Alternatively, S1 signaling that does not require a response message from the MME, SGSN, or the like on the receiver may be provided. S1 signaling that does not require a response message is also referred to as "class 2" (see 3GPP TS36.413 V9.3.0 (hereinafter, referred to as "Non-Patent Document 13")). Alternatively, S1 signaling that is not associated with a user equipment may be provided. S1 signaling that is not associated with a user equipment is also referred to as "non UE associated Signaling" (see Non-Patent Document 13). The parameter to be mapped to S1 signaling to be newly provided is the MTCD restriction information. The MTCD restriction information may be notified together with the indicator of the concerned cell. The cell indicator may be PCI or GCI.

(2) S1 signaling or S1 message is newly provided. S1 signaling for control may be provided. The S1 signaling that requires a response message from the MME, SGSN, or the like on the receiver may be provided. The S1 signaling that requires a response message is also referred to as "class 1" (see Non-Patent Document 13). S1 signaling that is not associated with a user equipment may be provided. The parameter to be mapped to S1 signaling to be newly provided is the MTCD restriction information. The MTCD restriction information may be notified together with the indicator of the concerned cell. The cell indicator may be PCI or GCI.

(3) Existing S1 signaling is used. Existing S1 signaling for control may be used. Alternatively, existing S1 signaling that is not associated with a user equipment may be used. The parameter that needs to be added to the existing S1 signaling is the MTCD restriction information. Differently from the specific examples (1) and (2), the specific example (3) is effective in that new signaling needs not to be provided, which enables to prevent a communication system from becoming complicated. Then, the following two (a1) and (a2) are disclosed as specific examples of the existing S1 signaling.

(a1) "S1 SETUP REQUEST" (see Non-Patent Document 13). The purpose of "S1 SETUP REQUEST" is to exchange application level configuration data needed for the eNB and MME to interoperate correctly over the S1 interface. The already included parameter is the information specific to a base station, such as the CSG-ID, global cell identity, and TAC of the eNB. The MTCD restriction information is the information specific to the base station as well. Therefore, with the use of "S1 SETUP REQUEST" for notifying the core network side of the MTCD restriction information, the MME on the receiver can obtain the information specific to the base station at once. This enables to reduce the processing load of the MME, and a control delay as a communication system can be prevented.

(a2) "eNB Configuration Update" (see Non-Patent Document 13). The purpose of "eNB Configuration Update" is to update application level configuration data needed for the eNB and MME to interoperate correctly over the S1 interface. The already included parameter is the information specific to a base station, such as the CSG-ID and TAC of the eNB. The MTCD restriction information is also the information specific to the base station. Therefore, with the use of "eNB Configuration Update" for notifying the core network side of the MTCD restriction information, the MME on the receiver can obtain the information specific to the base station at once. This enables to reduce the processing load of the MME and prevent a control delay as a communication system.

The following two (1) and (2) are disclosed as specific examples of the method of determining a cell to be notified of the MTCD restriction information of the base station that has been received by an upper entity. The cell that is notified of the MTCD restriction information of the base station may be one or more. (1) Base station being served by an upper entity. (2) Base station within the same tracking area as that of the base station that has notified the MTCD restriction information.

The following four (1) to (4) are disclosed as specific examples of the timing at which the upper entity notifies the base station of the MTCD restriction information.

(1) When the base station is installed. This may be a time when the base station is installed to be served by an upper entity or when the base station is installed within the same tracking area as that of the base station that has notified the MTCD restriction information. According to this method, in a case where the MTCD restriction information is determined in a static manner, notification needs to be made only once, which enables to reduce the processing load of the upper entity.

(2) When the MTCD restriction information is changed. According to this method, in a case where the MTCD restriction information is not determined in a static manner, a change can be reflected every time it is made. The number of notification times is smaller compared with the method (3), which enables to reduce the processing load of the base station.

(3) Periodically. According to this method, accurate information can be notified through periodical notification even in a case where an error occurs during notification.

(4) Combination of (1) to (3) above.

The following two (1) and (2) are disclosed as specific examples of the method in which an upper entity notifies a base station of the MTCD restriction information by means of an S1 interface.

(1) S1 signaling or S1 message is newly provided. Detailed description thereof is similar to those of the specific examples (1) and (2) regarding the method in which a base station notifies an upper entity of the MTCD restriction information of the own cell by means of an S1 interface.

(2) Existing S1 signaling is used. Existing S1 signaling for control may be used. Alternatively, existing S1 signaling that is not associated with a user equipment may be used. The parameter that needs to be added to the existing S1 signaling is the MTCD restriction information. Differently from the specific example (1), the specific example (2) is effective in that new signaling needs not to be provided, which prevents a communication system from becoming complicated.

Then, the following two (a1) and (a2) are disclosed as specific examples of the existing S1 signaling.

(a1) "S1 SETUP RESPONSE" (see Non-Patent Document 13). The purpose of "S1 SETUP RESPONSE" is to exchange application level configuration data needed for the eNB and MME to interoperate correctly over the S1 interface. "S1 SETUP RESPONSE" is a response signal to "S1 SETUP REQUEST". The already included parameter is the information specific to an MME, such as the PLMN identity and MME group ID. The MTCD restriction information of a base station being served by the MME is the information specific to the MME as well. Therefore, with the use of "S1 SETUP RESPONSE" for notifying the base station of the MTCD restriction information, the base station that receives the MTCD restriction information can obtain the information specific to the MME at once. This enables to reduce the processing load of the base station and prevent a control delay as a communication system.

(a2) "MME Configuration Update" (see Non-Patent Document 13). The purpose of "MME Configuration Update" is to update application level configuration data needed for the eNB and MME to interoperate correctly over the S1 interface. The already included parameter is the information specific to an MME, such as the PLMN identity and MME group ID. The MTCD restriction information of a base station being served by the MME is the information specific to the MME. Therefore, with the use of "MME Configuration Update" for notifying the base station of the MTCD restriction information, the base station that receives the MTCD restriction information can obtain the information specific to the MME at once. This enables to reduce the processing load of the base station and prevent a control delay as a communication system.

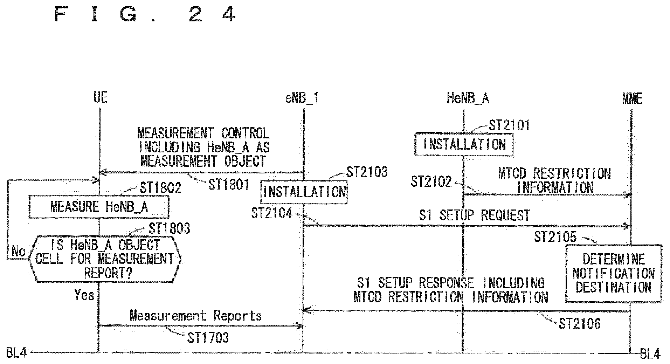

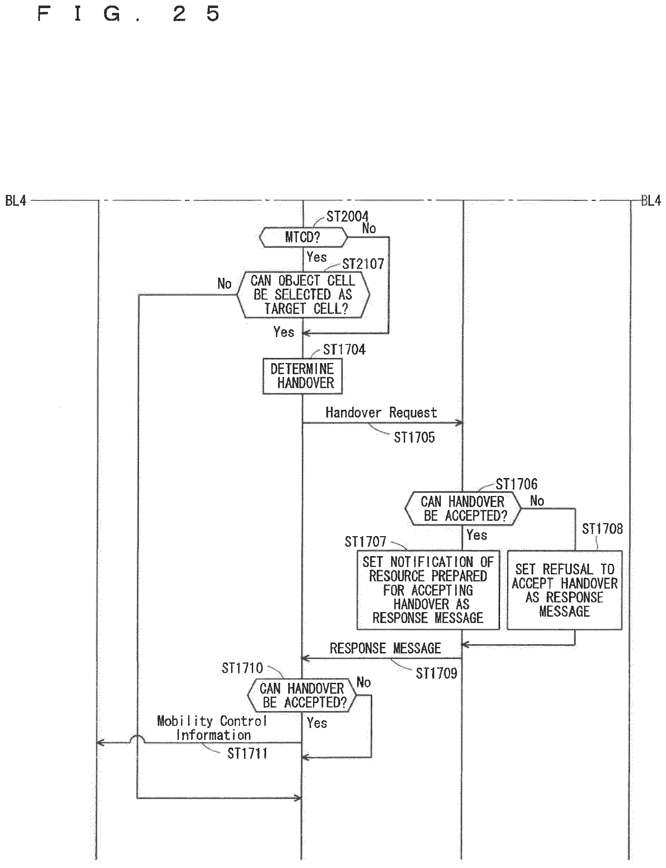

Next, a specific example of the sequence of a communication system in the fifth modification of the first embodiment is described with reference to FIG. 24 and FIG. 25. FIG. 24 and FIG. 25 are diagrams showing the sequence of the communication system in the fifth modification of the first embodiment. FIG. 24 and FIG. 25 are continuous from each other at a position of a boundary BL4. The sequence shown in FIG. 24 and FIG. 25 is similar to the sequences shown in FIG. 17 to FIG. 19, and FIG. 22 and FIG. 23, and thus, the same steps are denoted by the same step numbers and the common description is not given here.

In this operation example, an MTCD that takes the eNB_1 as a source eNB being a serving base station moves so as to approach the HeNB_A. The upper entity of the HeNB_A selects the eNB_1 as a neighboring cell to be notified of the MTCD restriction information of the HeNB A. A time of installation is disclosed as a specific example of the timing at which a base station notifies an upper entity of the MTCD restriction information of the own cell. A case where the selection as a suitable cell cannot be made by an MTCD is disclosed as a specific example of the restriction shown in the MTCD restriction information of the HeNB A.

An MME is disclosed as a specific example of the upper entity. A case of the base station being served by an MME is disclosed as a cell to be notified of the MTCD restriction information of the base station that has been received by the MME. A time when the base station is installed is disclosed as the timing at which the MME notifies the base station of the MTCD restriction information is disclosed. Disclosed here is a case in which an upper entity notifies a base station of the MTCD restriction information over "S1 SETUP RESPONSE".

As described above, the processes of Step ST1801 to Step ST1803 and Step ST1703 are performed. In Step ST2101, the HeNB_A is installed. In Step ST2102, the HeNB_A notifies the MME being an upper entity of the MTCD restriction information. In this operation example, the HeNB_A notifies the "selection as a suitable cell cannot be made by an MTCD" as the MTCD restriction information.

In Step ST2103, the eNB_1 is installed. In Step ST2104, the eNB_1 notifies the MME being an upper entity of an S1 setup request message to interoperate correctly with the MME on the S1 interface.

In Step ST2105, the MME determines a cell being a notification destination to be notified of the received MTCD restriction information of the HeNB_A. In this operation example, the MME notifies the base station being served thereby of the received MTCD restriction information of the HeNB_A. In addition, in this operation example, the MME notifies the MTCD restriction information when the base station is installed. As a result of the installation of the eNB_1 to be served by the MME, the MME determines to notify the eNB_1 of the MTCD restriction information of the HeNB_A, that is, determines the eNB_1 as a notification destination.

In Step ST2106, the MME notifies the eNB_1 of the MTCD restriction information of the HeNB_A. The MTCD restriction information of the HeNB_A and the MTCD restriction information of another cell may be notified together. In this operation example, the MME notifies the MTCD restriction information with the use of the S1 setup response message. Specifically, the MME notifies the eNB_1 of the S1 setup response message including the MTCD restriction information. In this operation example, the MME notifies the "selection as a suitable cell cannot be made by an MTCD" as the MTCD restriction information.

Then, the eNB_1 performs the process of Step ST2004 as described above. The eNB_1 moves to Step ST2107 in a case of judging that the user equipment (UE) that has notified the measurement reports in Step ST1703 is an MTCD or moves to Step ST1704 in a case of judging that the user equipment (UE) is not an MTCD.

In Step ST2107, the eNB_1 judges whether or not the object cell for measurement reports can be selected as a target cell. A specific example of the judgment is disclosed below. The eNB_1 makes a judgment based on the measurement reports received in Step ST1703 and the MTCD restriction information of the object cell for measurement reports received from the MME. In this operation example, the eNB_1 makes a judgment based on the measurement reports for the HeNB_A, which have been received in Step ST1703, and the MTCD restriction information of the HeNB_A received from the MME in Step ST2106.

In a case where the MTCD restriction information shows that an MTCD can select a cell as a suitable cell, the eNB_1 judges that the cell can be selected as a target cell. In a case where the MTCD restriction information shows that an MTCD cannot select a cell as a suitable cell, the eNB_1 judges that the cell cannot be selected as a target cell. The eNB_1 moves to Step ST1704 in a case of judging that the selection as a target cell can be made in Step ST2107 or does not execute the processes of Step ST1704 and Step ST1705 in a case of judging the selection as a target cell cannot be made in Step ST2107. In a case of moving to Step ST1704, the processes of Step ST1704 to Step ST1711 are performed as described above.

In this operation example, in Step ST2106, the eNB_1 receives the "selection as a suitable cell cannot be made by an MTCD" as the MTCD restriction information of the HeNB_A being an object cell for measurement reports. Therefore, the eNB_1 judges that the concerned cell cannot be selected as a target cell in Step ST2107 and does not execute the processes of Step ST1704 and Step ST1705. Through the process of Step ST2107, it is possible to reduce an occurrence of unnecessary notification of a handover request in which handover is always refused because the target eNB restricts MTCDs.

The fifth modification of the first embodiment can achieve similar effects to those of the fourth modification of the first embodiment.

The present modification is not limited to the application example described above and may be used in other application examples. For example, in the present modification, in Step ST1706, the HeNB_A being a target eNB judges whether or not the own base station can accept handover. Not limited to the above, in a case where, for example, handover is performed via an MME, the MME may judge whether or not the target eNB can accept handover in consideration of the MTCD restriction information obtained from the base station by the MME.

Alternatively, the present modification can be used in combination with the first embodiment, the first modification of the first embodiment, the second modification of the first embodiment, the third modification of the first embodiment, or the fourth modification of the first embodiment, including other application examples.

Sixth Modification of First Embodiment

A sixth modification of the first embodiment discloses another solution to the same problem as that of the second modification of the first embodiment. A solution in the sixth modification of the first embodiment is described below. In the present modification, a portion different from the solutions in the first embodiment, the second modification of the first embodiment, the fourth modification of the first embodiment, and the fifth modification of the first embodiment is mainly described, and the portion that is not described here is as in the first embodiment, the second modification of the first embodiment, the fourth modification of the first embodiment, and the fifth modification of the first embodiment.

The base station notifies the upper entity of the MTCD restriction information of the own cell. The base station may notify the upper entity of the MTCD restriction information of the own cell by means of the S1 interface. The upper entity sets the user equipment context in the serving cell for the user equipment in consideration of the received MTCD restriction information. The upper entity may set the user equipment context for an MTCD in the serving cell for the MTCD in consideration of the received MTCD restriction information.

The cell that has received the user equipment context and the measurement reports from the user equipment being served thereby performs the handover determination process in consideration of the contents thereof. For example, the cell determines a target cell in consideration of the user equipment context and the measurement reports from a user equipment being served thereby.

This enables to reduce the reception by the base station of an unnecessary notification of a handover request in which handover is always refused because the own cell restricts MTCDs, from the cell notified of the MTCD restriction information of the own cell. As a result of the reduction of the unnecessary reception of a handover request by the base station, an unnecessary judgment as to whether or not handover can be accepted in the base station can be reduced. Therefore, the processing load of the base station can be reduced, and a control delay in handover can be reduced.

While the present modification has described the case in which the cell that has received the user equipment context and the measurement reports from a user equipment being served thereby performs the handover determination process in consideration of the contents thereof, the present modification is not limited thereto. The cell that has received the user equipment context may perform the operation in which the contents of the user equipment context are taken into consideration.

While the present modification has described the case in which the user equipment context is set in the serving cell for the user equipment in consideration of the MTCD restriction information received by the upper entity, the present modification is not limited to the above and may be as follows. The user equipment context may be set in the serving cell for the user equipment in consideration of the MTCD restriction information of the base station belonging to the same CSG as that of the user equipment among the pieces of MTCD restriction information received by the upper entity.

Alternatively, the user equipment context may be set in the serving cell for the user equipment without consideration of the MTCD restriction information of the base station that does not belong to the same CSG as that of the user equipment among the pieces of MTCD restriction information received by the upper entity. This enables to reduce an amount of information for control within a communication system.

Disclosed below is a specific example when the upper entity sets the user equipment context in the serving cell for the user equipment in consideration of the received MTCD restriction information. Existing S1 message for control or S1 signaling may be used. Specific examples of the existing S1 signaling include an initial context setup request "INITIAL CONTEXT SETUP REQUEST" (see Non-Patent Document 13).

The following two (1) and (2) are disclosed as specific examples in which an upper entity notifies a serving cell of the contents of the user equipment context in consideration of the received MTCD restriction information.

(1) A new parameter is provided in the user equipment context. The following three (a1) to (a3) are disclosed as specific examples of the new parameter.

(a1) The MTCD restriction information is mapped. The MTCD restriction information may be notified together with the indicator of the concerned cell. The cell indicator may be PCI or GCI. The serving cell that has received this information may notify the user equipment of this information.

(a2) The information "selection as a cell reselection destination cannot be made" is mapped. This information may be notified together with the indicator of the concerned cell. The cell indicator may be PCI or GCI. The serving cell that has received this information may notify the user equipment of this information. According to the specific example (a2), the MTCD can know the cell that cannot be reselected because MTCDs are restricted before receiving the MTCD restriction information of the concerned cell. This enables to reduce power consumption of the MTCD and reduce a control delay in cell reselection.

(a3) The information "setting as a measurement object cannot be made" is mapped. This information may be notified together with the indicator of the concerned cell. The cell indicator may be PCI or GCI. The serving cell may adjust the measurement control information of a user equipment in consideration of this information. For example, the cell that has received the notification of the information "setting as a measurement object cannot be made" is removed from the measurement object in the measurement control information. Specific examples of the method of removing a cell from the measurement object include the same method as that of the second modification of the first embodiment. This enables to reduce, by an MTCD, the measurements on a cell that cannot be selected as a target cell. This results in lower power consumption of the MTCD.

(2) The existing parameter in "INITIAL CONTEXT SETUP REQUEST" is used. For example, "Handover Restriction List IE" is used. The purpose of "Handover Restriction List IE" is to show whether roaming or access is restricted. The change needed to be made to the existing parameter is disclosed below. In the existing "Handover Restriction List IE", an area in which roaming or handover is forbidden is set. Specifically, forbidden tracking areas (forbidden TACs) or forbidden systems (forbidden inter RATs) are set.

Therefore, it is not possible to notify the MTCD restriction information specific to the base station with the parameter "Handover Restriction List IE". Therefore, in the present modification, the information of a forbidden cell is added. A cell to which roaming is forbidden and a cell to which handover is forbidden may be provided separately.

The following six (1) to (6) are disclosed as specific examples of setting the user equipment context in which the MTCD restriction information is taken into consideration.

(1) The following five (a1) to (a5) are disclosed as specific examples of setting the user equipment context in a case where the restriction shown in the MTCD restriction information relates to whether or not an MTCD is allowed access, and it is shown that access is not allowed.

(a1) Selection as a destination of cell reselection cannot be made. This enables to prevent the reselection of a cell that cannot be accessed in advance.
(a2) Setting as a measurement object cannot be made. This enables to reduce the measurements on the cell that cannot be accessed if it is selected as a handover destination.
(a3) A cell to which handover is forbidden. Selection as a target cell cannot be made. This enables to prevent the selection of a cell that cannot be accessed as a handover destination in advance.
(a4) A cell to which roaming is forbidden. This enables to prevent the selection of a cell that cannot be accessed as a roaming destination in advance.
(a5) Combination of (a1) to (a4) above.

(2) The following five (b1) to (b5) are disclosed as specific examples of setting the user equipment context in a case where the restriction shown in the MTCD restriction information relates to whether or not an MTCD is allowed camp-on for obtaining a normal service, and it is shown that camp-on is not allowed for obtaining a normal service.

(b1) Selection as a cell reselection destination cannot be made. This enables to prevent the reselection of a cell from which a normal service cannot be obtained in advance.
(b2) Setting as a measurement object cannot be made. This enables to reduce the measurements on the cell from which a normal service cannot be obtained if the cell is selected as a handover destination.
(b3) A cell is made such that handover thereto is forbidden. Selection as a target cell cannot be made. This enables to prevent the selection of a cell from which a normal service cannot be obtained as a handover destination in advance.
(b4) A cell is made such that roaming thereto is forbidden. This enables to prevent the selection of a cell from which a normal service cannot be obtained as a roaming destination in advance.
(b5) Combination of (b1) to (b4) above.

(3) The following five (c1) to (c5) are disclosed as specific examples of setting the user equipment context in a case where the restriction shown in the MTCD restriction information relates to whether or not an MTCD is allowed camp-on for obtaining a limited service, and it is shown that camp-on is not allowed for obtaining a limited service.

(c1) Selection as a cell reselection destination cannot be made. This enables to prevent the reselection of a cell from which a limited service cannot be obtained in advance.
(c2) Setting as a measurement object cannot be made. This enables to reduce the measurement on a cell from which a limited service cannot be obtained if the cell is selected as a handover destination.
(c3) A cell is made such that handover thereto is forbidden. An MTCD cannot be selected as a target cell. This enables to prevent the selection of a cell from which a limited service cannot be obtained as a handover destination in advance.

(c4) A cell is made such that roaming thereto is forbidden. This enables to prevent the selection of a cell from which a limited service cannot be obtained as a roaming destination in advance.

(c5) Combination of (c1) to (c4) above.

(4) The following five (d1) to (d5) are disclosed as specific examples of setting the user equipment context in a case where the restriction shown in the MTCD restriction information relates to whether or not an MTCD is forbidden from selecting a cell as a candidate for cell selection and reselection, and it is shown that the cell is forbidden from becoming a candidate for cell selection and reselection.

(d1) Selection as a cell reselection destination cannot be made. This enables to prevent the reselection of a cell in advance before the MTCD restriction information of the cell is received.

(d2) Setting as a measurement object cannot be made. This enables to reduce the measurement on a cell that cannot be selected as a cell reselection destination if it is selected as a handover destination.

(d3) A cell is made such that handover thereto is forbidden. Selection as a target cell cannot be made. This enables to prevent the selection of a cell that cannot be selected as a cell reselection destination as a handover destination in advance.

(d4) A cell is made such that roaming thereto is forbidden. This enables to prevent the selection of a cell that cannot be selected as a cell reselection destination as a roaming destination in advance.

(d5) Combination of (d1) to (d4) above.

(5) The following five (e1) to (e5) are disclosed as specific examples of setting the user equipment context in a case where the restriction shown in the MTCD restriction information relates to whether or not an MTCD is forbidden from roaming, and roaming is forbidden.

(e1) Selection as a cell reselection destination cannot be made. This enables to prevent the reselection of a cell to which roaming is not allowed in advance.

(e2) Setting as a measurement object cannot be made. This enables to reduce the measurement on a cell to which roaming is not allowed if the cell is selected as a handover destination.

(e3) A cell is made such that handover thereto is forbidden. Selection as a target cell cannot be made. This enables to prevent the selection of a cell to which roaming is not allowed as a handover destination in advance.

(e4) A cell is made such that roaming thereto is forbidden.

(e5) Combination of (e1) to (e4) above.

(6) The following five (f1) to (f5) are disclosed as specific examples of setting the user equipment context in a case where the restriction shown in the MTCD restriction information relates to whether or not an MTCD is forbidden from handover, and handover is forbidden.

(f1) Selection as a cell reselection destination cannot be made. This enables to prevent the reselection of a cell to which handover is not allowed in advance.

(f2) Setting as a measurement object cannot be made. This enables to reduce the measurement on a cell to which handover is not allowed if the cell is selected as a handover destination.

(f3) A cell is made such that handover thereto is forbidden. Selection as a target cell cannot be made.

(f4) A cell is made such that handover thereto is forbidden. This enables to prevent the selection of a cell to which handover is not allowed as a roaming destination in advance.

(f5) Combination of (f1) to (f4) above.

In a case where an upper entity maps the MTCD restriction information with (a1) of the above-mentioned specific example (1) among the specific examples in which the upper entity notifies the contents of the user equipment context in consideration of the received MTCD restriction information, the base station may take the contents of the specific example of setting the user equipment context in consideration of the MTCD restriction information into consideration.

A specific example of the timing at which the upper entity notifies the serving cell for the user equipment of the user equipment context is disclosed below. Timing of setting the initial user equipment context (Initial Context Setup).

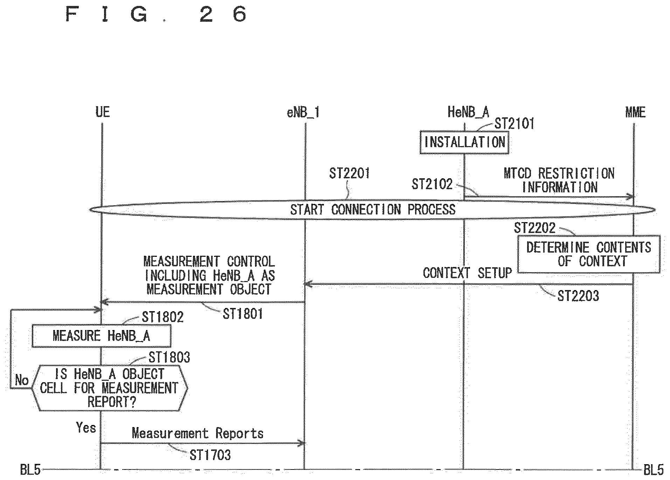

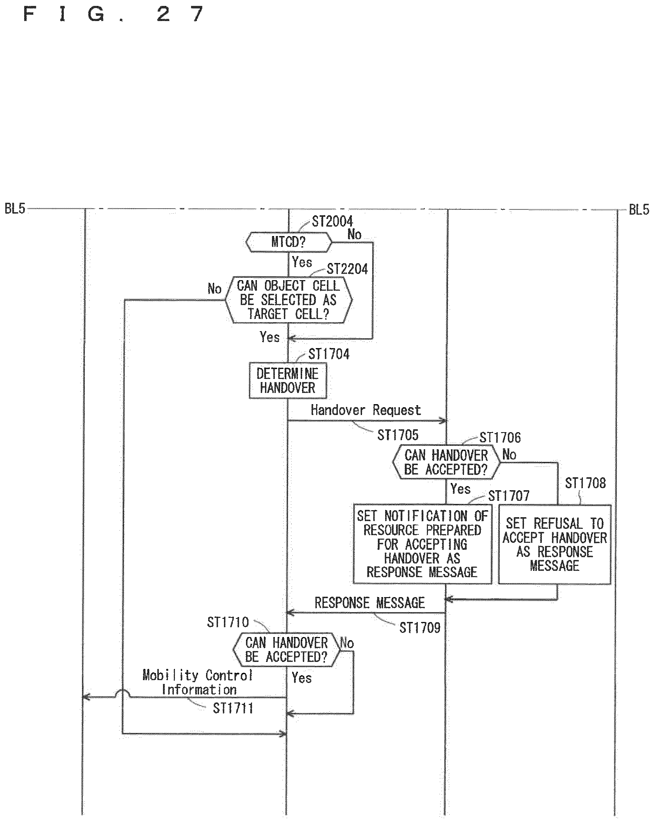

Next, a specific example of the sequence of a communication system in the sixth modification of the first embodiment is described with reference to FIG. 26 and FIG. 27. FIG. 26 and FIG. 27 are diagrams showing the sequence of the communication system in the sixth modification of the first embodiment. FIG. 26 and FIG. 27 are continuous from each other at a position of a boundary BL5. The sequence shown in FIG. 26 and FIG. 27 is similar to the sequences shown in FIG. 17 to FIG. 19 and FIG. 22 to FIG. 25, and thus, the same steps are denoted by the same step numbers and the common description is not given here.

In this operation example, the MTCD that takes the eNB_1 as a source eNB being a serving base station moves so as to approach the HeNB_A. A time of installation is disclosed as a specific example of the timing at which the base station notifies the upper entity of the MTCD restriction information of the own cell. A case in which camp-on is not allowed for obtaining a normal service is disclosed as a specific example of the restriction shown in the MTCD restriction information of the HeNB A.

An MME is disclosed as a specific example of the upper entity. A case in which the selection as a target cell cannot be made when the MTCD restriction information indicates that camp-on is not allowed for obtaining a normal service is disclosed as a specific example of setting the user equipment context in which the upper entity takes the MTCD restriction information into consideration.

As described above, the HeNB_A is installed in Step ST2101 and, in Step ST2102, the HeNB_A notifies the MME being an upper entity of the MTCD restriction information. In Step ST2201, the connection process is started between the UE and the core network side that includes the eNB_1 being a source eNB and an MME.

In Step ST2202, the MME determines the contents of the user equipment context for the UE. The MME determines the contents of the user equipment context in consideration of the MTCD restriction information received from the base station being served thereby. In this operation example, the MME determines the contents of the user equipment context in consideration of the MTCD restriction information of the HeNB_A, which has been received in Step ST2102.

The MME also takes the pieces of MTCD restriction information received from the HeNB_A and another base station into consideration. In this operation example, the MTCD restriction information of the HeNB_A indicates that camp-on is not allowed for obtaining a normal service. In addition, as the contents of the user equipment context, the MME determines that the HeNB_A cannot be selected as a target cell.

In Step ST2203, the MME notifies the eNB_1 being a serving cell for the user equipment of the contents of the user equipment context, which has been determined in Step ST2202. Then, the processes of Step ST1801 to Step ST1803 and Step ST1703 are performed as described above.

In Step ST2204, the eNB_1 judges whether or not the object cell for measurement reports can be selected as a target cell. A specific example of this judgment is disclosed below. The eNB_1 makes a judgment based on the measurement reports received in Step ST1703 and the contents of the user equipment context received from the MME in Step ST2203. The eNB_1 moves to Step ST1704 in a case of judging that an object cell can be selected as a target cell in Step ST2204 or does not execute the processes of Step ST1704 and Step ST1705 in a case of judging that an object cell cannot be selected as a target cell in Step ST2204.

In this operation example, the user equipment context describes that the HeNB A cannot be selected as a target cell. Therefore, the eNB_1 judges that the concerned cell cannot be selected as a target cell in Step ST2204 and does not execute the processes of Step ST1704 and Step ST1705. Through the process of Step ST2204, it is possible to reduce the unnecessary notification of a handover request in which handover is always refused because the target eNB restricts MTCDs.

The sixth modification of the first embodiment can achieve similar effects to those of the fourth modification of the first embodiment.

In addition, as disclosed in the first embodiment, the MTCD restriction information can be used also in a case where congestion is caused by MTCDs in a radio area or at a core network side. In such a case, the following problem arises. The congestion caused by MTCDs in a radio area or at a core network side changes over time. Therefore, it is conceivable that the MTCD restriction information of a cell changes during the connection of a user equipment.

Therefore, in the sixth modification, the timing of setting the initial user equipment context (Initial Context Setup) is disclosed as a specific example of the timing at which the upper entity notifies the serving cell for the user equipment of the user equipment context.

However, in a case where the MTCD restriction information of a cell changes so as to restrict MTCDs after the setting of the initial user equipment context and the concerned cell is selected as a target eNB, such a problem arises that the unnecessary notification of a handover request in which handover is always refused because the concerned cell restricts MTCDs cannot be reduced.

A solution is disclosed below. The following contents are added to the contents disclosed in the sixth modification of the first embodiment as a specific example of notifying the serving cell of the contents of the user equipment context in consideration of the MTCD restriction information received by the upper entity. The contents of the specific examples disclosed in the sixth modification of the first embodiment are also newly added to the modification of the user equipment context (CONTEXT MODIFICATION) disclosed in Non-Patent Document 13. "Handover Restriction List IE" is newly added to the existing "CONTEXT MODIFICATION". This enables to notify, even in a case where the MTCD restriction information of a cell changes to restrict MTCDs after the setting of the initial user equipment context, the serving cell of the information. Accordingly, the unnecessary notification of a handover request in which handover is always refused because the concerned cell restricts MTCDs can be reduced.

The present modification is not limited to the application example described above and may be used in other application examples. Alternatively, the present modification can be used in combination with the first embodiment, the first modification of the first embodiment, the second modification of the first embodiment, the third modification of the first embodiment, the fourth modification of the first embodiment, or the fifth modification of the first embodiment, including other application examples.

Second Embodiment

A second embodiment discloses another solution to the same problem of the first embodiment described above. A solution in the second embodiment is described below. The MTCD restricts the selection of a HeNB as a connection destination. This restriction may be determined in a static manner or in advance. A user equipment not being an MTCD, that is, a normal UE does not restrict the selection of a HeNB as a connection destination. The normal UE may operate normally. This enables to solve a problem that the accommodation number of a HeNB reaches its capacity due to MTCDs and cannot accommodate normal UEs.

The user equipment judges whether or not a HeNB is selected as a connection destination based on the information for judging whether or not the base station is a HeNB. The information for a user equipment to judge whether or not the base station is a HeNB is the information regarding the base station that is restricted from being selected as a connection destination by an MTCD, which corresponds to the base station information. The following two (1) and (2) are disclosed as specific examples of the information for a user equipment to judge whether or not the base station is a HeNB.

(1) The existing broadcast information related to a HeNB is used (see Non-Patent Document 2). A specific example thereof is SIB9, more specifically, "hnb-name" in the SIB9. As a specific example of the judgment, in a case where the broadcast information contains the broadcast information related to a HeNB, it is judged that the base station is a HeNB. In a case where the broadcast information does not contain the broadcast information related to a HeNB, it is judged that the base station is not a HeNB. This specific example (1) is more advantageous than a specific example (2) described below in that a communication system can be prevented from becoming complicated because a new indicator needs not to be provided.

(2) An indicator as to whether or not a base station is a HeNB is newly provided. The indicator may indicate that a base station is a HeNB or indicate that a base station is not a HeNB. As a specific example of the judgment, in a case where it is notified that a base station is a HeNB, it is judged that the base station is a HeNB. Meanwhile, in a case where it is notified that a base station is not a HeNB, it is judged that the base station is not a HeNB. The following three examples (a1) to (a3) are disclosed as specific examples of the indicator notification method.

(a1) An indicator is notified as the broadcast information. This enables to achieve an effect that a user equipment can receive an indicator as to whether or not a base station is a HeNB irrespective of the state of a user equipment, that is, irrespective of whether the user equipment is in an idle state or connected state.

(a2) An area in which only an MTCD is decoded is provided, and an indicator as to whether or not a base station is a HeNB is mapped in that area. Accordingly, a normal UE needs not to receive this area and decode this area. Therefore, no change is required for the existing 3GPP equipment, and thus, a communication system having excellent backward compatibility can be constructed. This area may be one related to only MTCDs.

(a3) Combination of (a1) and (a2) above.

As specific examples of the cell from which a user equipment receives the information for judging whether or not a base station is a HeNB, the following two (1) and (2) are disclosed; (1) cell to be measured, and (2) cell that satisfies cell selection criteria. In the specific example (2), the number of cells that need to receive the information for judging whether or not a base station is a HeNB is smaller than that of the specific example (1). Therefore, with the use of the specific example (2), the processing load of the user equipment can be reduced, and power consumption of the user equipment can be reduced.

The following five (1) to (5) are disclosed as specific examples of the timing at which an MTCD judges whether or not a base station is a HeNB. The specific examples disclosed below may be applied to the timing at which the user equipment checks the MTCD restriction information.

(1) At a time of cell selection. In this case, the MTCD checks the information for judging whether or not a base station is a HeNB before cell selection, to thereby check whether or not that cell can be selected (camped on). In a case where the cell is not a HeNB, the MTCD selects this cell. In a case where the cell is a HeNB, the MTCD removes this cell from a candidate for cell selection and starts the operation for selecting another cell.

(2) At a time of cell reselection. In this case, the MTCD checks the information for judging whether or not a base station is a HeNB before cell reselection, to thereby check whether or not the cell can be reselected (camped on). In a case where the cell is not a HeNB, the MTCD reselects this cell. In a case where the cell is a HeNB, the MTCD removes the cell from a candidate for cell reselection and starts the operation for reselecting another cell.

(3) At a time of access. In this case, the MTCD checks the information for judging whether or not a base station is a HeNB before access, to thereby check whether or not the cell can be accessed. In a case where the cell is not a HeNB, the MTCD starts accessing the cell. In a case where the cell is a HeNB, the MTCD sends access or starts the cell reselection operation for selecting another accessible cell.

(4) Periodically. In this case, the MTCD receives and checks the information for judging whether or not a base station is a HeNB at predetermined intervals.

(5) Combination of (1) to (4) above.

The MTCD may check the information for judging whether or not a base station is a HeNB. The normal UE needs not to check the information for judging whether or not a base station is a HeNB. As a result, a normal UE needs not to be changed, which enables to construct a communication system having excellent backward compatibility.

The following seven (1) to (7) are disclosed as specific examples of the restriction when an MTCD is restricted from selecting a HeNB.

(1) The MTCD does not access a HeNB. The following five (a1) to (a5) are disclosed as specific examples of access; (a1) transmission of uplink control data, (a2) transmission of uplink traffic data, which may be transmission of user data, (a3) RACH transmission, (a4) transmission of RRC connection request, and (a5) combination of (a1) to (a4) above.

(2) The MTCD does not camp on a HeNB for obtaining a normal service. In other words, the MTCD does not select a HeNB as a suitable cell.

(3) The MTCD does not camp on a HeNB for obtaining a limited service. In other words, the MTCD does not select a HeNB as an acceptable cell. The following four (b1) to (b4) are disclosed as specific examples of the limited service; (b1) transmission of emergency call, (b2) reception of ETWS, (b3) reception of CMAS, and (b4) combination of (b1) to (b3).

(4) The MTCD removes a HeNB from a candidate for cell selection and reselection. The MTCD does not select and reselect a HeNB.

(5) The MTCD removes a HeNB from a candidate for roaming destination. The MTCD does not select a HeNB as a roaming destination.

(6) The MTCD removes a HeNB from a candidate for handover destination. The MTCD does not select a HeNB as a handover destination. (7) combination of (1) to (6) above.

As the restriction when the MTCD is restricted from selecting a HeNB, the specific examples (1) to (7) described above may be combined such that one operation is restricted but another operation is not restricted. The following nine (B1) to (B9) are disclosed as specific examples of the combination of the specific examples (1) to (7) above.

(B1) The MTCD does not access a HeNB, but the MTCD camps on the HeNB for obtaining a normal service.

(B2) The MTCD does not access a HeNB, but the MTCD camps on the HeNB for obtaining a limited service.

(B3) The MTCD does not access a HeNB, but the MTCD selects the HeNB as a candidate for cell selection and reselection.

(B4) The MTCD does not access a HeNB, but the MTCD selects the HeNB as a roaming destination.

(B5) The MTCD does not access a HeNB, but the MTCD selects the HeNB as a handover destination.

(B6) The MTCD does not camp on a HeNB for obtaining a normal service, but the MTCD camps on the HeNB for obtaining a limited service.

(B7) The MTCD does not camp on a HeNB for obtaining a normal service, but the MTCD selects the HeNB as a candidate for cell selection and reselection.

(B8) The MTCD does not camp on a HeNB for obtaining a normal service, but the MTCD selects the HeNB as a roaming destination.

(B9) The MTCD does not camp on a HeNB for obtaining a normal service, but the MTCD selects the HeNB as a handover destination.

When the MTCD is restricted from selecting a HeNB, there may be no restriction stricter than the operation to be restricted. In other words, in a case where there is an operation that cannot be performed on a HeNB by an MTCD, the restriction stricter than the operation that cannot be performed may be operable.

In the specific examples of the restriction when the MTCD is restricted from selecting a HeNB, the restriction of the specific example (1) is the loosest restriction among the specific examples (1) to (4), and the restriction becomes stricter as the number of the specific example becomes larger. For the sake of convenience, description is given except for the specific examples (5), (6), and (7).

For example, in a case where the restriction "the MTCD does not access a HeNB" in the specific example (1) is imposed, it is regarded that a restriction stricter than this restriction is not imposed. Therefore, the MTCD camps on the HeNB for obtaining a normal service and camps on the HeNB for obtaining a limited service, to thereby make the HeNB as a candidate for cell selection and reselection.

The "MTCD" may not be restricted from selecting a HeNB. The following three (1) to (3) are disclosed as specific examples thereof.

(1) Restricted operation in accordance with the priority of the MTCD. This is effective in a case where there is a differentiation between the high-priority MTCD and low-priority MTCD in a communication system. The following two (a1) and (a2) are disclosed as specific examples of the combination with a restriction. (a1) A low-priority MTCD is restricted from selecting a HeNB. (a2) Restrictions for selecting a HeNB are placed separately for the high-priority MTCD and low-priority MTCD. For example, the high-priority MTCD does not access a HeNB, and the low-priority MTCD does not select and reselect a HeNB.

(2) Restricted operation in accordance with an MTCD group. This is effective in a case where MTCD groups are provided in a communication system. A specific example is described below. For example, an MTCD group A and an MTCD group B are provided. A restriction for selecting a HeNB is provided separately per MTCD group, that is, between the MTCD group A and MTCD group B. For example, the MTCD group A does not access a HeNB, and the MTCD group B does not select and reselect a HeNB.

(3) Restricted operation in accordance with the priority of a user equipment. This is effective in a case where there is no differentiation as to whether a user equipment is an MTCD or not an MTCD but there is a differentiation as to whether a user equipment is a high-priority user equipment or a low-priority user equipment in a communication system. The following two (b1) and (b2) are disclosed as specific examples. (b1) A low-priority user equipment is restricted from selecting a HeNB. (b2) A restriction for selecting a HeNB is provided separately for a high-priority user equipment and a low-priority user equipment. For example, the high-priority user equipment is not restricted from selecting a HeNB, and the low-priority MTCD does not select and reselect a HeNB.

The restriction may be changed in accordance with the state of a HeNB. For example, the restriction regarding the selection of a HeNB by an MTCD may be changed in accordance with the state of a HeNB. As a specific example, the MTCD is restricted from selecting a service providing HeNB that is a HeNB installed within the coverage of another cell. A specific example of the method in which a user equipment judges that a HeNB is installed within the coverage of another cell is disclosed below. In a case where there is a base station that satisfies cell selection criteria is located in addition to this HeNB, a user equipment judges that this HeNB is installed within the coverage of another cell.

The MTCD is not restricted from selecting an area complementary HeNB that is a HeNB installed outside the coverage of another cell, or a restriction on that HeNB is looser than a restriction on the service providing HeNB that is a HeNB installed within the coverage of another cell. A specific example of the method in which a user equipment judges that a HeNB is installed outside the coverage of another cell is disclosed below. In a case where there is no base station that satisfies cell selection criteria except for the HeNB, a user equipment judges that the HeNB is installed outside the coverage of another cell.

Accordingly, the selection of a HeNB by an MTCD is not restricted as to the area complementary HeNB from which the service of the communication system can be obtained via only the HeNB. Therefore, it is possible to keep the service to an MTCD in such a situation. Meanwhile, the selection of a HeNB by an MTCD is restricted as to the service providing HeNB from which the service of the communication system can be obtained via another cell. This enables to solve a problem that the accommodation number of a HeNB reaches its capacity due to MTCDs and the HeNB cannot accommodate normal UEs.

In a case where the restriction is changed in accordance with the state of a HeNB, the change of the state of the HeNB may trigger the cell reselection by an MTCD being served by the HeNB. Examples of the case in which the state of the HeNB is changed include a case in which another cell is installed in the neighborhood of the HeNB installed outside the coverage of another cell and the HeNB is installed within the coverage of another cell.

In this case, for example, the MTCD is changed from the state of not being restricted from selecting the HeNB to the state of being restricted from selecting the HeNB, whereby a change of the state of the HeNB triggers the cell reselection by an MTCD being served by the HeNB. Therefore, an MTCD being served by the HeNB may start the cell reselection operation for selecting another cell on which it can camp to obtain a normal service.

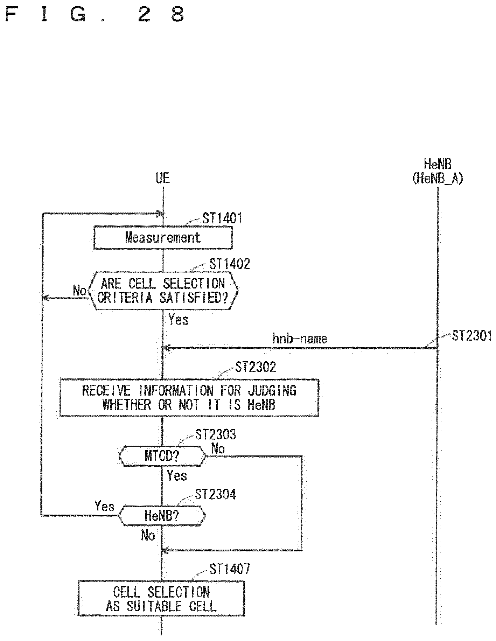

Then, a specific example of the sequence of a communication system in the second embodiment is described with reference to FIG. 28. FIG. 28 is a diagram showing the sequence of the communication system in the second embodiment. The sequence shown in FIG. 28 is similar to the sequence shown in FIG. 14, and thus, the same steps are denoted by the same step numbers and the common description is not given here.

This operation example discloses a case in which "hnb-name" being the existing broadcast information is used as a specific example of the information for a user equipment to judge whether or not a base station is a HeNB. Further disclosed is a case in which a cell from which a user equipment receives the information for judging whether or not a base station is a HeNB is a cell that satisfies cell selection criteria.

Further, a time of cell selection is disclosed as a specific example of the timing at which a user equipment judges whether or not a base station is a HeNB. A case in which an MTCD does not select a HeNB as a suitable cell is disclosed as a specific example of the restriction when the MTCD is restricted from selecting a HeNB. A user equipment (UE) is located within the coverage of a HeNB_A and performs the cell selection operation.

As described above, the processes of Step ST1401 and Step ST1402 are performed. In Step ST2301, the HeNB_A notifies, as broadcast information, a user equipment being served thereby of "hnb-name" being the information for judging whether or not the base station for the HeNB_A is a HeNB over the SIB9.

In Step ST2302, the UE receives the information for judging whether or not the base station is a HeNB. Specifically, the UE receives the information for judging whether or not the base station judged to satisfy cell selection criteria in Step ST1402 is a HeNB. In this operation example, the UE receives "hnb-name" being the information for judging whether or not the base station for the HeNB A is a HeNB.

In Step ST2303, the UE judges whether or not the own user equipment is an MTCD. The information indicating that a user equipment is an MTCD (MTCD indicator), which is stored in a USIM or the like, may be used in this judgment. The UE moves to Step ST2304 in a case of judging that a user equipment is an MTCD in Step ST2303 or moves to Step ST1407 in a case of judging that a user equipment is not an MTCD in Step ST2303. Through the process of Step ST2303, the UE can restrict the operation of the MTCD by differentiating from the normal UE.

In Step ST2304, the UE judges whether or not the cell is a HeNB. The information for judging whether or not the cell is a HeNB received in Step ST2301 is used in this judgment. In this operation example, the broadcast information related to a HeNB in the broadcast information is used as the information for judging whether or not a cell is a HeNB. "hnb-name" in the broadcast information may be used as the information for judging whether or not a cell is a HeNB. The UE moves to Step ST1407 in a case of judging that the cell is not a HeNB in Step ST2304 or returns to Step ST1401 in a case of judging that the cell is a HeNB in Step ST2304.

In this operation example, the HeNB_A is a HeNB that broadcasts "hnb-name" in Step ST2301. Therefore, the UE judges that the cell is a HeNB in Step ST2304 and does not perform cell selection in Step ST1407 but returns to Step ST1401. Through the process of Step ST2304, the operation of the MTCD can be restricted.

The second embodiment can achieve the following effects. It is possible to restrict an MTCD from selecting a HeNB by differentiating from a normal UE. This enables to solve a problem that the accommodation number of a HeNB reaches its capacity due to MTCDs and the HeNB is occupied by MTCDs and cannot accommodate normal UEs. Therefore, a HeNB can keep providing service to normal UEs.

In addition, the second embodiment does not need the MTCD restriction information being a new indicator, which is notified from a base station to a user equipment being served thereby, differently from the first embodiment. This enables to prevent a communication system from becoming complicated and allows effective use of radio resources.

It is expected that the coverages of so-called local nodes such as HNB, a pico eNB (LTE pico cell (EUTRAN pico cell)), pico NB (WCDMA pico cell (UTRAN pico cell)), relay, remote radio head (RRH), and node for hotzone cells are small, and that the number of user equipments that can be accommodated thereby is much smaller than the number of user equipments that can be accommodated by a macro cell.

It is considered from the above that similarly to a HeNB, the problem of the first embodiment arises. In order to solve the above-mentioned problem, the use of the present embodiment is effective for local nodes such as HNB, pico eNB, pico NB, relay, remote radio head, and node for hotzone cells. This prevents a situation in which normal UEs cannot be accommodated due to MTCDs, so that the room for accommodating normal UEs can be secured and the service to normal UEs can be maintained.

In addition, it is conceivable that as to macro cells such as eNB and NB, an MTCD and a normal UE may be compared with each other, so that the normal UE is prioritized. For example, this is a case in which an even is taken place within the coverage and the use of a large number of normal UEs is expected. In such a case, it is effective to solve a problem using the present embodiment as to a macro cell and the like.

The second embodiment is not limited to the application example described above and may be used in other application examples. Alternatively, the second embodiment can be used in combination with the first embodiment, the first modification of the first embodiment, the second modification of the first embodiment, the third modification of the first embodiment, the fourth modification of the first embodiment, the fifth modification of the first embodiment, or the sixth modification of the first embodiment, including other application examples.

First Modification of Second Embodiment

A problem to be solved in a first modification of the second embodiment is described below. In a case where the second embodiment described above is used, the following problem arises. For example, a case in which the second embodiment is used in a HeNB owned by an individual is considered here. There occurs a problem that an MTCD owned by the same individual as that of the HeNB is restricted from the operation on the HeNB.

A solution in the first modification of the second embodiment is described below. In the present modification, a portion different from the solution in the second embodiment is mainly described, and the portion that is not described here is as in the second embodiment. An MTCD that does not wish to be restricted is registered with the same CSG as that of a base station that does not wish to be restricted.

The MTCD restricts the selection of a HeNB unregistered with the same CSG. This restriction may be determined in a static manner or in advance. User equipments other than the MTCD unregistered with the same CSG as that of the HeNB, that is, a normal UE and the MTCD registered with the same CSG as that of the HeNB are not restricted from selecting the HeNB. The normal UE and the MTCD registered with the same CSG as that of the HeNB may operate normally.

Therefore, in the present modification, the information for a user equipment to judge whether or not a base station is a HeNB indicates the restriction of the selection of a base station unregistered with the same group as that of an MTCD, that is, the selection of a HeNB unregistered with the same CSG as that of the MTCD.

The following seven (1) to (7) are disclosed as specific examples of the restriction when an MTCD unregistered with the same CSG as that of a HeNB is restricted from selecting this HeNB.

(1) The MTCD does not access a HeNB unregistered with the same CSG. The following five (a1) to (a5) are disclosed as specific examples of access; (a1) transmission of uplink control data, (a2) transmission of uplink traffic data, which may be transmission of user data, (a3) RACH transmission, (a4) transmission of RRC connection request, and (a5) combination of (a1) to (a4) above.

(2) The MTCD does not camp on a HeNB unregistered with the same CSG for obtaining a normal service. In other words, the MTCD does not select a HeNB unregistered with the same CSG as a suitable cell.

(3) The MTCD does not camp on a HeNB unregistered with the same CSG for obtaining a limited service. In other words, the MTCD does not select a HeNB unregistered with the same CSG as an acceptable cell. The following four (b1) to (b4) are disclosed as specific examples of the limited service; (b1) transmission of emergency call, (b2) reception of ETWS, (b3) reception of CMAS, and (b4) combination of (b1) to (b3) above.

(4) The MTCD removes a HeNB unregistered with the same CSG from a candidate for cell selection and reselection. The MTCD does not select and reselect a HeNB unregistered with the same CSG.

(5) The MTCD removes a HeNB unregistered with the same CSG from a candidate for roaming destination. The MTCD does not select a HeNB unregistered with the same CSG as a roaming destination.

(6) The MTCD removes a HeNB unregistered with the same CSG from a candidate for handover target. The MTCD does not select a HeNB unregistered with the same CSG as a handover target.

(7) Combination of (1) to (6) above.

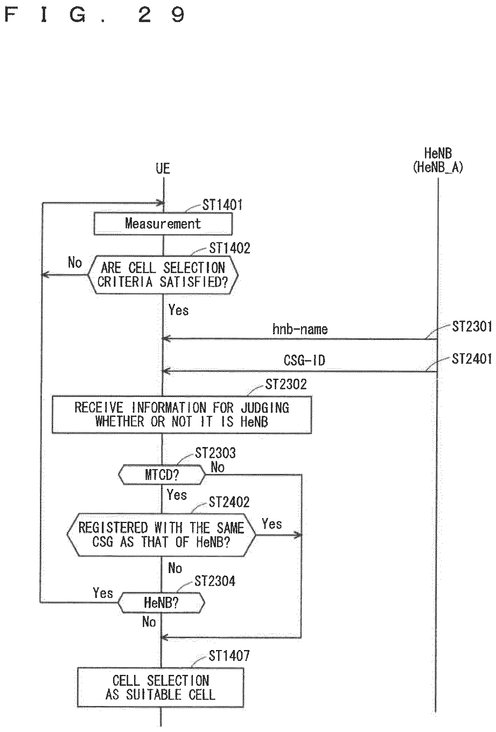

Then, a specific example of the sequence of a communication system in the first modification of the second embodiment is described with reference to FIG. 29. FIG. 29 is a diagram showing the sequence of the communication system in the first modification of the second embodiment. The sequence shown in FIG. 29 is similar to the sequences shown in FIG. 14 and FIG. 28, and thus, the same steps are denoted by the same step numbers and the common description is not given here.

This operation example discloses a case in which "hnb-name" being the existing broadcast information is used as a specific example of the information for a user equipment to judge whether or not a base station is a HeNB. Further disclosed is a case in which a cell that receives the information for a user equipment to judge whether or not a base station is a HeNB is a cell that satisfies the cell selection criteria.

A time of cell selection is disclosed as a specific example of the timing at which a user equipment judges whether or not a base station is a HeNB. As a specific example of the restriction when an MTCD is restricted from selecting a HeNB, a case in which the MTCD does not select a HeNB as a suitable cell is disclosed. A user equipment (UE) is located within the coverage of the HeNB_A and performs the cell selection operation. This user equipment is an MTCD and is unregistered with the same CSG as that of the HeNB_A.

As described above, the processes of Step ST1401, Step ST1402, and Step ST2301 are performed. In Step ST2401, the HeNB_A notifies user equipments being served thereby of "CSG-ID" as broadcast information (see Non-Patent Document 2). Then, the processes of Step ST2302 and Step ST2303 are performed as described above.

In Step ST2402, the UE judges whether or not the own user equipment is registered with the same CSG as that of the concerned cell. In this judgment, "CSG-ID" of the cell received in Step ST2401 is used. The UE moves to Step ST1407 in a case of judging that the own user equipment is registered with the same CSG in Step ST2402 or moves to Step ST2304 in a case of judging that the own user equipment is not registered with the same CSG in Step ST2402. Through the process of Step ST2402, it is possible to prevent such a situation that an MTCD that does not wish to be restricted by a HeNB, that is, an MTCD registered with the CSG of the HeNB is restricted from selecting this HeNB.

While Step ST2304 is provided after Step ST2402 in the present modification, Step ST2402 and Step ST2304 may be ordered arbitrarily.

Step ST2304 may be provided before Step ST2402.

The first modification of the second embodiment can achieve the following effects in addition to the effects of the second embodiment. It is possible to restrict an MTCD unregistered with the same CSG as that of the HeNB from selecting a HeNB by differentiating from a normal UE and an MTCD registered with the same CSG as that of the HeNB. This enables to prevent the accommodation number of the HeNB from reaching its capacity by MTCDs unregistered with the same CSG as that of the own base station and solve a problem that the normal UEs or the MTCDs registered with the same CSG as that of the own base station cannot be accommodated. Therefore, the HeNB can keep providing service to MTCDs registered with the same CSG as that of the HeNB and normal UEs.

The present modification is not limited to the application example described above and may be used in other application examples. Alternatively, the present modification can be used in combination with the first embodiment, the first modification of the first embodiment, the second modification of the first embodiment, the third modification of the first embodiment, the fourth modification of the first embodiment, the fifth modification of the first embodiment, the sixth modification of the first embodiment, or the second embodiment, including other application examples.

Second Modification of Second Embodiment

A problem to be solved in a second modification of the second embodiment is described below. The following problem arises in a case where the second embodiment is used. Considered here is the case in which a user equipment in a connected state is an MTCD. A HeNB is located in the neighborhood of the serving base station for the MTCD. For example, a case in which an MTCD removes the HeNB from a candidate for handover destination is considered.

In the handover method shown in FIG. 17 described above, the serving base station does not perform the handover determination process in accordance with the restriction regarding the selection of a HeNB by an MTCD. Accordingly, if the conditions other than the restriction regarding the selection of a HeNB by an MTCD are satisfied, a serving base station (hereinafter, referred to as "serving cell" in some cases) performs the handover determination process in which a HeNB is a target eNB. In that case, as shown in Step ST1711 of FIG. 17 described above, the serving base station notifies the MTCD of the mobility control information in which a HeNB is a target cell.

Although an MTCD is restricted to remove a HeNB from a candidate for handover destination, it is notified of the instruction against that restriction from a serving cell. The MTCD cannot judge to remove the HeNB from a candidate for handover destination or handle the HeNB as a target cell being a handover destination. As described above, a problem that a communication system becomes unstable occurs.

A solution in the second modification of the second embodiment is described below. In the present modification, a portion different from the solution in the second embodiment is mainly described, and the portion that is not described here is as in the second embodiment. The user equipment notifies the serving base station of the information for judging whether or not a cell is a HeNB being an object cell for measurement reports. The user equipment may notify the serving base station of the information as to whether or not an object cell for measurement reports is a HeNB.

The serving base station that has received the information for judging whether or not an object cell for measurement reports is a HeNB performs the handover determination process in consideration of the information for judging whether or not a cell is a HeNB being an object cell for measurement reports. The serving base station that has received the MTCD restriction information may determine a target cell in consideration of the information for judging whether or not a cell is a HeNB being an object cell for measurement reports.

Alternatively, the serving base station that has received the information for judging whether or not a cell is a HeNB may perform the handover determination process on an MTCD in consideration of the information for judging whether or not a cell is a HeNB being an object cell for measurement reports. The serving base station that has received the information for judging whether or not a cell is a HeNB may determine a target cell for an MTCD in consideration of the information for judging whether or not a cell is a HeNB being an object cell for measurement reports.

As a result, the serving base station performs the handover determination process on an MTCD that is restricted from selecting a HeNB, in consideration of the information for judging whether or not a cell is a HeNB. Then, the serving base station may perform the handover determination process on a normal UE without consideration of the information for judging whether or not a cell is a HeNB, assuming that it is not affected by the information for judging whether or not a cell is a HeNB. This enables to reduce the processing load of the serving base station for a normal UE. Specific examples of the method in which a serving base station judges whether or not a user equipment is an MTCD are similar to those of the second modification of the first embodiment, which are not described here.

The following two (1) and (2) are disclosed as specific examples of the cell from which a user equipment receives the information for judging whether or not a cell is a HeNB during the measurement; (1) cell to be measured, and (2) object cell for measurement reports. In the specific example (2), the number of cells that need to receive the information for judging whether or not a cell is a HeNB is smaller than that of the specific example (1). Therefore, the processing load of a user equipment can be reduced, and power consumption of a user equipment can be reduced.

The following three examples (1) to (3) are disclosed as specific examples of the user equipment that notifies the serving base station of the information for judging whether or not a cell is a HeNB being an object cell for measurement reports.

(1) All user equipments.

(2) Only MTCD. The normal UE may not be required to notify the information. As a result, only the MTCD that is restricted from selecting a HeNB notifies the information for judging whether a cell is a HeNB. Accordingly, it suffices that the serving base station judges that a user equipment that does not notify the information for judging whether or not a cell is a HeNB as a normal UE and performs the handover determination process, assuming that the selection of an object cell for measurement reports is not restricted. As a result, a normal UE needs not to receive the information for judging whether or not a cell is a HeNB and notify a serving base station of the information. Therefore, the processing load of a normal UE can be reduced, and power consumption of a user equipment can be reduced.

(3) A user equipment receives and notifies the information for judging whether or not a cell is a HeNB in a case where the serving base station requests the notification of the information for judging whether or not a cell is a HeNB being an object cell for measurement reports. As a result, the user equipment needs not to make unnecessary notification in a case where, for example, the serving cell does not perform the handover determination process in consideration of the information for judging whether or not a cell is a HeNB. Accordingly, it is possible to construct a flexible communication system. The serving base station may request the notification of the information for judging whether or not a cell is a HeNB over the measurement control information. This enables a user equipment to process the parameters regarding the measurement at the same time, whereby the process by the user equipment can be simplified.

Specific examples of the method of notifying a serving cell of the information for judging whether or not a cell is a HeNB are similar to the specific examples of the method in which a user equipment notifies a serving cell of the MTCD restriction information in the second modification of the first embodiment, which are not described here.

A specific example of the information for judging whether or not a cell is a HeNB and a specific example of the judgment based on the above-mentioned information are similar to those of the second embodiment, which are not described here.

Disclosed below is a specific example of the handover determination process by a serving base station that has received the information for judging whether or not a cell is a HeNB, in which the information for judging whether or not a cell is a HeNB is taken into consideration. In a case where a user equipment in a connected state is an MTCD and it is judged that a measurement object cell is a HeNB based on the information for judging whether or not a cell is a HeNB, the serving base station judges that handover in which the concerned cell is a target cell is not allowed. The serving base station may judge that the concerned cell can be selected as a target cell.

In a case where a user equipment in a connected state is an MTCD and it is judged that a measurement object cell is not a HeNB based on the information for judging whether or not a cell is a HeNB, the serving base station judges that handover in which the concerned cell is a target cell is allowed. The serving base station may judge that the concerned cell can be selected as a target cell. In a case where a user equipment in a connected state is a user equipment that is not an MTCD, the serving base station judges that handover in which the concerned cell is a target cell is allowed. The serving base station may judge that the concerned cell can be selected as a target cell.

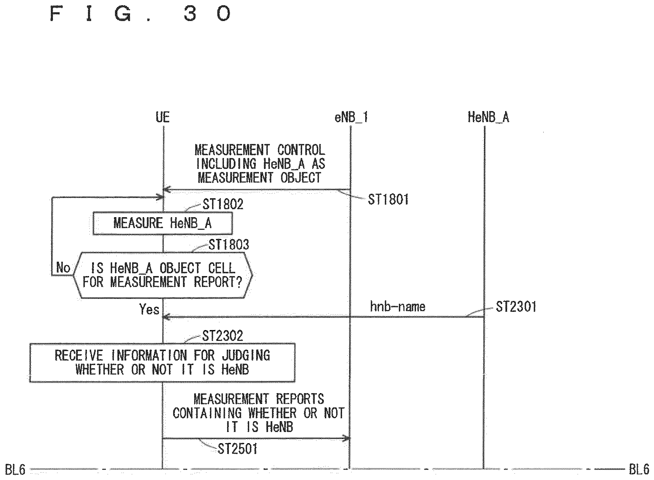

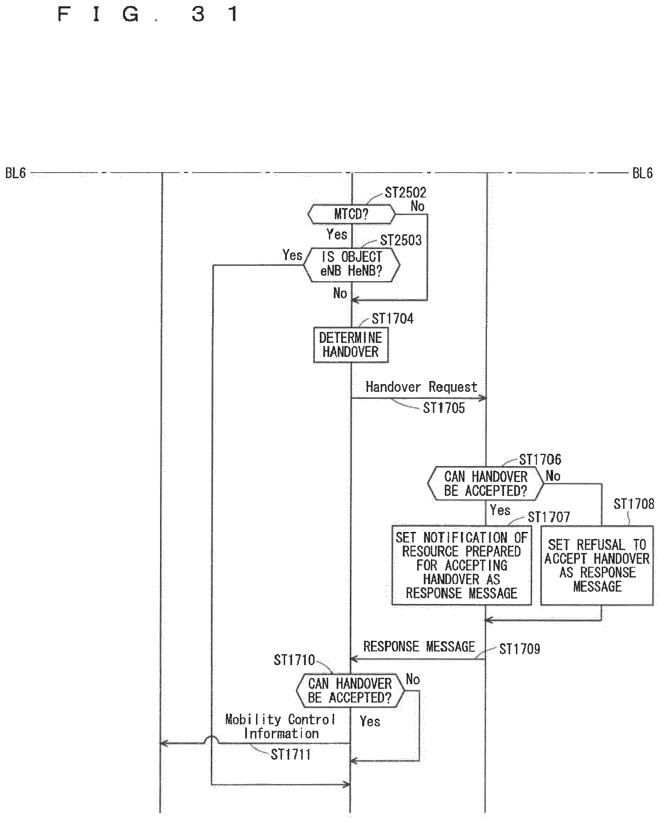

Next, a specific example of the sequence of a communication system in the second modification of the second embodiment is described with reference to FIG. 30 and FIG. 31. FIG. 30 and FIG. 31 are diagrams showing the sequence of the communication system in the second modification of the second embodiment. The sequence shown in FIG. 30 and FIG. 31 is similar to the sequences shown in FIG. 17, FIG. 18, FIG. 19, and FIG. 28, and thus, the same steps are denoted by the same step numbers and the common description is not given here.

In this operation example, an MTCD that takes the eNB_1 as a source eNB being a serving base station moves so as to approach the HeNB_A. The measurement control information for a user equipment contains the HeNB_A as a measurement object. This operation example discloses a case in which "hnb-name" being the existing broadcast information is used as a specific example of the information for a user equipment to judge whether or not a base station is a HeNB. Further, an object cell for measurement reports is disclosed as a specific example of the cell from which a user equipment receives the information to judge whether or not a base station is a HeNB in measurement.

Further, a case in which the information is reported as a part of the parameters in the measurement reports is disclosed as a specific example of the method in which a user equipment notifies a serving cell of the information for judging whether or not a base station is a HeNB. Further disclosed here is a case in which the serving base station that has received the information for judging whether or not a base station is a HeNB performs the handover determination process on an MTCD in consideration of the information for judging whether or not a base station is a HeNB being an object cell for measurement reports.

The processes of Step ST1801 to Step ST1803, Step ST2301, and Step ST2302 are performed as described above, and then, in Step ST2501, the user equipment notifies the eNB_1 of the measurement reports in accordance with the measurement control information received in Step ST1801. In this operation example, the user equipment notifies the measurement reports of the HeNB_A. The measurement reports contain the information for judging whether or not a cell is a HeNB of an object cell HeNB A. Alternatively, the measurement reports may contain the information as to whether or not the HeNB A is a HeNB.

In Step ST2502, the eNB_1 judges whether or not the user equipment that has notified the measurement reports in Step ST2501 is an MTCD. In this judgment, an MTCD indicator in the user equipment context (UE context) may be used. The eNB_1 moves to Step ST2503 in a case of judging that the user equipment is an MTCD in Step ST2502 or moves to Step ST1704 in a case of judging that the user equipment is not an MTCD in Step ST2502. Through the process of Step ST2502, the eNB_1 can perform the handover determination process on the MTCD by differentiating from a normal UE in accordance with the restriction shown in the MTCD restriction information.

In Step ST2503, the eNB_1 judges whether or not an object cell for measurement reports is a HeNB. A specific example of the judgment is disclosed below. The eNB_1 makes a judgment based on the information for judging whether or not a cell is a HeNB of an object cell for measurement reports or the information as to whether or not an object cell is a HeNB, which is contained in the measurement reports received in Step ST2501. In a case of judging that an object cell is not a HeNB in Step ST2503, the eNB_1 moves to Step ST1704.

In a case of judging that an object cell is a HeNB in Step ST2503, the eNB_1 does not execute the processes of Step ST1704 and Step ST1705. Accordingly, the eNB_1 does not receive the response message to the handover request from the HeNB_A in Step ST1709. That is, the eNB_1 does not notify the user equipment that has notified the measurement reports in Step ST2501 of the mobility control information.

In this operation example, in Step ST2501, the eNB_1 receives "an object cell is a HeNB" as the information as to whether or not the HeNB_A being an object cell for measurement reports is a HeNB. Therefore, the eNB_1 judges that the concerned cell is a HeNB in Step ST2503 and does not execute the processes of Step ST1704, Step ST1705, and Step ST1711.

Through the process of Step ST2503 as described above, it is possible to prevent an MTCD from receiving, regardless of the restriction to remove a HeNB from a candidate for handover target, the notification of the mobility control information in which a HeNB is a target cell from the serving cell, where the reception of the notification is contrary to the above-mentioned restriction.

The second modification of the second embodiment can achieve the following effects. The serving base station can perform the handover determination process in accordance with the information for judging whether or not a candidate cell for handover target is a HeNB. Therefore, in a case where a candidate cell for handover destination is a HeNB, it is possible to prevent an MTCD from receiving, regardless of the restriction to remove a HeNB from a candidate for handover, the notification of the mobility control information in which a HeNB is a target cell from a serving cell, where the reception of the notification is contrary to the above-mentioned restriction. This enables to construct a communication system in which judgments are unified, whereby a stable communication system can be obtained.

The serving base station can use the information for judging whether or not an object cell for the received measurement reports is a HeNB for the following purpose. In a case of judging that the concerned cell is a HeNB from the information for judging whether or not an object cell is a HeNB, if the user equipment that has made measurement reports is an MTCD, the serving base station adjusts the measurement control information of the user equipment. The serving base station may adjust the measurement control information of the MTCD among user equipments being served thereby.

The serving base station may adjust the measurement control information of the MTCD in a connected state among user equipments being served thereby. As a specific example of the adjustment of the measurement control information, it is conceivable to remove the concerned cell from a measurement object. This results in a reduction of the measurement on a cell that cannot be selected as a target cell by an MTCD. Accordingly, power consumption of the MTCD can be reduced. Specific examples of the method of removing the cell from a measurement object are similar to those of the second modification of the first embodiment, which are not described here.

The present modification is not limited to the application example described above and may be used in other application examples. Alternatively, the present modification can be used in combination with the first embodiment, the first modification of the first embodiment, the second modification of the first embodiment, the third modification of the first embodiment, the fourth modification of the first embodiment, the fifth modification of the first embodiment, the sixth modification of the first embodiment, the second embodiment, or the first modification of the second embodiment, including other application examples.

Third Modification of Second Embodiment

A third modification of the second embodiment discloses another solution to the same problem as that of the second modification of the second embodiment. A solution in the third modification of the second embodiment is described below. In the present modification, a portion different from the solutions in the second embodiment and the second modification of the second embodiment is mainly described, and the portion that is not described here is as in the second embodiment and the second modification of the second embodiment.

A user equipment judges whether the own user equipment is restricted by the cell from the information as to whether or not a target cell is a HeNB being an object cell for measurement reports. The user equipment notifies the serving base station of the judgment results whether or not the own user equipment is restricted. The serving base station that has received the judgment results performs the handover determination process in consideration of the judgment results of the object cell in the measurement reports. The serving base station that has received the judgment results may determine a target cell in consideration of the judgment results of the object cell in the measurement reports.

Specific examples of the judgment results of the user equipment as to whether or not the own user equipment is restricted are similar to those of the judgment results in the third modification of the first embodiment, which are not described here.

In a case of judging that the own user equipment is restricted, in a case of judging that the own user equipment is not allowed handover, or in a case of judging that the own user equipment is not allowed to select a cell as a target cell, the user equipment may not report measurement. In that case, the user equipment may notify only the judgment results or may not notify the judgment results. This allows the effective use of radio resources.

Specific examples of the method of notifying a serving cell of the judgment results whether or not the user equipment is restricted include an example similar to the "specific example of the method of notifying a serving cell of the MTCD restriction information" in the second modification of the first embodiment.

Disclosed below is a specific example of the judgment as to whether or not the own user equipment is restricted in consideration of the information for judging whether or not a cell is a HeNB by the user equipment that has received the information for judging whether or not a cell is a HeNB.

In a case where a user equipment in a connected state is an MTCD and it is judged that a measurement object cell is a HeNB based on the information for judging whether or not a cell is a HeNB, the user equipment judges that the own user equipment "is restricted". Alternatively, the user equipment may judge that the own user equipment is not allowed handover in which the concerned cell is a target cell. Alternatively, the user equipment may judge that the own user equipment is not allowed to select the concerned cell as a target cell. Alternatively, the user equipment may judge that the own user equipment does not report measurement.

In a case where a user equipment in a connected state is an MTCD and it is judged that a measurement object cell is not a HeNB based on the information for judging whether or not a cell is a HeNB, the user equipment judges that the own user equipment "is not restricted". Alternatively, the user equipment may judge that the own user equipment is allowed handover in which the concerned cell is a target cell. Alternatively, the user equipment may judge that the own user equipment is allowed to select the concerned cell as a target cell. Alternatively, the user equipment may judge that the own user equipment reports measurement.

In a case where a user equipment in a connected state is a user equipment that is not an MTCD, the user equipment judges that the own user equipment "is not restricted". Alternatively, the user equipment may judge that the own user equipment is allowed handover in which the concerned cell is a target cell. Alternatively, the user equipment may judge that the own user equipment is allowed to select the concerned cell as a target cell. Alternatively, the user equipment needs not to make a judgment in consideration of the information for judging whether or not a cell is a HeNB.

Disclosed below is a specific example of the handover determination process, by a serving base station that has received the judgment results by a user equipment as to whether or not the own user equipment is restricted, in which the concerned information is taken into consideration. In a case where the judgment results show "restricted", "handover in which the concerned cell is a target cell is not allowed", or "the concerned cell cannot be selected as a target cell", the serving base station judges that handover in which an object cell is a target cell is not allowed.

The serving base station may judge that the concerned cell cannot be selected as a target cell. In a case where the judgment results show "not restricted", "handover in which the concerned cell is a target cell is not allowed", or "the concerned cell can be selected as a target cell", the serving base station judges that handover in which an object cell is a target cell is allowed. The serving base station may judge that the concerned cell can be selected as a target cell.

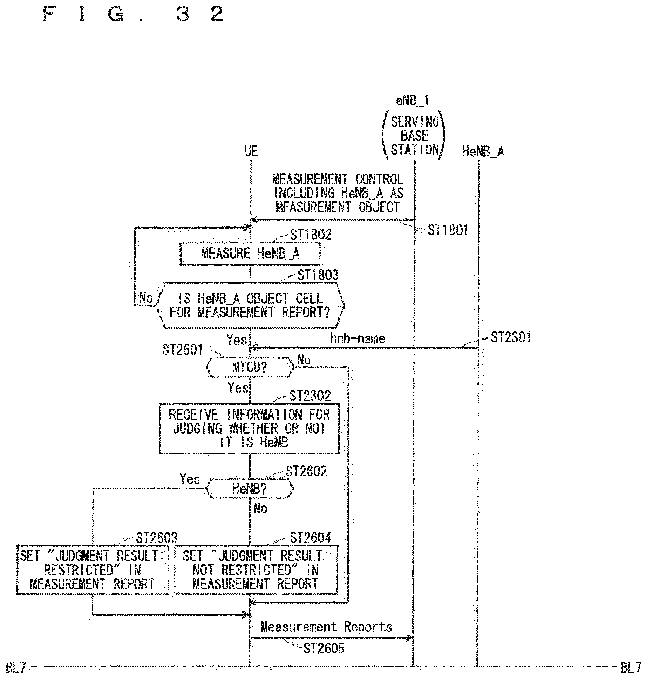

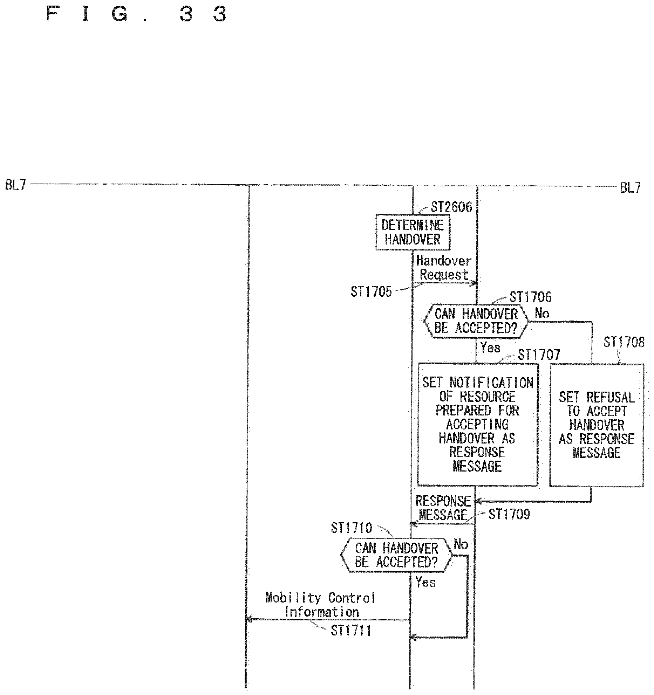

Next, a specific example of the sequence of a communication system in the third modification of the second embodiment is described with reference to FIG. 32 and FIG. 33. FIG. 32 and FIG. 33 are diagrams showing the sequence of the communication system in the third modification of the second embodiment. FIG. 32 and FIG. 33 are continuous from each other at a position of a boundary BL7. The sequence shown in FIG. 32 and FIG. 33 is similar to the sequences shown in FIG. 17 to FIG. 19 and FIG. 28, and thus, the same steps are denoted by the same step numbers and the common description is not given here.

In this operation example, the MTCD that takes the eNB_1 as a source eNB being a serving base station moves so as to approach the HeNB_A. The measurement control information for the user equipment contains the HeNB_A as a measurement object. This operation example discloses a case in which "hnb-name" being the existing broadcast information is used as a specific example of the information for a user equipment to judge whether or not the base station is a HeNB.

Further, this operation example discloses an object cell for measurement reports as a specific example of the cell from which the user equipment receives the information for judging whether or not the base station is a HeNB. Disclosed here is a case in which a user equipment judges that the own user equipment "is restricted" from the judgment results whether or not the own user equipment is restricted when judging that the object cell for measurement reports is a HeNB and judges that the own user equipment "is not restricted" from the judgment results whether or not the own user equipment is restricted when judging that the object cell for measurement reports is not a HeNB.

Further, a case of an MTCD is disclosed as a specific example of the user equipment that notifies a serving base station of the judgment results whether or not the own user equipment is restricted. A case in which the information is reported as a part of the parameters in the measurement reports is disclosed as a specific example of the method in which a user equipment notifies a serving cell of the judgment results whether or not the own user equipment is restricted by the object cell for measurement reports.

As described above, the processes of Step ST1801 to Step ST1803 and Step ST2301 are performed, and then, in Step ST2601, the user equipment (UE) judges whether or not the own user equipment is an MTCD. The MTCD indicator being the information indicating that a user equipment is an MTCD which is stored in a USIM or the like may be used in this judgment. The user equipment moves to Step ST2302 in a case of judging that the own user equipment is an MTCD in Step ST2601 or moves to Step ST2605 in a case of judging that the own user equipment is not an MTCD in Step ST2601. Through the process of Step ST2601, the normal UE needs not to receive the information for judging whether or not the own user equipment is a HeNB, judge whether or not the own user equipment is restricted, and notify the serving base station.

The process of Step ST2302 is performed as described above, and then, in Step ST2602, the user equipment judges whether or not the object cell for measurement reports is a HeNB. A specific example of the judgment is disclosed below. The user equipment makes a judgment based on the information for judging whether or not the object cell is a HeNB being an object cell for measurement reports received in Step ST2301. The user equipment moves to Step ST2603 in a case of judging that the object cell is a HeNB in Step ST2602 or moves to Step ST2604 in a case of judging that the object cell is not a HeNB in Step ST2602.

In this operation example, the user equipment receives "hnb-name" over the SIB9 as the broadcast information of the HeNB_A in Step ST2301. Therefore, the user equipment judges that the HeNB_A to be a HeNB in Step ST2602 and moves to Step ST2603. In Step ST2603, the user equipment sets, in the measurement reports, the judgment results that the own user equipment "is restricted" by the object cell for measurement reports.

In Step ST2604, the user equipment sets, in measurement reports, the judgment results that the own user equipment "is not restricted" by the object cell for measurement reports.

In Step ST2605, the user equipment notifies the eNB_1 of the measurement reports in accordance with the measurement control information received in Step ST1801. The measurement reports contain the judgment results whether or not the own user equipment is restricted by the object cell for measurement reports. In this operation example, the user equipment notifies the measurement reports of the HeNB_A. The measurement reports contain the judgment results that the own user equipment "is restricted" from the operation on the HeNB A.

In Step ST2606, the serving base station performs the handover determination process in consideration of the measurement reports received in Step ST2605. In this operation example, the eNB_1 receives, from the user equipment, the judgment results that the user equipment "is restricted" by the HeNB_A in Step ST2605. In a case where the eNB_1 does not determine handover in which the HeNB_A is a target cell based on the judgment results, the eNB_1 does not execute the process of Step ST1705. Therefore, the eNB_1 does not receive the response message to the handover request from the HeNB_A in Step ST1709, and thus, the eNB_1 does not notify the user equipment that has notified the measurement reports in Step ST2605 of the mobility control information of Step ST1711.

The third modification of the second embodiment described above can achieve the following effects in addition to the effects of the second modification of the second embodiment. The serving base station needs not to perform the handover determination process in consideration of the information for judging whether or not a cell is a HeNB being an object cell for measurement reports. This enables to reduce the processing load of the serving base station.

The present modification is not limited to the application example described above, which may be used in other application examples. The present modification can be used in combination with the first embodiment, the first modification of the first embodiment, the second modification of the first embodiment, the third modification of the first embodiment, the fourth modification of the first embodiment, the fifth modification of the first embodiment, the sixth modification of the first embodiment, the second embodiment, the first modification of the second embodiment, or the second modification of the second embodiment, including other applications.

The respective embodiments described above are applicable to each cell even in a case where a base station constitutes a plurality of cells.

While the LTE system and LTE-advanced system have been mainly described in the respective embodiments above, the communication system of the present invention is also applicable to other communication systems.

While the invention has been shown and described in detail, the foregoing description is in all aspects illustrative and not restrictive. It is therefore understood that numerous modifications and variations can be devised without departing from the scope of the invention.

According to a first aspect of the present invention there is disclosed: a communication system including a base station device connected to a core network and a plurality of communication terminal devices connected to the base station device so as to perform radio communication with the base station device, wherein the base station device is adapted to notify communication terminal devices located within a communicable range of restriction information indicating an operation restricted for a predetermined restricted terminal device among the plurality of communication terminal devices, and wherein the restricted terminal device among the communication terminal devices notified of the restriction information are adapted to operate in accordance with the restriction information.

According to a second aspect of the present invention there is disclosed: a communication system according the first aspect, wherein the base station device is adapted to notify, as the restriction information, unregistration restriction information for an unregistered communication terminal device unregistered with the same group as that of the own device, and wherein among the communication terminal devices notified of the unregistration restriction information, the unregistered communication terminal device is adapted to operate in accordance with the unregistration restriction information.

According to a third aspect of the present invention there is disclosed: a communication system including a base station device connected to a core network and a plurality of communication terminal devices connected to the base station device so as to perform radio communication with the base station device, wherein among the plurality of communication terminal devices, a predetermined restricted terminal device is adapted to judge whether or not to select the base station device as a connection destination based on base station information regarding a base station device that is restricted from being selected as a connection destination by the own device.

According to fourth aspect of the invention there is disclosed:
a communication system according to the third aspect, wherein the base station information indicates that the selection of a base station device unregistered with the same group as that of the restricted terminal device is restricted.

Description of Reference Symbols

| | |
|---|---|
| 1301 to 1304 | = MTCD, |
| 1305 | = NB/eNB, |
| 1306 | = SGSN/MME, |
| 1307 | = HLR/HSS, |
| 1308 | = MTC server, |
| 1309 | = MTC user, |
| 1310 | = API, |
| 1311 to 1314 | = Uu interface, |
| 1315 | = IuPS/S1 interface, |
| 1316 | = Gr/S6a interface, |
| 1317 | = communication operator domain. |

**Claims**

1. A communication system comprising:

   - a base station device; and
   - a plurality of communication terminal devices configured to perform radio communication with the base station device,

   wherein the plurality of communication terminal devices includes a restricted terminal device having a restricted operation,
wherein the base station device is configured to notify at least one communication terminal device located within a communicable range of the base station device of restricted operation information that is information on the restricted operation of the restricted terminal device, and
when the at least one communication terminal device notified of the restricted operation information includes the restricted terminal device, the restricted terminal device is configured to operate in accordance with the restricted operation information.

2. The communication system according to claim 1,
wherein the restricted operation information is information for restricting access to the base station device by the restricted terminal device.

3. The communication system according to claim 1,
wherein the restricted operation information is information for restricting transmission of a radio resource control (RRC) connection request from the restricted terminal device to the base station device.

4. The communication system according to claim 1,
wherein the base station device is configured to notify the at least one communication terminal device of the restricted operation information as system information.

5. The communication system according to claim 1,
wherein the base station device is configured to notify the at least one communication terminal device of information for changing the restricted operation information by a paging message.

6. A base station device configured to perform radio communication with a plurality of communication terminal devices,
wherein the plurality of communication terminal devices includes a restricted terminal device having a restricted operation,
wherein the base station device is configured to notify at least one communication terminal device located within a communicable range of the base station device of restricted operation information that is information on the restricted operation of the restricted terminal device.

7. A communication terminal device configured to perform radio communication with a base station device,
wherein the communication terminal device is configured to operate in accordance with a restricted operation information notified from the base station device, the restricted operation information being information on a restricted operation of the communication terminal device.

F I G . 1

F I G . 2

# F I G . 3

EP 3 780 744 A1

F I G . 4

101

401:PBCH

402:PCFICH

403:PDCCH

404:PDSCH

405:PMCH

406:PUCCH

407:PUSCH

408:PHICH

409:PRACH

102

UE

eNB

F I G . 5

(A)

BCH ---- PCH ---- DL-SCH ---- MCH --- DOWNLINK TRANSPORT CHANNELS

PBCH --------- PDSCH PDCCH PMCH --- DOWNLINK PHYSICAL CHANNELS

(B)

RACH --------------------------- UL-SCH --- UPLINK TRANSPORT CHANNELS

PRACH --------- PUCCH --------- PUSCH --- UPLINK PHYSICAL CHANNELS

F I G . 6

(A)

DOWNLINK LOGICAL CHANNELS

PCCH — BCCH — CCCH — DCCH — DTCH — MCCH — MTCH

PCH — BCH — DL-SCH — MCH

DOWNLINK TRANSPORT CHANNELS

(B)

UPLINK LOGICAL CHANNELS

CCCH — DCCH — DTCH

RACH — UL-SCH

UPLINK TRANSPORT CHANNELS

EP 3 780 744 A1

# F I G . 8

<u>71</u>

F I G . 9

72

CONTROL UNIT — 911

EPC COMMUNICATION UNIT — 901

COMMUNICATION WITH ANOTHER BASE STATION UNIT — 902

PROTOCOL PROCESSING UNIT — 903

TRANSMISSION DATA BUFFER UNIT — 904

ENCODING UNIT — 905

MODULATING UNIT — 906

FREQUENCY CONVERTING UNIT — 907

908

DEMODULATING UNIT — 909

DECODING UNIT — 910

F I G . 1 0

73a

F I G .  1 1

74

| 1104 | 1102 | 1103 | 1101 |
|---|---|---|---|
| CONTROL UNIT | BASE STATION COMMUNICATION UNIT | LOCATION PROCESSING UNIT | EPC COMMUNICATION UNIT |

F I G . 1 2

START CELL SEARCH

SYNCHRONIZE BY P-SS
AND S-SS AND DETECT PCI — ST1201

DETECT RS AND MEASURE RS
RECEIVED POWER — ST1202

SELECT BEST CELL — ST1203

RECEIVE PBCH AND
RECEIVE MIB — ST1204

RECEIVE DL-SCH AND
RECEIVE SIB1 — ST1205

ST1206

Yes ⟨ IS TAC OF SIB1 IDENTICAL
TO TAC OF UE? ⟩ No

TO IDLE
STATE OPERATION

TO IDLE STATE
OPERATION AFTER TAU

EP 3 780 744 A1

# F I G . 1 4

UE                    HeNB_A

ST1401

Measurement

ST1402

No — ARE CELL SELECTION CRITERIA SATISFIED?

Yes

MTCD RESTRICTION INFORMATION
(SELECTION AS SUITABLE CELL
CANNOT BE MADE BY MTCD)

ST1403

ST1404

RECEIVE MTCD RESTRICTION INFORMATION

ST1405

MTCD? — No

Yes

ST1406

No — CAN SELECTION AS SUITABLE CELL BE MADE BY MTCD?

Yes

ST1407

CELL SELECTION
AS SUITABLE CELL

F I G . 1 5

FIG. 16

UE · · · HeNB_A

ST1401
Measurement

ST1402
ARE CELL SELECTION CRITERIA SATISFIED? — No

Yes

MTCD RESTRICTION INFORMATION
(SELECTION AS SUITABLE CELL CANNOT BE MADE BY MTCD UNREGISTERED WITH THE SAME CSG AS THAT OF OWN BASE STATION) — ST1601

CSG-ID — ST1602

ST1404
RECEIVE MTCD RESTRICTION INFORMATION

ST1405
MTCD? — No

Yes

ST1603
REGISTERED WITH THE SAME CSG AS THAT OF HeNB? — Yes

No

ST1604
CAN SELECTION AS SUITABLE CELL BE MADE BY MTCD UNREGISTERED WITH THE SAME CSG AS THAT OF OWN BASE STATION? — No

Yes

ST1407
CELL SELECTION AS SUITABLE CELL

70

F I G . 1 7

F I G .  1 8

UE                          eNB_1                    HeNB_A

MEASUREMENT CONTROL
INCLUDING HeNB_A
AS MEASUREMENT OBJECT

ST1802                    ST1801

MEASURE HeNB_A

ST1803

No / IS HeNB_A OBJECT
CELL FOR MEASUREMENT        MTCD RESTRICTION INFORMATION
REPORT?                     (SELECTION AS SUITABLE CELL CANNOT
                            BE MADE BY MTCD)              ST1403
Yes

ST1404

RECEIVE MTCD
RESTRICTION INFORMATION

MEASUREMENT REPORTS
INCLUDING MTCD RESTRICTION
INFORMATION

ST1804

BL1 ————————————————————————————————— BL1

FIG. 19

EP 3 780 744 A1

F I G . 2 0

FIG. 21

F I G .  2 2

UE                                                    eNB_1                        HeNB_A
                    MEASUREMENT CONTROL                                              ST2001
                     INCLUDING HeNB_A AS                                       INSTALLATION
                     MEASUREMENT OBJECT
                              ST1802              ST1801                             ST2002
              MEASURE HeNB_A                               DETERMINE NOTIFICATION DESTINATION

                            ST1803
          IS HeNB_A OBJECT                            MTCD RESTRICTION
    No       CELL FOR                                    INFORMATION
      MEASUREMENT REPORT?                                          ST2003

         Yes      Measurement Reports
                          ST1703
BL3 ─────────────────────────────────────────────────────────────────────────── BL3

76

F I G . 2 3

F I G . 2 4

F I G . 2 5

BL4 ................................................. BL4

ST2004
MTCD? — No
Yes — ST2107
No — CAN OBJECT CELL BE SELECTED AS TARGET CELL?
Yes

ST1704
DETERMINE HANDOVER

Handover Request
ST1705

ST1706
CAN HANDOVER BE ACCEPTED? — No
ST1707 — Yes
SET NOTIFICATION OF RESOURCE PREPARED FOR ACCEPTING HANDOVER AS RESPONSE MESSAGE
ST1708
SET REFUSAL TO ACCEPT HANDOVER AS RESPONSE MESSAGE

RESPONSE MESSAGE
ST1709

ST1710
CAN HANDOVER BE ACCEPTED? — No
Mobility Control Information — Yes
ST1711

# F I G . 2 6

FIG. 27

FIG. 28

FIG. 29

EP 3 780 744 A1

F I G . 3 0

84

F I G . 3 1

F I G .  3 2

F I G .  3 3

Europäisches
Patentamt

European
Patent Office

Office européen
des brevets

## EUROPEAN SEARCH REPORT

Application Number

EP 20 18 9613

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIERRA WIRELESS: "23.888 MTC access control by RAN clean up", 3GPP DRAFT; S2-103759_S2_80_6.28_CLEAN_UP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Brunstad; 20100903, 24 August 2010 (2010-08-24), XP050458759, | 1-4,6,7 | INV. H04W48/02 ADD. H04W48/08 H04W84/04 |
| Y | *Chapter "6.28.2 General"* ----- | 5 | |
| X | SIERRA WIRELESS: "Broadcasting MTC Group Access Control for Overload Control", 3GPP DRAFT; S2-102320_BROADCASTINGMTCACCESSCONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Kyoto; 20100510, 4 May 2010 (2010-05-04), XP050434509, *Chapter "Discussion"* *Chapter "Broadcasting and Acquisition"* ----- | 1,2,4,6,7 | |
| X | US 2008/200146 A1 (WANG PETER S [US] ET AL) 21 August 2008 (2008-08-21) * paragraph [0008] * * paragraph [0023] - paragraph [0024] * * figure 3 * ----- -/-- | 1,2,4,6,7 | TECHNICAL FIELDS SEARCHED (IPC) H04W |

The present search report has been drawn up for all claims

| Place of search | Date of completion of the search | Examiner |
|---|---|---|
| Munich | 8 December 2020 | Schorgg, Alfred |

EPO FORM 1503 03.82 (P04C01)

page 1 of 2

Europäisches
Patentamt

European
Patent Office

Office européen
des brevets

**EUROPEAN SEARCH REPORT**

Application Number

EP 20 18 9613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | "3rd Generation Partnership Project; Technical Specification Group Radio Access Network; Evolved Universal Terrestrial Radio Access (E-UTRA); Radio Resource Control (RRC); Protocol specification (Release 9)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.4.0, 28 September 2010 (2010-09-28) , pages 1-252, XP050442306, [retrieved on 2010-09-28] | 5 | |
| A | *Chapter 5.2.1.3 System information validity and notification of changes* ----- | 3 | |
| A | US 6 438 375 B1 (MUELLER WALTER G A [SE]) 20 August 2002 (2002-08-20) * column 9, line 49 - column 10, line 9 * * figures 9,10 * ----- | 5 | |

TECHNICAL FIELDS
SEARCHED (IPC)

The present search report has been drawn up for all claims

| Place of search | Date of completion of the search | Examiner |
|---|---|---|
| Munich | 8 December 2020 | Schorgg, Alfred |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 18 9613

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2020

| Patent document cited in search report | | | Publication date | Patent family member(s) | | | Publication date |
|---|---|---|---|---|---|---|---|
| US 2008200146 | A1 | | 21-08-2008 | AR | 065087 | A1 | 13-05-2009 |
| | | | | TW | 200833134 | A | 01-08-2008 |
| | | | | US | 2008200146 | A1 | 21-08-2008 |
| | | | | WO | 2008094670 | A2 | 07-08-2008 |
| US 6438375 | B1 | | 20-08-2002 | AR | 022834 | A1 | 04-09-2002 |
| | | | | AT | 392103 | T | 15-04-2008 |
| | | | | AU | 3686600 | A | 21-09-2000 |
| | | | | CA | 2365616 | A1 | 08-09-2000 |
| | | | | CN | 1349725 | A | 15-05-2002 |
| | | | | DE | 60038546 | T2 | 16-07-2009 |
| | | | | EP | 1157579 | A1 | 28-11-2001 |
| | | | | JP | 4443056 | B2 | 31-03-2010 |
| | | | | JP | 2002538744 | A | 12-11-2002 |
| | | | | KR | 20010108309 | A | 07-12-2001 |
| | | | | TW | 493356 | B | 01-07-2002 |
| | | | | US | 6438375 | B1 | 20-08-2002 |
| | | | | WO | 0052948 | A1 | 08-09-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3GPP TS 36.300 V10.1.0
- *3GPP TS 36.331 V9.4.0*
- 3GPP TS 36.304 V9.4.0 Chapter 3.1
- *3GPP S1-083461*
- *3GPP R2-082899*
- *3GPP TR 36.814 V9.0.0*
- *3GPP TR 36.912 V9.3.0*
- *3GPP TS 22.368 V10.2.0*
- *3GPP S2-103186*